# EUROPEAN PATENT APPLICATION

(11) **EP 4 538 942 A1**
(43) Date of publication of application: **16.04.2025**
(21) Application number: 24205362.7
(22) Date of filing: 08.10.2024
(51) Int. Cl.: G06Q 10/06, G05B 15/02, G06Q 50/06

(54) **BUILDING ENERGY PLATFORM**

(30) Priority: 09.10.2023 US 202363588965 P; 04.10.2024 US 202418907305
(71) Applicant: Tyco Fire & Security GmbH, 8212 Neuhausen am Rheinfall (CH)
(72) Inventor: Barve, Harshvardhan A., Lenexa (US); Bortone, Alfonso, Milwaukee (US); Kirschbaum, Nicolas, Milwaukee (US)
(74) Representative: Meissner Bolte Nürnberg

(57) **Abstract**

A building management system (BMS) configured to receive one or more characteristics for one or more buildings of a plurality of buildings, the one or more characteristics including a location for the one or more buildings; retrieve climate information for the one or more buildings from one or more external computing systems based on the location of the one or more buildings; retrieve energy information for the one or more buildings based on at least one of the location of the one or more buildings or the climate information of the one or more buildings; generate a user interface including at least one graphic having a plurality of building indicators, each building indicator corresponding to a building of the plurality of buildings, the plurality of building indicators being visually coded based on at least one of the climate information or the energy information; and cause a display device to display the user interface.

## Description

### CROSS-REFERENCE TO RELATED PATENT APPLICATIONS

This application claims priority to U.S. Patent Application 18/907,305, filed October 4, 2024, and U.S. Provisional Patent Application No. 63/588,965, filed October 9, 2023, the entire disclosures of each of which are incorporated by reference herein.

### BACKGROUND

The present disclosure relates to a building management system (BMS) having a building energy platform.

In recent years, increased government regulations and costs have encouraged businesses, companies, and other enterprises to place a larger focus on reducing emissions and energy costs. In many instances, various entities have taken a variety of measures to decrease the energy usage and/or emissions generated by their various buildings and/or facilities. While across-the-board improvements to buildings and facilities across an entire business, company, or other enterprise can be useful in reducing energy usage and emissions, the financial costs associated with making across-the-board improvements can be prohibitive. Accordingly, these entities may instead select to implement improvements in only a subset of their buildings and facilities based on a variety of building- or facility-specific factors.

### SUMMARY

At least one embodiment is directed to a building management system (BMS). The BMS includes one or more memory devices storing instructions thereon that, when executed by one or more processors, cause the one or more processors to receive one or more characteristics for the one or more buildings of a plurality of buildings, the one or more characteristics including a location for the one or more buildings. The instructions further cause the one or more processors to retrieve climate information for the one or more buildings from one or more external computing systems based on the location of the one or more buildings. The instructions further cause the one or more processors to identify energy information for the one or more buildings based on at least one of the location of the one or more buildings or the climate information of the one or more buildings. The instructions further cause the one or more processors to generate a user interface including at least one graphic having a plurality of building indicators, each building indicator corresponding to a building of the plurality of buildings, the plurality of building indicators being visually coded based on at least one of the climate information or the energy information. The instructions further cause the one or more processors to cause a display device to display the user interface.

The one or more characteristics may include the location, a building size, and a building usage type for the one or more buildings. The climate information may include a climate zone code of the one or more buildings and the plurality of building indicators are visually coded based on the climate zone code of the one or more buildings. The energy information for the one or more buildings may include at least one of average energy use information, average emissions information, or average energy cost information associated with other buildings having one or more of matching climate zone codes, similar building sizes, or matching building use types to the one or more buildings. The instructions may further cause the one or more processors to receive a selection of at least one building of the plurality of buildings via the user interface. The instructions may further cause the one or more processors to receive a selection of one or more project options via the user interface, the one or more project options relating to a sustainability project associated with the at least one building. The instructions may further cause the one or more processors to determine one or more project estimates for the sustainability project based on the at least one building, the one or more project options, and at least one of the climate information or the energy information for the plurality of buildings. The user interface may further include the one or more project estimates. The one or more project estimates may be based on the at least one building and historical project data associated with similar sustainability projects performed at other buildings having one or more of matching climate zone codes, similar building sizes, or matching building use types to the at least one building.

The user interface may be a first user interface. The instructions may further cause the one or more processors to ingest utility information for the at least one building. The instructions may further cause the one or more processors to determine one or more updated project estimates based on the utility information for the at least one building. The instructions may further cause the one or more processors to generate a second user interface including the one or more updated project estimates. The instructions may further cause the one or more processors to cause the display device to display the second user interface. The one or more updated project estimates may be based on the at least one building and historical project data associated with similar sustainability projects performed at other buildings having similar utility information and one or more of similar building sizes or matching building use types to the at least one building.

The instructions may further cause the one or more processors to ingest building-specific information for the at least one building, the building-specific information including a list of modifications to be made within the at least one building. The instructions may further cause the one or more processors to determine one or more validated project estimates based on the building-specific information for the at least one building. The instructions may further cause the one or more processors to generate a third user interface including the one or more validated project estimates. The instructions may further cause the one or more processors to cause the display device to display the third user interface. The one or more validated project estimates may be based on the at least one building and historical project data associated with similar sustainability projects performed at other buildings having similar building-specific information and one or more of similar building sizes or matching building use types to the at least one building. The one or more validated project estimates may include at least one savings estimate determined using at least one energy model. The at least one graphic may include the plurality of building indicators are arranged on a map showing the location for each building.

Another embodiment is directed to a method. The method includes receiving, by one or more processors, a location for one or more buildings of a plurality of buildings. The method further includes retrieving, by the one or more processors, climate information for the one or more buildings from one or more external computing systems based on the location of the one or more buildings. The method further includes identifying, by the one or more processors, energy information for the one or more buildings based on at least one of the location of the one or more buildings or the climate information of the one or more buildings. The method further includes receiving, by the one or more processors, a selection of one or more project options relating to a sustainability project associated with the plurality of buildings. The method further includes determining, by the one or more processors, one or more project estimates for the sustainability project based on the one or more project options and at least one of the climate information or the energy information for the plurality of buildings. The method further includes generating, by the one or more processors, a user interface including the one or more project estimates. The method further includes causing, by the one or more processors, a display device to display the user interface.

The energy information for the one or more buildings may include at least one of average energy use information, average emissions information, or average energy cost information associated with other buildings having one or more of similar climate information, similar building sizes, or similar building use types to the one or more buildings. The one or more project estimates may be based on historical project data associated with similar sustainability projects performed at other buildings having one or more of similar climate information, similar building sizes, or similar building use types to the plurality of buildings.

The user interface may be a first user interface. The method may further include ingesting, by the one or more processors, utility information for the plurality of buildings. The method may further include determining, by the one or more processors, one or more updated project estimates based on the utility information for the plurality of buildings. The method may further include generating, by the one or more processors, a second user interface including the one or more updated project estimates. The method may further include causing, by the one or more processors, the display device to display the second user interface. The one or more updated project estimates may be based on historical project data associated with similar sustainability projects performed at other buildings having similar utility information and one or more of similar building sizes or similar building use types to the plurality of buildings.

The method may further include ingesting, by the one or more processors, building-specific information for the plurality of buildings, the building-specific information including a list of modifications to be made within the plurality of buildings. The method may further include determining, by the one or more processors, one or more validated project estimates based on the building-specific information for the plurality of buildings. The method may further include generating, by the one or more processors, a third user interface including the one or more validated project estimates. The method may further include causing, by the one or more processors, the display device to display the third user interface. Identifying the energy information may include one of (i) generating, by the one or more processors, the energy information based on the at least one of the location of the one or more buildings or the climate information of the one or more buildings or (ii) retrieving, by the one or more processors, the energy information from the one or more external computing systems or one or more second external computing systems based on the at least one of the location of the one or more buildings or the climate information of the one or more buildings.

Yet another embodiment is directed to one or more memory devices. The one or more memory devices having instructions thereon that, when executed by one or more processors, cause the one or more processors to receive a location for one or more buildings of a plurality of buildings. The instructions further cause the one or more processors to retrieve climate information for the one or more buildings from one or more external computing systems based on the location of the one or more buildings. The instructions further cause the one or more processors to identify energy information for the one or more buildings based on at least one of the location of the one or more buildings or the climate information of the one or more buildings. The instructions further cause the one or more processors to determine one or more project estimates for a sustainability project associated with the plurality of buildings based on at least one of the climate information or the energy information for the plurality of buildings. The instructions further cause the one or more processors to generate a user interface including the one or more project estimates. The instructions further cause the one or more processors to cause a display device to display the user interface.

The user interface may further include at least one graphic having a plurality of building indicators arranged on a map, each building indicator corresponding to a building of the plurality of buildings, the plurality of building indicators being visually coded based on at least one of the climate information or the energy information.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1 is a drawing of a building equipped with a heating, ventilation, and/or air conditioning (HVAC) system, according to an exemplary embodiment.
FIG. 2 is a block diagram of a building automation system (BAS) that may be used to monitor and/or control the building of FIG. 1, according to an exemplary embodiment.
FIG. 3 is a block diagram of a system for sustainability optimization for planning a building, according to an exemplary embodiment.
FIG. 4 is a block diagram of an energy bill retrieval system of the sustainability optimization system of FIG. 3, the energy bill retrieval system retrieving utility bills for the building, according to an exemplary embodiment.
FIG. 5 is a block diagram of a building audit system of the system of FIG. 3, the facility audit system configured to collect building data of the building via an audit, according to an exemplary embodiment.
FIG. 6 is a block diagram of a demand side data system of the system of FIG. 3, the demand side data system configured to collect building system and operational data from a building and calculate energy metrics, carbon metrics, operational metrics, and facility improvement measures (FIMs) for the building, according to an exemplary embodiment.
FIG. 7 is a block diagram of an on-site supply data system of the system of FIG. 3, the on-site supply system configured to collect data from an on-site energy supply system for the building, according to an exemplary embodiment.
FIG. 8 is a block diagram of a sustainability advisor and an optimization system of the system of FIG. 3, the sustainability advisor configured to provide sustainability data to a user and receive input from the user and the optimization system configured to run sustainability optimizations for the building, according to an exemplary embodiment.
FIG. 9 is a block diagram of a planning tool which can be used to determine the benefits of investing in a battery asset and calculate various financial metrics associated with the investment, according to an exemplary embodiment.
FIG. 10 is a block diagram of a system for energy conservation, according to an exemplary embodiment.
FIG. 11 is a user interface displaying a sites register page, according to an exemplary embodiment.
FIG. 12 is a site mapping window of the user interface of FIG. 11, according to an exemplary embodiment.
FIG. 13 is the site mapping window of the user interface of FIG. 11, shown with a pop-up window including various building information, according to an exemplary embodiment.
FIG. 14 is a user interface displaying an efficiency impact page, according to an exemplary embodiment.
FIG. 15 is an electric fraction and cost rate chart of the user interface of FIG. 14, shown with a pop-up window including various climate and energy cost information, according to an exemplary embodiment.
FIG. 16 is scatterplot of the user interface of FIG. 14, shown with another pop-up window including various climate and energy cost information, according to an exemplary embodiment.
FIG. 17 is a user interface displaying a solar potential impact page, according to an exemplary embodiment.
FIG. 18 is the site mapping window of the user interface of FIG. 17, shown with a pop-up window including various solar potential information, according to an exemplary embodiment.
FIG. 19 is a user interface displaying an energy register page, according to an exemplary embodiment.
FIG. 20 is a user interface displaying an emissions register page, according to an exemplary embodiment.
FIG. 21 is a user interface displaying a water register page, according to an exemplary embodiment.
FIG. 22 is a user interface displaying a single building assessment page, according to an exemplary embodiment.
FIG. 23 is a user interface displaying a potential project outlook page, according to an exemplary embodiment.
FIG. 24 is a user interface displaying a project information page, according to an exemplary embodiment.
FIG. 25 is a user interface displaying a measures register page, according to an exemplary embodiment.
FIG. 26 is a user interface displaying a marginal abatement cost curve analysis page, according to an exemplary embodiment.
FIGS. 27A is a first portion of an indicative project overview user interface, according to an exemplary embodiment.
FIGS. 27B is a second portion of the indicative project overview user interface of FIG. 27A, according to an exemplary embodiment.
FIGS. 27C is a third portion of the indicative project overview user interface of FIG. 27A, according to an exemplary embodiment.
FIGS. 27D is a fourth portion of the indicative project overview user interface of FIG. 27A, according to an exemplary embodiment.
FIGS. 28A is a first portion of a utility analysis user interface, according to an exemplary embodiment.
FIGS. 28B is a second portion of the utility analysis user interface of FIG. 28A, according to an exemplary embodiment.
FIGS. 28C is a third portion of the utility analysis user interface of FIG. 28A, according to an exemplary embodiment.
FIGS. 28D is a fourth portion of the utility analysis user interface of FIG. 28A, according to an exemplary embodiment.
FIGS. 29A is a first portion of a calibrated project overview user interface, according to an exemplary embodiment.
FIGS. 29B is a second portion of the calibrated project overview user interface of FIG. 29A, according to an exemplary embodiment.
FIGS. 29C is a third portion of the calibrated project overview user interface of FIG. 29A, according to an exemplary embodiment.
FIGS. 29D is a fourth portion of the calibrated project overview user interface of FIG. 29A, according to an exemplary embodiment.
FIGS. 30A is a first portion of a validated project overview user interface, according to an exemplary embodiment.
FIGS. 30B is a second portion of the validated project overview user interface of FIG. 30A, according to an exemplary embodiment.

### DETAILED DESCRIPTION

Referring generally to the FIGURES, systems and methods are provided for sustainability assessment and/or improvement for one or more buildings, according to various exemplary embodiments. A sustainability optimization system can be configured to collect various pieces of information regarding a building, e.g., energy supply data, on-site energy generation systems, demand data, indications of building equipment, etc. The sustainability optimization system can be configured to run an optimization on the collected data to identify improvements for the building that result in sustainable operation of the building. For example, the optimization can optimize for various metrics of the building, e.g., carbon footprint, energy usage, financial cost, etc. The result of the optimization could be to retrofit certain pieces of building equipment, install on-site solar panels, purchase renewable energy credits (RECs), generate a building control plan, etc. In some implementations, the system can additionally or alternatively provide an assessment of historical, present, and/or future sustainability performance of the building, spaces of the building, occupants of the building, equipment of the building, etc., either with or without recommendations for improving the performance.

The optimization can, in some embodiments, result in building planning that causes the building to meet a sustainability goal in a particular timeline. For example, the user may have a goal for their building to reach net-zero carbon emissions (or a predefined and/or user-defined level of carbon emissions) over a certain timeframe (e.g., the next thirty years). The optimization can run periodically, e.g., every year, to optimize over an optimization period (e.g., the next five years) and to meet the goal over the total planning period (e.g., the next thirty years). In some embodiments, the optimization can additionally or alternatively be run on request/demand of a user, upon the occurrence of certain events/targets, etc.

### Building Management System and HVAC System

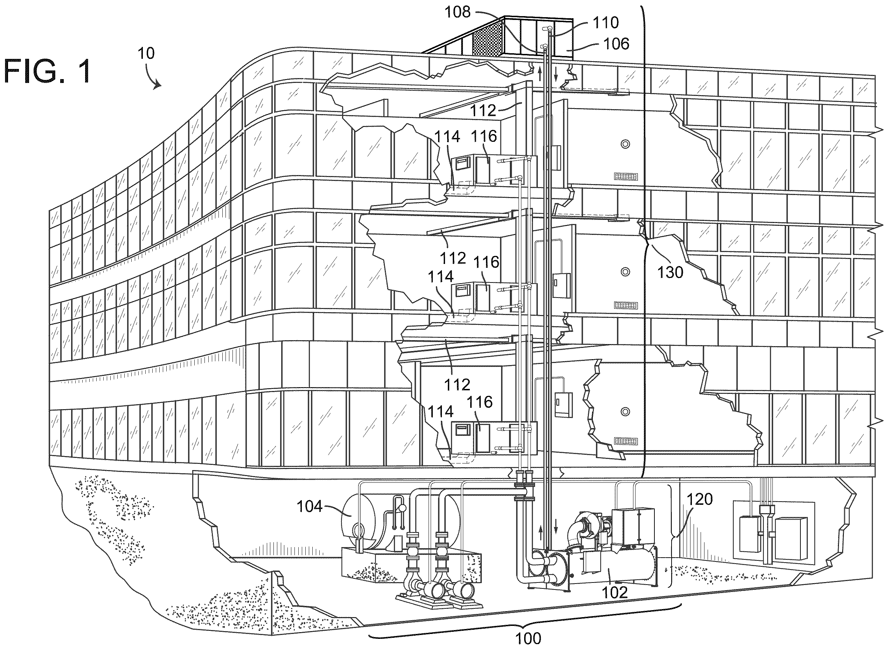

Referring now to FIG. 1, an exemplary building management system (BMS) and HVAC system in which the systems and methods of the present invention can be implemented are shown, according to an exemplary embodiment. Referring particularly to FIG. 1, a perspective view of a building 10 is shown. Building 10 is served by a BMS. A BMS is, in general, a system of devices configured to control, monitor, and manage equipment in or around a building or building area. A BMS can include, for example, a HVAC system, a security system, a lighting system, a fire alerting system, and/or any other system that is capable of managing building functions or devices, or any combination thereof.

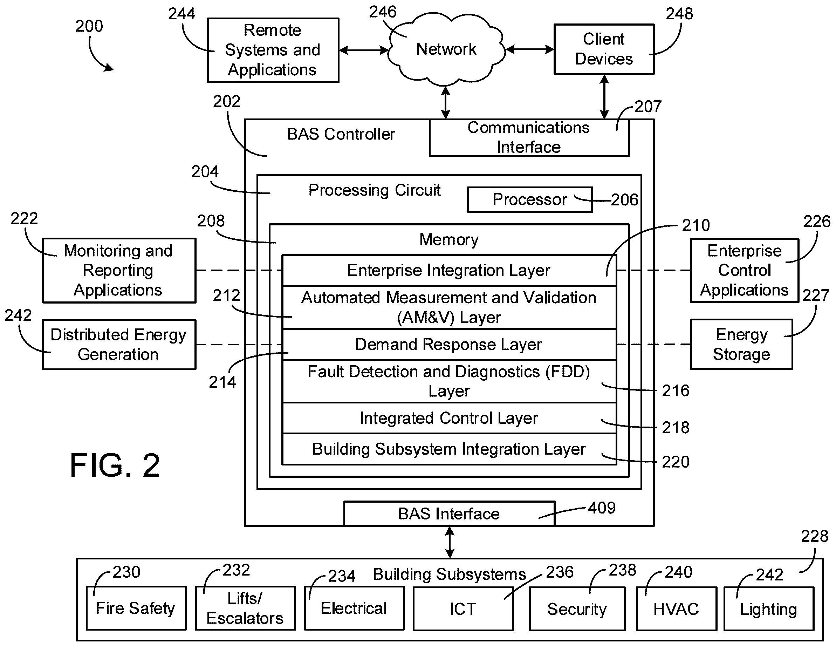

The BMS that serves building 10 includes an HVAC system 100. HVAC system 100 can include HVAC devices (e.g., heaters, chillers, air handling units, pumps, fans, thermal energy storage, etc.) configured to provide heating, cooling, ventilation, or other services for building 10. For example, HVAC system 100 is shown to include a waterside system 120 and an airside system 130. Waterside system 120 can provide a heated or chilled fluid to an air handling unit of airside system 130. Airside system 130 can use the heated or chilled fluid to heat or cool an airflow provided to building 10. An exemplary waterside system and airside system which can be used in HVAC system 100 are described in greater detail with reference to FIGS. 2-3.

HVAC system 100 is shown to include a chiller 102, a boiler 104, and a rooftop air handling unit (AHU) 106. Waterside system 120 can use boiler 104 and chiller 102 to heat or cool a working fluid (e.g., water, glycol, etc.) and can circulate the working fluid to AHU 106. In various embodiments, the HVAC devices of waterside system 120 can be located in or around building 10 (as shown in FIG. 1) or at an offsite location such as a central plant (e.g., a chiller plant, a steam plant, a heat plant, etc.). The working fluid can be heated in boiler 104 or cooled in chiller 102, depending on whether heating or cooling is required in building 10. Boiler 104 can add heat to the circulated fluid, for example, by burning a combustible material (e.g., natural gas) or using an electric heating element. Chiller 102 can place the circulated fluid in a heat exchange relationship with another fluid (e.g., a refrigerant) in a heat exchanger (e.g., an evaporator) to absorb heat from the circulated fluid. The working fluid from chiller 102 and/or boiler 104 can be transported to AHU 106 via piping 108.

AHU 106 can place the working fluid in a heat exchange relationship with an airflow passing through AHU 106 (e.g., via one or more stages of cooling coils and/or heating coils). The airflow can be, for example, outside air, return air from within building 10, or a combination of both. AHU 106 can transfer heat between the airflow and the working fluid to provide heating or cooling for the airflow. For example, AHU 106 can include one or more fans or blowers configured to pass the airflow over or through a heat exchanger containing the working fluid. The working fluid can then return to chiller 102 or boiler 104 via piping 110.

Airside system 130 can deliver the airflow supplied by AHU 106 (i.e., the supply airflow) to building 10 via air supply ducts 112 and can provide return air from building 10 to AHU 106 via air return ducts 114. In some embodiments, airside system 130 includes multiple variable air volume (VAV) units 116. For example, airside system 130 is shown to include a separate VAV unit 116 on each floor or zone of building 10. VAV units 116 can include dampers or other flow control elements that can be operated to control an amount of the supply airflow provided to individual zones of building 10. In other embodiments, airside system 130 delivers the supply airflow into one or more zones of building 10 (e.g., via supply ducts 112) without using intermediate VAV units 116 or other flow control elements. AHU 106 can include various sensors (e.g., temperature sensors, pressure sensors, etc.) configured to measure attributes of the supply airflow. AHU 106 can receive input from sensors located within AHU 106 and/or within the building zone and can adjust the flow rate, temperature, or other attributes of the supply airflow through AHU 106 to achieve setpoint conditions for the building zone.

Referring now to FIG. 2, a block diagram of a building automation system (BAS) 200 is shown, according to an exemplary embodiment. BAS 200 can be implemented in building 10 to automatically monitor and control various building functions. BAS 200 is shown to include BAS controller 202 and building subsystems 228. Building subsystems 228 are shown to include a building electrical subsystem 234, an information communication technology (ICT) subsystem 236, a security subsystem 238, a HVAC subsystem 240, a lighting subsystem 242, a lift/escalators subsystem 232, and a fire safety subsystem 230. In various embodiments, building subsystems 228 can include fewer, additional, or alternative subsystems. For example, building subsystems 228 can also or alternatively include a refrigeration subsystem, an advertising or signage subsystem, a cooking subsystem, a vending subsystem, a printer or copy service subsystem, or any other type of building subsystem that uses controllable equipment and/or sensors to monitor or control building 10. In some embodiments, building subsystems 228 include a waterside system and/or an airside system. A waterside system and an airside system are described with further reference to U.S. Patent Application No. 15/631,830 filed June 23, 2017, the entirety of which is incorporated by reference herein.

Each of building subsystems 228 can include any number of devices, controllers, and connections for completing its individual functions and control activities. HVAC subsystem 240 can include many of the same components as HVAC system 100, as described with reference to FIG. 1. For example, HVAC subsystem 240 can include a chiller, a boiler, any number of air handling units, economizers, field controllers, supervisory controllers, actuators, temperature sensors, and other devices for controlling the temperature, humidity, airflow, or other variable conditions within building 10. Lighting subsystem 242 can include any number of light fixtures, ballasts, lighting sensors, dimmers, or other devices configured to controllably adjust the amount of light provided to a building space. Security subsystem 238 can include occupancy sensors, video surveillance cameras, digital video recorders, video processing servers, intrusion detection devices, access control devices and servers, or other security-related devices.

Still referring to FIG. 2, BAS controller 202 is shown to include a communications interface 207 and a BAS interface 209. Interface 207 can facilitate communications between BAS controller 202 and external applications (e.g., monitoring and reporting applications 222, enterprise control applications 226, remote systems and applications 244, applications residing on client devices 248, etc.) for allowing user control, monitoring, and adjustment to BAS controller 202 and/or subsystems 228. Interface 207 can also facilitate communications between BAS controller 202 and client devices 248. BAS interface 209 can facilitate communications between BAS controller 202 and building subsystems 228 (e.g., HVAC, lighting security, lifts, power distribution, business, etc.).

Interfaces 207, 209 can be or include wired or wireless communications interfaces (e.g., jacks, antennas, transmitters, receivers, transceivers, wire terminals, etc.) for conducting data communications with building subsystems 228 or other external systems or devices. In various embodiments, communications via interfaces 207, 209 can be direct (e.g., local wired or wireless communications) or via a communications network 246 (e.g., a WAN, the Internet, a cellular network, etc.). For example, interfaces 207, 209 can include an Ethernet card and port for sending and receiving data via an Ethernet-based communications link or network. In another example, interfaces 207, 209 can include a Wi-Fi transceiver for communicating via a wireless communications network. In another example, one or both of interfaces 207, 209 can include cellular or mobile phone communications transceivers. In one embodiment, communications interface 207 is a power line communications interface and BAS interface 209 is an Ethernet interface. In other embodiments, both communications interface 207 and BAS interface 209 are Ethernet interfaces or are the same Ethernet interface.

Still referring to FIG. 2, BAS controller 202 is shown to include a processing circuit 204 including a processor 206 and memory 208. Processing circuit 204 can be communicably connected to BAS interface 209 and/or communications interface 207 such that processing circuit 204 and the various components thereof can send and receive data via interfaces 207, 209. Processor 206 can be implemented as a general purpose processor, an application specific integrated circuit (ASIC), one or more field programmable gate arrays (FPGAs), a group of processing components, or other suitable electronic processing components.

Memory 208 (e.g., memory, memory unit, storage device, etc.) can include one or more devices (e.g., RAM, ROM, Flash memory, hard disk storage, etc.) for storing data and/or computer code for completing or facilitating the various processes, layers and modules described in the present application. Memory 208 can be or include volatile memory or non-volatile memory. Memory 208 can include database components, object code components, script components, or any other type of information structure for supporting the various activities and information structures described in the present application. According to an exemplary embodiment, memory 208 is communicably connected to processor 206 via processing circuit 204 and includes computer code for executing (e.g., by processing circuit 204 and/or processor 206) one or more processes described herein.

In some embodiments, BAS controller 202 is implemented within a single computer (e.g., one server, one housing, etc.). In various other embodiments BAS controller 202 can be distributed across multiple servers or computers (e.g., that can exist in distributed locations). Further, while FIG. 2 shows applications 222 and 226 as existing outside of BAS controller 202, in some embodiments, applications 222 and 226 can be hosted within BAS controller 202 (e.g., within memory 208).

Still referring to FIG. 2, memory 208 is shown to include an enterprise integration layer 210, an automated measurement and validation (AM&V) layer 212, a demand response (DR) layer 214, a fault detection and diagnostics (FDD) layer 216, an integrated control layer 218, and a building subsystem integration later 220. Layers 210-220 is configured to receive inputs from building subsystems 228 and other data sources, determine optimal control actions for building subsystems 228 based on the inputs, generate control signals based on the optimal control actions, and provide the generated control signals to building subsystems 228 in some embodiments. The following paragraphs describe some of the general functions performed by each of layers 210-220 in BAS 200.

Enterprise integration layer 210 can be configured to serve clients or local applications with information and services to support a variety of enterprise-level applications. For example, enterprise control applications 226 can be configured to provide subsystem-spanning control to a graphical user interface (GUI) or to any number of enterprise-level business applications (e.g., accounting systems, user identification systems, etc.). Enterprise control applications 226 can also or alternatively be configured to provide configuration GUIs for configuring BAS controller 202. In yet other embodiments, enterprise control applications 226 can work with layers 210-220 to optimize building performance (e.g., efficiency, energy use, comfort, or safety) based on inputs received at interface 207 and/or BAS interface 209.

Building subsystem integration layer 220 can be configured to manage communications between BAS controller 202 and building subsystems 228. For example, building subsystem integration layer 220 can receive sensor data and input signals from building subsystems 228 and provide output data and control signals to building subsystems 228. Building subsystem integration layer 220 can also be configured to manage communications between building subsystems 228. Building subsystem integration layer 220 translate communications (e.g., sensor data, input signals, output signals, etc.) across multi-vendor/multi-protocol systems.

Demand response layer 214 can be configured to optimize resource usage (e.g., electricity use, natural gas use, water use, etc.) and/or the monetary cost of such resource usage in response to satisfy the demand of building 10. The optimization can be based on time-of-use prices, curtailment signals, energy availability, or other data received from utility providers, distributed energy generation systems 224, from energy storage 227, or from other sources. Demand response layer 214 can receive inputs from other layers of BAS controller 202 (e.g., building subsystem integration layer 220, integrated control layer 218, etc.). The inputs received from other layers can include environmental or sensor inputs such as temperature, carbon dioxide levels, relative humidity levels, air quality sensor outputs, occupancy sensor outputs, room schedules, and the like. The inputs can also include inputs such as electrical use (e.g., expressed in kWh), thermal load measurements, pricing information, projected pricing, smoothed pricing, curtailment signals from utilities, and the like.

According to an exemplary embodiment, demand response layer 214 includes control logic for responding to the data and signals it receives. These responses can include communicating with the control algorithms in integrated control layer 218, changing control strategies, changing setpoints, or activating/deactivating building equipment or subsystems in a controlled manner. Demand response layer 214 can also include control logic configured to determine when to utilize stored energy. For example, demand response layer 214 can determine to begin using energy from energy storage 227 just prior to the beginning of a peak use hour.

In some embodiments, demand response layer 214 includes a control module configured to actively initiate control actions (e.g., automatically changing setpoints) which minimize energy costs based on one or more inputs representative of or based on demand (e.g., price, a curtailment signal, a demand level, etc.). In some embodiments, demand response layer 214 uses equipment models to determine an optimal set of control actions. The equipment models can include, for example, thermodynamic models describing the inputs, outputs, and/or functions performed by various sets of building equipment. Equipment models can represent collections of building equipment (e.g., subplants, chiller arrays, etc.) or individual devices (e.g., individual chillers, heaters, pumps, etc.).

Demand response layer 214 can further include or draw upon one or more demand response policy definitions (e.g., databases, XML files, etc.). The policy definitions can be edited or adjusted by a user (e.g., via a graphical user interface) so that the control actions initiated in response to demand inputs can be tailored for the user's application, desired comfort level, particular building equipment, or based on other concerns. For example, the demand response policy definitions can specify which equipment can be turned on or off in response to particular demand inputs, how long a system or piece of equipment should be turned off, what setpoints can be changed, what the allowable setpoint adjustment range is, how long to hold a high demand setpoint before returning to a normally scheduled setpoint, how close to approach capacity limits, which equipment modes to utilize, the energy transfer rates (e.g., the maximum rate, an alarm rate, other rate boundary information, etc.) into and out of energy storage devices (e.g., thermal storage tanks, battery banks, etc.), and when to dispatch on-site generation of energy (e.g., via fuel cells, a motor generator set, etc.).

Integrated control layer 218 can be configured to use the data input or output of building subsystem integration layer 220 and/or demand response later 214 to make control decisions. Due to the subsystem integration provided by building subsystem integration layer 220, integrated control layer 218 can integrate control activities of the subsystems 228 such that the subsystems 228 behave as a single integrated supersystem. In an exemplary embodiment, integrated control layer 218 includes control logic that uses inputs and outputs from building subsystems to provide greater comfort and energy savings relative to the comfort and energy savings that separate subsystems could provide alone. For example, integrated control layer 218 can be configured to use an input from a first subsystem to make an energy-saving control decision for a second subsystem. Results of these decisions can be communicated back to building subsystem integration layer 220.

Integrated control layer 218 is shown to be logically below demand response layer 214. Integrated control layer 218 can be configured to enhance the effectiveness of demand response layer 214 by enabling building subsystems 228 and their respective control loops to be controlled in coordination with demand response layer 214. This configuration can reduce disruptive demand response behavior relative to conventional systems. For example, integrated control layer 218 can be configured to assure that a demand response-driven upward adjustment to the setpoint for chilled water temperature (or another component that directly or indirectly affects temperature) does not result in an increase in fan energy (or other energy used to cool a space) that would result in greater total building energy use than was saved at the chiller.

Integrated control layer 218 can be configured to provide feedback to demand response layer 214 so that demand response layer 214 checks that constraints (e.g., temperature, lighting levels, etc.) are properly maintained even while demanded load shedding is in progress. The constraints can also include setpoint or sensed boundaries relating to safety, equipment operating limits and performance, comfort, fire codes, electrical codes, energy codes, and the like. Integrated control layer 218 is also logically below fault detection and diagnostics layer 216 and automated measurement and validation layer 212. Integrated control layer 218 can be configured to provide calculated inputs (e.g., aggregations) to these higher levels based on outputs from more than one building subsystem.

Automated measurement and validation (AM&V) layer 212 can be configured to verify that control strategies commanded by integrated control layer 218 or demand response layer 214 are working properly (e.g., using data aggregated by AM&V layer 212, integrated control layer 218, building subsystem integration layer 220, FDD layer 216, or otherwise). The calculations made by AM&V layer 212 can be based on building system energy models and/or equipment models for individual BAS devices or subsystems. For example, AM&V layer 212 can compare a model-predicted output with an actual output from building subsystems 228 to determine an accuracy of the model.

Fault detection and diagnostics (FDD) layer 216 can be configured to provide on-going fault detection for building subsystems 228, building subsystem devices (i.e., building equipment), and control algorithms used by demand response layer 214 and integrated control layer 218. FDD layer 216 can receive data inputs from integrated control layer 218, directly from one or more building subsystems or devices, or from another data source. FDD layer 216 can automatically diagnose and respond to detected faults. The responses to detected or diagnosed faults can include providing an alarm message to a user, a maintenance scheduling system, or a control algorithm configured to attempt to repair the fault or to work-around the fault.

FDD layer 216 can be configured to output a specific identification of the faulty component or cause of the fault (e.g., loose damper linkage) using detailed subsystem inputs available at building subsystem integration layer 220. In other exemplary embodiments, FDD layer 216 is configured to provide "fault" events to integrated control layer 218 which executes control strategies and policies in response to the received fault events. According to an exemplary embodiment, FDD layer 216 (or a policy executed by an integrated control engine or business rules engine) can shut-down systems or direct control activities around faulty devices or systems to reduce energy waste, extend equipment life, or assure proper control response.

FDD layer 216 can be configured to store or access a variety of different system data stores (or data points for live data). FDD layer 216 can use some content of the data stores to identify faults at the equipment level (e.g., specific chiller, specific AHU, specific terminal unit, etc.) and other content to identify faults at component or subsystem levels. For example, building subsystems 228 can generate temporal (i.e., time-series) data indicating the performance of BAS 200 and the various components thereof. The data generated by building subsystems 228 can include measured or calculated values that exhibit statistical characteristics and provide information about how the corresponding system or process (e.g., a temperature control process, a flow control process, etc.) is performing in terms of error from its setpoint. These processes can be examined by FDD layer 216 to expose when the system begins to degrade in performance and alarm a user to repair the fault before it becomes more severe.

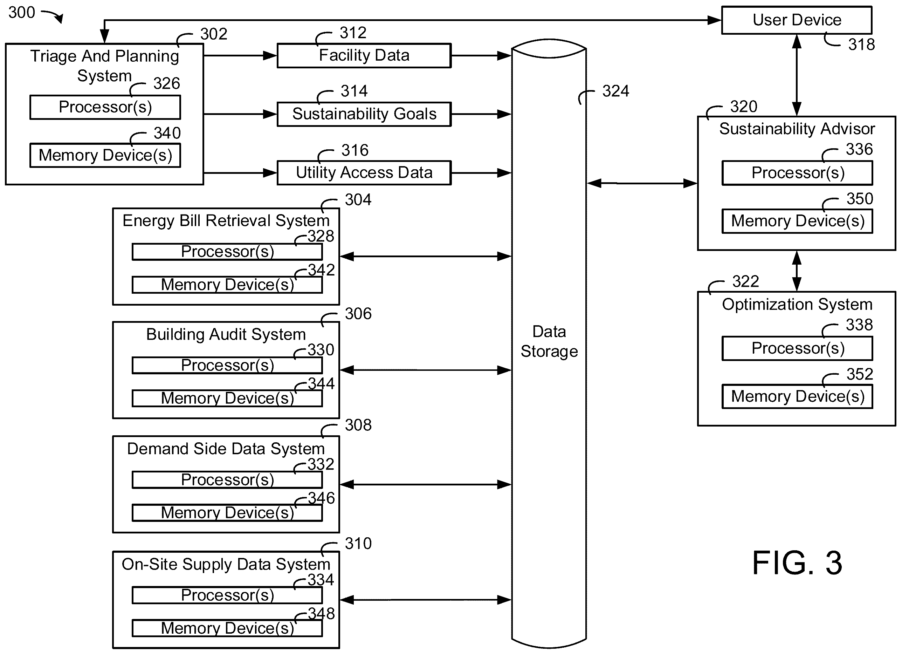

Referring now to FIG. 3, a system 300 for sustainability optimization for planning a building is shown, according to an exemplary embodiment. The system 300 includes a triage and planning system 302 that is configured to interact with a user, via a user device 318. The system 300 further includes an energy bill retrieval system 304 configured to retrieve energy bills for a building. The system 300 further includes a building audit system 306 configured to collect and aggregate audit data for the building. The system 300 further includes a demand side data system 308 configured to collect demand related data from various building subsystems of a building.

Furthermore, the system 300 includes an on-site supply data system 310 configured to collect data regarding on-site supply systems of the building. Furthermore, the system 300 includes a sustainability advisor 320 configured to present sustainability related optimization results to a user via the user device 318. The system 300 includes an optimization system 322 configured to run an optimization that can identify optimal building retrofit decisions, building improvements, and/or operating plans.

The components of the system 300 can, in some embodiments, be run as instructions on one or more processors. The instructions can be stored in various memory devices. The processors can be the processors 326-338 and the memory devices can be the memory devices 340-352. The processors 326-338 can be implemented as a general purpose processor, an application specific integrated circuit (ASIC), one or more field programmable gate arrays (FPGAs), a group of processing components, or other suitable electronic processing components. The memory devices 340-352 (e.g., memory, memory unit, storage device, etc.) may include one or more devices (e.g., RAM, ROM, Flash memory, hard disk storage, etc.) for storing data and/or computer code for completing or facilitating the various processes, layers and modules described in the present application. The memory devices 340-352 can be or include volatile memory and/or non-volatile memory.

The memory devices 340-352 can include object code components, script components, or any other type of information structure for supporting the various activities and information structures described in the present application. According to some embodiments, the memory devices 340-352 is communicably connected to the processors 326-338 and can include computer code for executing (e.g., by the processors 326-338) one or more processes of functionality described herein.

The system 300 includes data storage 324. The data storage 324 can be a database, a data warehouse, a data lake, a data lake-house, etc. The data storage 324 can store raw data, aggregated data, annotated data, formatted data, etc. The data storage 324 can act as a repository for all data collected from the triage and planning system 302, the energy bill retrieval system 304, the building audit system 306, the demand side data system 308, the on-site supply data system 310, the sustainability advisor 320, the optimization system 322, and/or any other system. In some embodiments, the data storage 324 can, in some embodiments, be a digital twin. The digital twin can, in some embodiments, be a graph data structure. The digital twin can be the digital twin described with reference to U.S. Patent Application No. 17/134,664 filed December 28th, 2020.

The triage and planning system 302 can provide one or more user interfaces to a user via the user device 318. The user interfaces can allow the user to interact and provide various pieces of information describing a building while the building is in a design phase and/or for an onboarding phase where a user first registers with the system 300 to begin sustainability planning for their building. The triage and planning system 302 can receive facility data 312, sustainability goals 314, and/or utility access data 316. The facility data 312 can describe a building facility, e.g., provide a name of the facility or campus, identify a number of buildings in the facility or campus, identify a use of each building, include a name of each building, indicate campus layout, indicate building size, indicate building square footage, indicate campus square footage, indicate geographic location, etc.

The triage and planning system 302 can receive sustainability goals 314 from the user devices 318. The sustainability goals 314 can be customer goals for their building with respect to energy reduction, carbon creation, carbon footprint, water usage reduction, switching to renewable energy, purchasing a certain number of renewable energy credits, etc. The goals can include target levels for energy consumption, carbon production, net zero carbon emissions, renewable energy, etc. The goals can further include timelines for the various target levels. For example, the timeline could be a period of time into the future, e.g., a number of days, weeks, months, years, decades, etc. The timeline can indicate a target date. For example, the timeline could be that a building is energy independent in the next forty years, or that the building is at a net-zero carbon emissions level in the next twenty five years. In some embodiments, the timelines for the sustainability goals can be returned to the user via the user device 318 with recommendations for meeting certain goals, e.g., a recommendation could be to extend a recommendation by five years (e.g., to 25 year) to hit a certain carbon emissions level which would be more financially feasible than attempting to meet the carbon emissions level in 20 years.

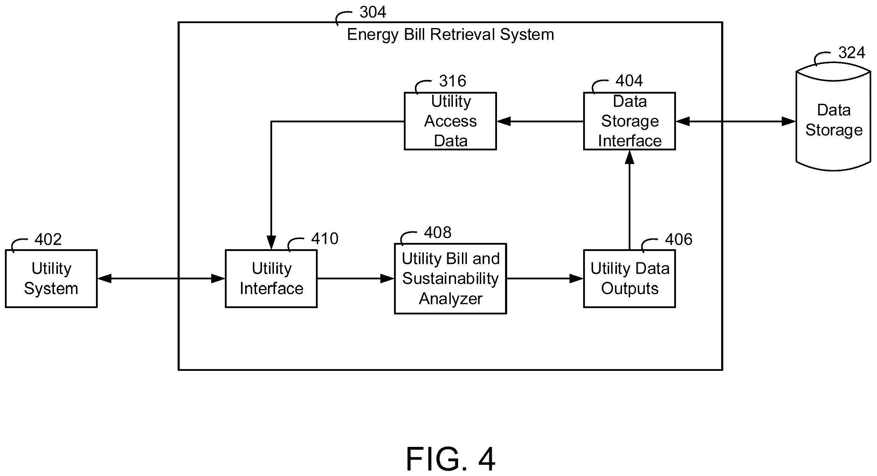

Referring now to FIG. 4, energy bill retrieval system 304 of the sustainability optimization system 300, the energy bill retrieval system retrieves utility bills for the building, according to an exemplary embodiment. The energy bill retrieval system 304 can be configured to retrieve utility access data 316 from the data storage 324 via a data storage interface 404. The bills can be electric bills, natural gas bills, water bills, etc. The data storage interface 404 can be an interface that integrates with the data storage 324 via an application programming interface (API) or otherwise exposes and API to external systems. A utility interface 410 can receive the utility access data 316 and retrieve utility bills from a utility system 402 based on the utility access data 316. The utility access data 316 can include a username, a login credential, an email address, an access code, an account number, a name of the energy provider, etc.

A utility interface 410 can, in some embodiments, integrate with the utility system 402 via the utility access data 316. The utility bills can include electricity consumption, water consumption, gas consumption, solar power electric consumption, wind turbine electric consumption, the utility interface 410 can provide the energy bills to a utility bill and sustainability analyzer 408. The analyzer 408 can run various analytics on the utility bills.

For example, the analyzer 408 could identify invoice data, perform an audit on utility bill data, and/or perform an analysis on energy rates and/or tariffs for the energy (e.g., environmental penalties for various forms of energy). The analyzer 408 can identify an energy consumption baseline for the building, identify benchmarking for the building (e.g., compare the baseline of the building to other peer buildings or an industry to determine a benchmark index), determine facility key performance indicators (KPIs), etc.

The analyzer 408 can identify sustainability data, for example, a carbon emissions baseline for the building (e.g., carbon emissions produced from natural gas or carbon emissions from electricity consumption), sustainability benchmarking (e.g., a peer comparison of the emissions baseline for the building against other buildings), renewable energy usage tracking, etc. The analyzer 408 can generate sustainability reports (e.g., an indication between a baseline emissions and a current emissions to show sustainability tracking), management and verification (M&V) reports, etc. The results of the analysis performed by the analyzer 408 can be the utility data outputs 406 which can be stored in the data storage 324 by the data storage interface 404. In some embodiments, the M&V reporting could illustrate savings between a baseline and an improvement for the building. For example, the M&V reporting could indicate a carbon emissions reduction that results (compared to a baseline) from a particular FIM.

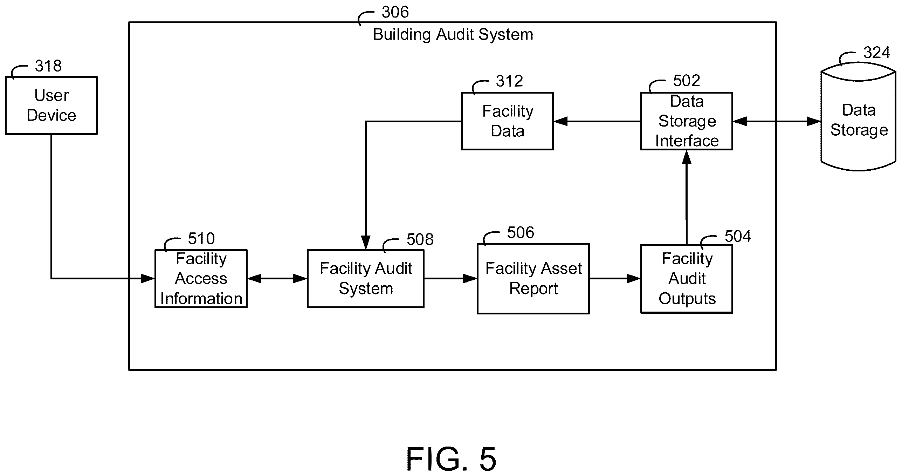

Referring now to FIG. 5, the building audit system 306 of the system 300 is shown, the facility audit system 306 is configured to collect building data of the building via an audit, according to an exemplary embodiment. The building audit system 306 includes a data storage interface 502 that can be the same as, or similar to the data storage interface 404. The interface 504 can retrieve the facility data 312 from the data storage 324. The facility data 312 can be provided to a facility audit system 508. Furthermore, a user, via the user device 318, can provide facility access information 510 (e.g., key codes, registration details, access directions, etc.) to the facility audit system 508. The facility audit system 508 can receive audit details from audit personnel who visit the physical building and record information regarding the building.

Based on the audit data collected by the audit personnel and provided to facility audit system 508, the facility audit system 508 can compile a facility asset report 506. The facility asset report can include information such as a detailed facility description. The facility description can identify each room, zone, and/or floor of a building and indicate the square footage and/or ceiling height of each area of the building. The report 506 can include an equipment inventory. The equipment inventory can indicate the number, make, model, etc. of each piece of equipment in the building. For example, the number and type of chillers in the building could be indicated in the report 506. Furthermore, a maintenance log of all maintenance operations of equipment inventory can be included in the report 506. Furthermore, the report 506 could include photos of all pieces of equipment of the building. The report 506 could further include building envelop information. The result of all the audit outputs of the system 508, including the facility asset report 506, can be stored in the data storage 324 by the data storage interface 502.

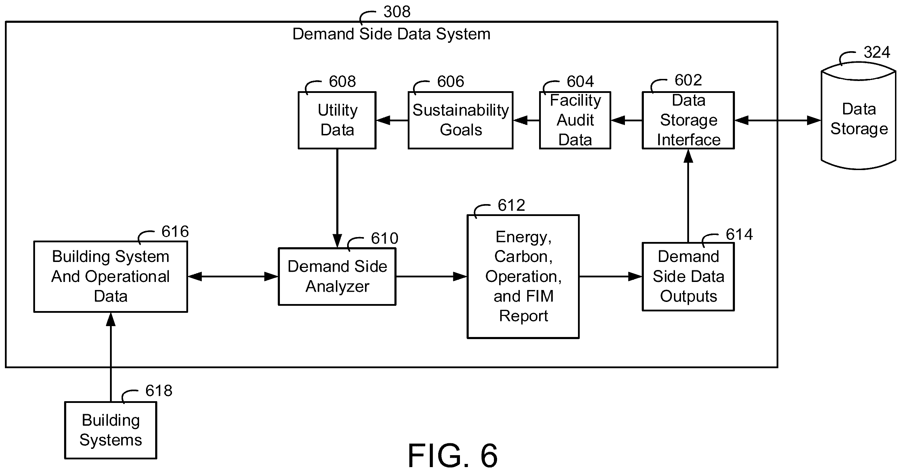

Referring now to FIG. 6, a demand side data system 308 of the system 300, the demand side data system configured to collect building system and operational data from a building and calculate energy metrics, carbon metrics, operational metrics, and facility improvement measures (FIMs) for the building, according to an exemplary embodiment. The system 308 can retrieve facility audit data 604, sustainability goals 606, and/or utility data 608 from the data storage 324 via the data storage interface 602. The data storage interface 602 can be the same as, or similar to, the data storage interface 404. A demand side analyzer 610 can receive the data 602-608. Furthermore, the demand side analyzer 610 can receive building system and/or operational data 616 from the building systems 618. The building system and/or operational data 616 could be metadata for building systems, operating settings for the building systems, runtime data for the building systems, energy usage for the building systems 618, etc. The building systems 618 can be fire safety systems, environmental cooling systems, environmental heating systems, ventilation systems, lighting systems, etc. The building systems 618 can be the systems described with reference to FIGS. 1 and 2.

The demand side analyzer 610 can run an analysis based on the demand related data 602-608 and the building system and/or operational data 616. The analyzer 610 can generate the report 612. The report 612 can indicate an energy breakdown and/or carbon breakdown for demand related systems of the building, e.g., systems that consume energy. The report 612 can indicate an energy consumption level and/or a carbon emissions level for cooling systems of a building, heating systems of a building, lighting systems of the building, etc. The energy consumption level and/or carbon emission level can attribute a portion (e.g., a percentage) of total building energy consumption and/or carbon emissions to specific pieces of equipment, equipment subsystems, subsystem types, building operation modes (heating or cooling), etc.

The analyzer 610 can further identify facility improvement measures (FIMs) for improving and/or reducing energy usage and/or carbon emissions of the building. The FIMs could be replacing a boiler with a newer energy efficient boiler which would result in a particular reduction in energy consumption and/or carbon emission. Furthermore, the analyzer 610 can identify operational improvements, e.g., reducing a temperature setpoint by one degree Fahrenheit during heating over a particular time period to result in a particular energy reduction and/or carbon emissions production. The report 612 can include savings reports. The report 612 can be provided as a demand side data outputs 614 to the interface 602. The interface 602 can store the outputs 614 in the data storage 324. In some embodiments, if the demand side data system 308 is unable to pull data from the building systems 618, the building audit system 306 retrieves the data (e.g., via manual reporting, such as from a building manager, or via other methods).

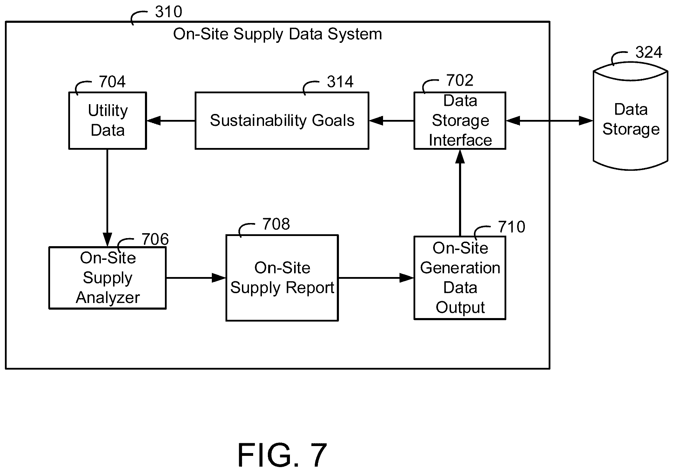

Referring now to FIG. 7, the on-site supply data system 310 is shown, the on-site supply data system 310 is configured to collect data regarding an on-site energy supply system for the building, according to an exemplary embodiment. The on-site supply data system 310 can include a data storage interface 702 configured to retrieve data from the data storage 324, e.g., the sustainability goals 314 and/or utility data 704 determined by the system 304. The interface 702 can be similar to or the same as the interface 404 described with reference to FIG. 4.

An on-site supply analyzer 706 can analyze the utility data 704 and/or the sustainability goals 314 to determine an on-site supply report 708 that can be stored as on-site generation data output 710 in the data storage 324 by the interface 702. The analyzer 706 can analyze the utility data 704 and/or the sustainability goals 314 to identify opportunities to reduce energy usage and/or carbon emissions through on-site energy supply systems, e.g., solar panels, wind power, hydro-electric dams, re-chargeable batteries, etc. The analyzer 706 can identify opportunities to shift power consumption from an energy grid to an on-site energy supply system.

The report 708 can include the results of an analysis on solar photovoltaic (PV) cells, fuel cells, energy storage, etc. The report 708 can further indicate a renewable energy report, e.g., reports on opportunities to shift energy consumption of the building to renewable energy sources that are on-site. The report 708 can further indicate cost savings for energy, e.g., if solar PV cells were installed in a building, how much financial savings in energy cost would result. Furthermore, the report 708 can indicate sustainability data, e.g., how much carbon savings or carbon production would result from consuming various amounts of energy from on-site PV cells, on-site wind turbines, etc.

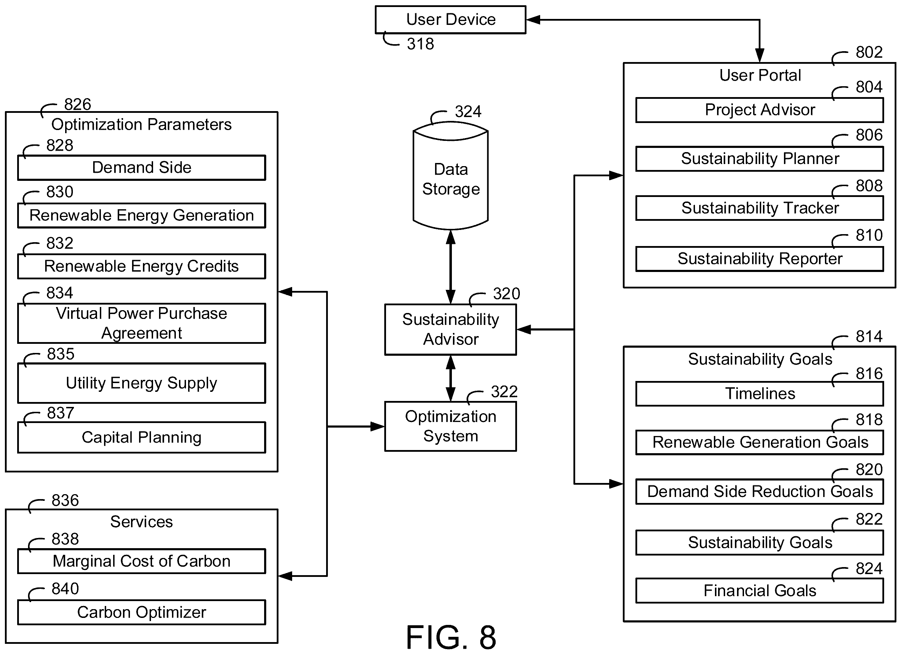

Referring now to FIG. 8, the sustainability advisor 320 and the optimization system 322 are shown, the sustainability advisor 320 is configured to provide sustainability data to a user and receive input from the user and the optimization system 322 is configured to run sustainability optimizations for the building, according to an exemplary embodiment. The sustainability advisor 320 is configured to retrieve data from the data storage 324 (e.g., the data described with reference to FIGS. 3-7) and cause the optimization system 322 to run optimizations based on the data. The sustainability advisor 320 can be configured to manage a user portal 802 which can provide various pieces of information to a user and receive input from the user.

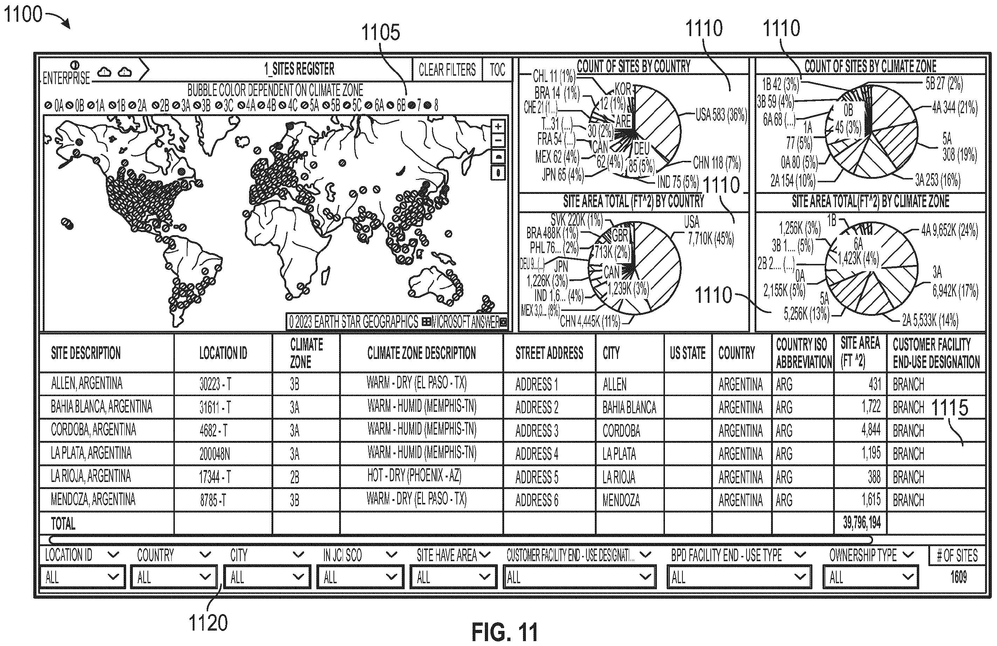

The user portal 802 can interact with a user by causing the user device 318 to display various user interfaces with information regarding cost improvements, energy reduction improvements, and/or carbon emissions reduction improvements for the building or a plurality of buildings (e.g., as shown in FIGS. 11 -26). In some instances, the information displayed in the user portal 802 can be based on the information pulled, collected, or otherwise provided by the sustainability advisor 320. In some instances, the information displayed in the user portal 802 can be based on the results of the optimizations run by the optimization system 322. The portal 802 can provide various reports and/or recommendations to the user (e.g., recommended FIMs, recommendations to purchase renewable energy credits (RECs), recommendations to adopt updated control strategies, etc.) for planning the construction, retrofit, and/or operation of a building to meet one or more sustainability goals.

The project advisor 804 can allow a user to review, define, and/or update a project. The project may be to plan sustainability for a particular building and/or building. The advisor 804 can allow a user to set and/or update their sustainability goals. Furthermore, the advisor 804 can allow a user to review their progress in meeting the sustainability goals for their project.

The sustainability planner 806 can provide a plan for meeting sustainability goals for a particular project. The plan generated by the sustainability planner 806 can be based on the optimizations run by the optimization system 322. In some embodiments, the plan generated by the sustainability planner 806 can be a plan for a time horizon, e.g., a thirty-year plan, a twenty-year plan, etc. The plan can provide the steps for meeting the sustainability goal of the user. The steps can indicate what equipment retrofits should be performed at a present time or at a specified time in the future, how many RECs should be purchased every year or every decade, what control schemes should be adopted, etc. As time passes, the sustainability planner 806 can update the sustainability plan based on new optimizations run by the optimization system 322. This can keep the plan on track to meet a goal as the environment or technology changes and allows the user to meet their goals in more cost-effective manners. The planner 806 can generate plans based on the sustainability planning data 814.

The sustainability tracker 808 can track the progress of the building towards meeting various sustainability goals. The sustainability tracker 808 can, in some embodiments, retrieve operational building data from the data storage 324, energy bills from the data storage 324, receipts of REC purchases from the data storage 324, etc. The sustainability tracker 808 can identify carbon emissions levels for a building at various times in the past and/or at the present. The sustainability tracker 808 can identify a level of renewable energy consumed by the building at times in the past and/or at the present. Furthermore, the sustainability tracker 808 can identify a level of energy consumed by the building at times in the past and/or at the present. The sustainability tracker 808 can provide a user with a historical trend of the sustainability progress of the building towards the one or more sustainability goals.

The user portal 802 includes a sustainability reporter 810. The sustainability reporter 810 can generate various reports indicating sustainability information for the building. The report can indicate a construction plan, retrofit plan, and/or operational plan for a building, e.g., the amounts of energy to consume from various different energy sources, indications of RECs to purchase, indications of equipment retrofits, indications of physical building retrofits (e.g., energy efficient windows, energy efficient insulation, etc.), indications of new equipment installation (e.g., on-site PV cells, on-site wind turbines, etc.). The report generated by the sustainability reporter 810 can indicate how the plan meets one or more sustainability, energy efficiency, and/or financial goals of the user. The reporter 810 can include a summary report of sustainability planning for the building. The reporter 810 can compile a report based on the data generated by the components 804-808.

The sustainability planning data 814 includes the planning data that can be used to run the optimization system 322. The planning data 814 can indicate the various goals and/or expectations of the user. The optimization run by the optimization system 322 can use the planning data 814 as constraints for an optimization, e.g., run an optimization that results in a plan that meets or exceeds the various goals and/or expectations. In some embodiments, the optimization can find a sustainability plan for the building that meets the various sustainability goals of the user at a minimum financial cost.

The sustainability planning data 814 can be or can be based on the sustainability goals 314. The timelines 816 can indicate the length of time that the user wants the building to meet various goals (e.g., the goals 818-824). The renewable generation goals 818 indicate a level of energy consumption by the building that the user wants to be generated from renewable energy sources (e.g., solar, wind, etc.). The demand side reduction goals 820 can indicate goals for the demand side systems, e.g., that the demand side systems be energy efficient (e.g., that lighting systems of the building include energy efficient light bulbs). The sustainability goals 822 can be a goal that the operation of the building creates a level of carbon emission, net zero emissions goals, etc. The financial goals 824 can indicate financial goals of the building, e.g., annual energy costs, monthly energy costs, etc.

The optimization parameters 826 include demand side parameters 828 related to the energy demand of a building. The demand side parameters 828 can indicate different types of building equipment retrofits, building equipment maintenance operations, new building equipment installation, building equipment replacement, etc. The demand side parameters 828 can indicate actions that can be taken to modify, change, and/or update the demand side equipment of the building. The parameters 828 can further be linked to renewable energy generation, carbon emissions, energy usage, etc.

The renewable energy generation 830 can indicate parameters for installing renewable energy generation equipment at the building. The parameters 830 can further indicate allocations of energy consumption between external power generation systems, e.g., coal power, hydroelectric power, PV cell systems, wind power systems, etc. The parameters 830 can be linked to various levels of carbon emissions, financial cost, etc.

The parameters 826 include renewable energy credits 832. The renewable energy credits 832 can be various different types of RECs that could be purchased for the building. The parameters can indicate carbon emissions reduction resulting from purchasing RECs and/or financial return from RECs sold by the building. For example, if the building includes on-site renewable energy generation, the building could sell RECs, in some embodiments. Furthermore, the parameters 826 include a virtual power purchase agreement 834 which can represent an agreed price for renewable energy generation. The parameters can further indicate capital planning 837, e.g., plans for replacing, purchasing, and/or repairing capital of the building (e.g., lighting of the building, conference rooms of the building, audio visual systems, insulation of the building, chillers for the building, AHUs for the building, etc.)

The optimization system 322 can include model services 836. The services 836 can include a marginal cost of carbon 838. The marginal cost of carbon 838 can indicate how much carbon emissions results from the next amount of energy consumed by the building. The marginal cost of carbon can be calculated for external utility services and/or on-site energy generation systems of the building. The marginal cost of carbon can be identified from the various energy bills and/or operational decisions of the building. The marginal cost of carbon can, in some embodiments, be based on the optimization parameters 826. The carbon optimizer 840 can run an optimization that identifies decisions for the parameters 826 that results in a particular carbon emissions level. The optimization can be run for a year, five years, ten years into the future, tec. The optimization can be run to slowly reduce the carbon emissions by a particular level every year so that a particular carbon emissions goal is met in the future. The optimization can be run based on the sustainability goals 814 such that the decisions for the parameters 826 are such that the goals 814 are met.

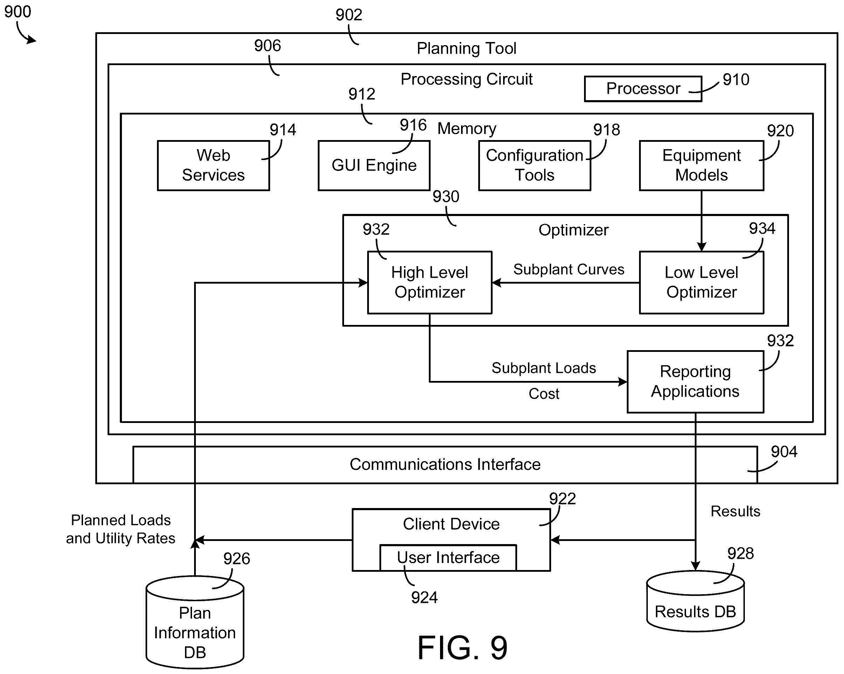

In some embodiments, the optimization run by the optimization system 322 can be based on the optimization described in FIG. 9. The optimization can be run with the various linear programming techniques described in FIG. 9. Furthermore, the optimization of the optimization system 322 can be based on, and/or can utilize, the techniques described in U.S. Patent Application No. 16/518,314 filed July 22^{nd}, 2019, the entirety of which is incorporated by reference herein.

Referring now to FIG. 9, a block diagram of a planning system 900 is shown, according to an exemplary embodiment. Planning system 900 may be configured to use optimizer 930 as part of a planning tool 902 to simulate the operation of a central plant over a predetermined time period (e.g., a day, a month, a week, a year, etc.) for planning, budgeting, and/or design considerations. The optimizer 930 can optimize for planning a building, e.g., identify construction decisions, retrofit decisions, control plans, etc. The optimizer 930 can run an optimization to minimize carbon emissions, minimize energy consumption, minimize energy cost, maximize renewable energy use, etc. In some embodiments, the optimizer 930 can consider building load in addition to sustainability related features. For example, optimizer 930 may use building loads and utility rates to determine an optimal resource allocation to minimize cost over a simulation period. However, planning tool 902 may not be responsible for real-time control of a building management system or central plant, in some embodiments, while in other embodiments planning tool 902 may provide real-time or near real-time control of a building management system or portions thereof to help achieve the particular goals. In some implementations, planning tool 902 may provide actionable insights or suggestions that, upon approval by a user, are automatically implemented by the building management system or automatically generate changes to a building plan (e.g., pre-construction building plan).

Planning tool 902 can be configured to determine the benefits of investing in a battery asset and the financial metrics associated with the investment. Such financial metrics can include, for example, the internal rate of return (IRR), net present value (NPV), and/or simple payback period (SPP). Planning tool 902 can also assist a user in determining the size of the battery which yields optimal financial metrics such as maximum NPV or a minimum SPP. In some embodiments, planning tool 902 allows a user to specify a battery size and automatically determines the benefits of the battery asset from participating in selected IBDR programs while performing PBDR. In some embodiments, planning tool 902 is configured to determine the battery size that minimizes SPP given the IBDR programs selected and the requirement of performing PBDR. In some embodiments, planning tool 902 is configured to determine the battery size that maximizes NPV given the IBDR programs selected and the requirement of performing PBDR.

In planning tool 902, high level optimizer 932 may receive planned loads and utility rates for the entire simulation period. The planned loads and utility rates may be defined by input received from a user via a client device 922 (e.g., user-defined, user selected, etc.) and/or retrieved from a plan information database 926. High level optimizer 932 uses the planned loads and utility rates in conjunction with subplant curves from low level optimizer 934 to determine an optimal resource allocation (i.e., an optimal dispatch schedule) for a portion of the simulation period. The low level optimizer 934 can receive equipment models 920, in some embodiments.

The portion of the simulation period over which high level optimizer 932 optimizes the resource allocation may be defined by a prediction window ending at a time horizon. With each iteration of the optimization, the prediction window is shifted forward and the portion of the dispatch schedule no longer in the prediction window is accepted (e.g., stored or output as results of the simulation). Load and rate predictions may be predefined for the entire simulation and may not be subject to adjustments in each iteration. However, shifting the prediction window forward in time may introduce additional plan information (e.g., planned loads and/or utility rates) for the newly added time slice at the end of the prediction window. The new plan information may not have a significant effect on the optimal dispatch schedule since only a small portion of the prediction window changes with each iteration.

In some embodiments, high level optimizer 932 requests all of the subplant curves used in the simulation from low level optimizer 934 at the beginning of the simulation. Since the planned loads and environmental conditions are known for the entire simulation period, high level optimizer 932 may retrieve all of the relevant subplant curves at the beginning of the simulation. In some embodiments, low level optimizer 934 generates functions that map subplant production to equipment level production and resource use when the subplant curves are provided to high level optimizer 932. These subplant to equipment functions may be used to calculate the individual equipment production and resource use (e.g., in a post-processing module) based on the results of the simulation.

Still referring to FIG. 9, planning tool 902 is shown to include a communications interface 904 and a processing circuit 906. Communications interface 904 may include wired or wireless interfaces (e.g., jacks, antennas, transmitters, receivers, transceivers, wire terminals, etc.) for conducting data communications with various systems, devices, or networks. For example, communications interface 904 may include an Ethernet card and port for sending and receiving data via an Ethernet-based communications network and/or a Wi-Fi transceiver for communicating via a wireless communications network. Communications interface 904 may be configured to communicate via local area networks or wide area networks (e.g., the Internet, a building WAN, etc.) and may use a variety of communications protocols (e.g., BACnet, IP, LON, etc.).

Communications interface 904 may be a network interface configured to facilitate electronic data communications between planning tool 902 and various external systems or devices (e.g., client device 922, results database 928, plan information database 926, etc.). For example, planning tool 902 may receive planned loads and utility rates from client device 922 and/or plan information database 926 via communications interface 904. Planning tool 902 may use communications interface 904 to output results of the simulation to client device 922 and/or to store the results in results database 928.

Still referring to FIG. 9, processing circuit 906 is shown to include a processor 910 and memory 912. Processor 910 may be a general purpose or specific purpose processor, an application specific integrated circuit (ASIC), one or more field programmable gate arrays (FPGAs), a group of processing components, or other suitable processing components. Processor 910 may be configured to execute computer code or instructions stored in memory 912 or received from other computer readable media (e.g., CDROM, network storage, a remote server, etc.).

Memory 912 may include one or more devices (e.g., memory units, memory devices, storage devices, etc.) for storing data and/or computer code for completing and/or facilitating the various processes described in the present disclosure. Memory 912 may include random access memory (RAM), read-only memory (ROM), hard drive storage, temporary storage, non-volatile memory, flash memory, optical memory, or any other suitable memory for storing software objects and/or computer instructions. Memory 912 may include database components, object code components, script components, or any other type of information structure for supporting the various activities and information structures described in the present disclosure. Memory 912 may be communicably connected to processor 910 via processing circuit 906 and may include computer code for executing (e.g., by processor 910) one or more processes described herein.

Still referring to FIG. 9, memory 912 is shown to include a GUI engine 916, web services 914, and configuration tools 918. In an exemplary embodiment, GUI engine 916 includes a graphical user interface component configured to provide graphical user interfaces to a user for selecting or defining plan information for the simulation (e.g., planned loads, utility rates, environmental conditions, etc.). Web services 914 may allow a user to interact with planning tool 902 via a web portal and/or from a remote system or device (e.g., an enterprise control application).

Configuration tools 918 can allow a user to define (e.g., via graphical user interfaces, via prompt-driven "wizards," etc.) various parameters of the simulation such as the number and type of subplants, the devices within each subplant, the subplant curves, device-specific efficiency curves, the duration of the simulation, the duration of the prediction window, the duration of each time step, and/or various other types of plan information related to the simulation. Configuration tools 918 can present user interfaces for building the simulation. The user interfaces may allow users to define simulation parameters graphically. In some embodiments, the user interfaces allow a user to select a pre-stored or pre-constructed simulated plant and/or plan information (e.g., from plan information database 926) and adapt it or enable it for use in the simulation.

Still referring to FIG. 9, memory 912 is shown to include optimizer 930. Optimizer 930 may use the planned loads and utility rates to determine an optimal resource allocation over a prediction window. With each iteration of the optimization process, optimizer 930 may shift the prediction window forward and apply the optimal resource allocation for the portion of the simulation period no longer in the prediction window. Optimizer 930 may use the new plan information at the end of the prediction window to perform the next iteration of the optimization process. Optimizer 930 may output the applied resource allocation to reporting applications 932 for presentation to a client device 922 (e.g., via user interface 924) or storage in results database 928.

Still referring to FIG. 9, memory 912 is shown to include reporting applications 932. Reporting applications 932 may receive the optimized resource allocations from optimizer 930 and, in some embodiments, costs associated with the optimized resource allocations. Reporting applications 932 may include a web-based reporting application with several graphical user interface (GUI) elements (e.g., widgets, dashboard controls, windows, etc.) for displaying key performance indicators (KPI) or other information to users of a GUI. In addition, the GUI elements may summarize relative energy use and intensity across various plants, subplants, or the like. Other GUI elements or reports may be generated and shown based on available data that allow users to assess the results of the simulation. The user interface or report (or underlying data engine) may be configured to aggregate and categorize resource allocation and the costs associated therewith and provide the results to a user via a GUI. The GUI elements may include charts or histograms that allow the user to visually analyze the results of the simulation.

### Energy conservation measures

The systems and methods described herein can include and/or be implemented by an Energy Conservation Measure (ECM) manager. The ECM manager can be and/or be included in the BMS described herein. The ECM manager can generate at least one ECM. The ECMs can be or included in at least one energy conservation protocol. The ECMs can include at least one action that can be taken or executed by or in relation to the building served by the ECM manager. The actions included in the ECMs can be single actions (e.g., replace a piece of building equipment) and/or the ECMs can be continual or semi continual actions (e.g., control strategies that pertain to building operations).

A company, business, firm, organization, corporation, agency, establishment or any other possible entity can decide that they want to reduce emissions and/or improve the sustainability of at least one building that corresponds to the company. However, companies struggle to actually reduce emissions and/or improve the sustainability of their buildings as the sustainability of a building is an ever changing scenario.

The ECM manager provides a seamless process that improves a buildings ability to reduce emissions and/or increase the sustainability of the company. This technical solution provides the ability for a company to establish actions that can achieve the sustainability goals (e.g., reduce emissions, increase sustainability, etc.) that the company has decided to create. Additionally, the ECM manager can track the progress made towards the sustainability goals, detect additional data that suggests previously absent sustainability factors are now impacting the sustainability of the building and generate actions that can correct the newly determined sustainability factors. Additionally, this technical solution provides a flexible and dynamic process that can address the ever changing and evolving nature of the sustainability of buildings. The sustainability of a building is not properly and effectively achieved by just establishing a goal.

The ECM manager can obtain at least one sustainability goal. The sustainability goal can pertain to the sustainability of a building. For example, the sustainability goal can pertain to the sustainability of the building 10. The sustainability goal can be, include and/or pertain to at least one of a company goal, a location goal and/or a building goal. The company goal can be or include at least one of a company goal, a company level goal a portfolio goal and/or a portfolio level goal. The sustainability goals can be, include and/or pertain to at least one sustainability category. The sustainability categories can be or include emissions, energy consumption, water and/or waste. The emissions category can pertain to at least one of carbon emissions, greenhouse gas emissions, emission that pertain to energy sources (e.g., natural gas, electricity, propane, butane, etc.). The energy consumption category can pertain to at least one of total energy consumption, energy use intensity, resource consumption, steam consumption, etc. The water category can pertain to the amount of water that is consumed, used or otherwise associated with a building. The waste category can pertain to garbage production, paper waste, electronic components, etc. The sustainability categories described herein can pertain to at least one of, at least one company that includes at least one location and the locations include at least one building, at least one location and the locations include at least one building, and/or at least one building that can pertain to at least one location and/or company.

The sustainability goal can be to reduce emissions for the building 10. For example, the sustainability goal can be to reduce carbon emission for the building 10 by a certain percentage and/or value. Similarly, the sustainability goal can be to reduce energy consumption for the building 10. For example, the sustainability goal can be to reduce energy consumption from a power grid and/or increase an amount of solar generated energy. Examples of the goals described herein can be found in U.S. Provisional Patent Application No. 63/336,935 filed April 29, 2022, the entirety of which is incorporate herein by reference. The ECM manager can determine, detect or otherwise identify that the goals pertain to at least one sustainability categories.

The ECM manager can, responsive to obtaining the sustainability goal, determine a target sustainability level for the building. The ECM manager can determine the target sustainability level for the building using a baseline sustainability performance and the sustainability goal. The baseline sustainability performances can be or include at least one baseline level for at least one sustainability category and/or a baseline value for at least one source that impacts at least one of the sustainability categories. For example, the baseline sustainability performance can be a baseline emission level. The baseline sustainability performance can also be a baseline energy consumption level and/or a baseline electricity consumption level for the building.

The ECM manager can generate at least one energy conservation protocol. The ECM manager can generate the energy conservation protocols using the baseline sustainability performance the target sustainability level. The energy conservation protocols can include at least one action that can meet at least a portion of the sustainability goal. For example, a first action included in at least one energy conservation protocol can be to replace an HVAC system with an HVAC that is more energy efficient. A second action can be to retrofit the building 10 with solar photovoltaic (PV) cells, fuel cells, energy storage, etc. The actions including the energy conservation protocols can meet at least one of the sustainability goal and/or the target sustainability level. For example, the sustainability goal can be for the building 10 to consume 40% of its total electricity consumption from electricity that is generated from solar. In this example, the energy conservation protocol can be or include at least one action that involves retrofitting, over a period of time, a certain amount of PV cells so that the building 10 can consume 40% of its total electricity consumption from electricity that is generated from solar. Similarly, the energy conservation protocol can include control actions that can be implemented to decrease the amount of electricity that the building 10 consumes from the grid. In doing so the building 10 could increase its percentage of electricity consumption from electricity that is generated from solar by decreasing the amount of electricity consumed from the grid.

The ECM manager can receive an indication to accept a subset of the plurality of actions included in at least one energy conservation protocol. For example, the ECM manager can provide the energy conservation protocols to a user via the user device 318. The user device 318 can provide, present, show, create or otherwise display a user interface that includes the energy conservation protocols. The user can select, via an icon included in the user interface, at least one energy conservation protocol and/or at least one action included in the energy conservation protocols. The ECM manager can receive, responsive to the user selecting the icon, the subset of the plurality of actions included in the energy conservation protocols.

The ECM manager can implement the subset of the plurality of actions included in the energy conservation protocols. The ECM manager can implement the subset of the plurality of actions included in the energy conservation protocols by generating, providing and or executing the actions included in the energy conservation protocols. For example, the ECM manager can provide, to pieces of building equipment included in and/or that service the building 10, control signals to control the pieces of building equipment. The controlling of the pieces of building equipment can cause the building 10 to move towards the target sustainability level. For example, the control actions can be modifying and maintaining a setpoint for a piece of equipment. Maintaining the setpoint can reduce an amount of energy that is consumed by the piece of equipment, and reducing the amount of energy consumed by the piece of building equipment can reduce the amount of energy consumption (e.g., a sustainability goal) for the building 10.

The ECM manager can, responsive to controlling pieces of building equipment, detect that the building 10 has moved towards the target sustainability level. For example, the sustainability goal can be to reduce the amount of electricity that is consumed from the power grid. The ECM manager can, using utility bills for the building 10, determine that the electricity consumption for the building 10 from the power grid has decreased. Similarly, the ECM manager can also determine that an amount of energy consumed from electricity generated by solar has increased. The reducing of the amount of electricity consumed from the power grid and the increasing of the amount of electricity consumed from solar generated electricity can both indicate that the building 10 has moved towards the target sustainability level.

The sustainability categories described herein can have at least one source. For example, the energy consumption can include the amount of electricity that a building consumes, uses or otherwise receives. The ECM manager can generate ECMs that can target at least one source that impacts at least one of the sustainability categories. For example, the ECM manager can identify an ECM that will impact the butane usage associated with a building. Additionally, the ECM manager can organize the generated ECMs and provide them to the company. For example, the ECM manager can organize the generate ECMs by highest reduction (e.g., the ECM that reduces the source by the highest amount is listed first), shortest payback (e.g., the ECM that provides the fastest return is listed first) and/or lowest cost (e.g., the ECM that has the lowest implementation cost is listed first).

The ECM manager organizing the generated ECMs provides companies with the ability to easily and seamlessly view ECMs that improve the sustainability of the buildings while also allowing the companies to have additional priorities (e.g., highest reduction, shortest payback, lowest cost).

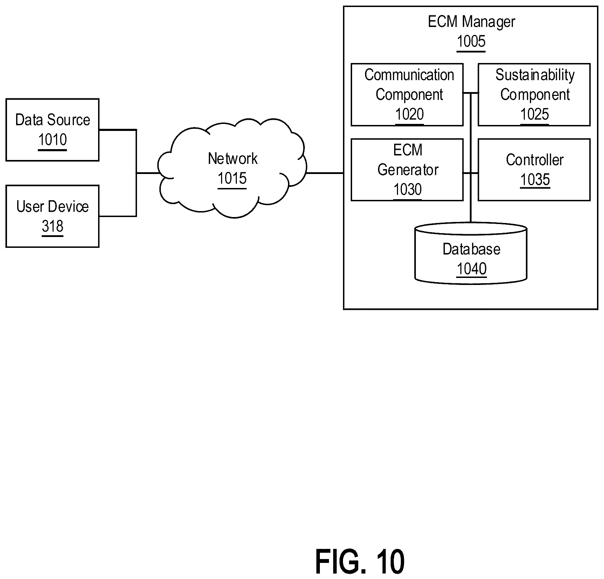

Referring now to FIG. 10, a block diagram of a system 1000 for energy conservation is shown, according to an exemplary embodiment. The system 1000 can include an Energy Conservation Measure (ECM) manager 1005 (e.g., the ECM manager described herein), at least one data source 1010, at least one network 1015 and the user device 318. The ECM manager 1005 can include at least one communication component 1020, at least one sustainability component 1025, at least one ECM generator 1030, at least one controller 1035 and at least one database 1040. The ECM manager 1005 can perform similar functionality to that of the BAS 200 and/or the ECM manager 1005 can include components that are similar to the components of the BAS 200. The ECM manager 1005 can perform similar functionality to that of the system 300 and/or the ECM manager 1005 can include components that are similar to the components of the system 300. Similarly, the ECM manager 1005 can perform similar functionality to that of at least one component shown in FIG. 9.

The data source 1010 can be or include at least one of the building subsystems 228, the data storage 324, the utility system 402, the building system 618, the plan information database 926, the assets database 1004 or any other possible data source. In some embodiments, the data source 1010 can be a separate component that receives data from at least one of the building subsystems 228, the data storage 324, the utility system 402, the building system 618, the plan information database 926, the assets database 1004 or any other possible data source and then provides the data to the ECM manager 1005. The data provided by the data source 1010, to the ECM manager 1005, can be or include at least one the facility data 312, the sustainability goals 314, the utility access data 316 or any other possible data described herein.

In some embodiments, the data source 1010 can provide data that includes data similar to that described in U.S. Provisional Patent Application No. 63/336,935 filed April 29, 2022, the entirety of which is incorporated herein by reference. For example, the ECM manager 1005 can receive data that pertains to the business goal and/or the business level goal, the location level goal, the building level goal or the building sub-target goal. Similarly, the data that is received by the ECM manager 1005 can be or include operational data that pertains to at least one piece of building equipment that is included in and/or that serves the building 10. For example, the data can be operational data that pertains to and/or that includes the building subsystems 228 and/or pieces of building equipment thereof. The business level goals, the location level goals, the building level goal, and/or the building sub-target goal can be or include at least one sustainability goal. In some embodiments, the ECM manager 1005 can perform similar functionality to that of the sustainability manager and/or the ECM manager 1005 can include components that are similar to the component of the sustainability manager described in U.S. Provisional Patent Application No. 63/336,935 filed April 29, 2022. The data provided by the data source 1010 can pertain to at least one building (e.g., building 10) and the building 10 can be included in at least one location and the location and the building 10 can be included in at least one company and/or business.

The communication component 1020, via the network 1015, can interact with, interface with or otherwise communicate with at least one of the data source 1010 or the user device 318. For example, the communication component 1020 can communicate with the data source 1010 and the data source 1010 can provide data (e.g., utility access data 316) that pertains to a building (e.g., building 10) to the communication component 1020. Similarly, the user device 318 can provide data the pertains to at least one of user settings, user preferences, user selections, configuration data, sustainability targets and/or sustainability goals (e.g., the business level goals and/or targets, the location level goals and/or targets, the building level goals and/or targets or the building sub-target goals) and/or customizations that pertain to the sustainability targets.

The sustainability component 1025 can obtain, from the communication component 1020, the data received from the data source 1010 and/or the user device 318. For example, the sustainability component 1025 can obtain a sustainability target (e.g., a sustainability goal) that was established for a building. The sustainability target can include a parameter that pertains to the sustainability of the building. For example, the sustainability target can be to reduce the emissions (e.g., the parameter) of the building by 90%. The parameters can be and/or include the sustainability performances described herein. The parameter can be or include at least one of at least one emission parameter (e.g., carbon emission, greenhouse gas emission or any other possible emission), at least one energy parameter (e.g., energy consumption, energy usage intensity or any other possible), at least one water parameter (e.g., water usage, water consumption or any other possible water metric) and/or at least one waste parameter (e.g., waste production, recycle rate).

In some embodiments, the sustainability component 1025 can, using data that pertains to the building, determine a baseline value for the parameter (e.g., a baseline sustainability performance). For example, the baseline value can be the total carbon emissions of the building in the previous year. The sustainability component 1025 can, using the baseline value for the parameter and the sustainability target, determine a target value for the parameter (e.g., a target sustainability level). For example, the parameter can be water consumption, the baseline value for water consumption of the building can be 10,000 gallons and the sustainability target can be to reduce the yearly water consumption of the building by 80%. The sustainability component 1025, using the baseline value (10,000 gallons) and the sustainability target (reduce water consumption by 80%) can determine that the target value is 2,000 gallons of yearly water consumption. The sustainability component 1025 can, responsive to determining the target value of the parameter, communicate with the ECM generator 1030. The sustainability component 1025 can provide, to the ECM generator 1030, at least one of the sustainability target, the baseline value of the parameter, the target value of the parameter or any other possible information that pertains to the sustainability target.

The sustainability component 1025 can determine the target value for the parameter (e.g., the target sustainability level) by determining a difference between the baseline sustainability performance and the sustainability goal. For example, the building 10 can have a sustainability goal pertaining to carbon emissions and the baseline sustainability performance for the building 10 can be 8,000 tCO2e/yr. The sustainability component 1025 can determine that the sustainability goal is to reduce carbon emissions by 60% and the sustainability component 1025 can use the baseline sustainability performance of 8,000 tCO2e/yr. and the carbon reduction goal of 60% to determine a difference. For example, the sustainability component 1025 can determine that a reduction (e.g., a difference) of carbon emissions by 4,800 tCO2e/yr. can result in the sustainability goal being reached.

In some embodiments, the sustainability component 1025 can use the difference between the baseline sustainability performance and the sustainability goal to generate a sustainability value. The sustainability value can be a value that meets the sustainability goal. For example, the sustainability component 1025 can use the baseline sustainability performance of 8,000 tCO2e/yr. and the difference of 4,800 tCO2e/yr. to generate a sustainability value of 3,200 tCO2e/yr. In this non-limiting example, the sustainability component 1025 can determine that the building reaching a carbon emission value of 3,200 tCO2e/yr. can result in the building 10 meeting the sustainability goal (e.g., reduce carbon emissions by 60%). The sustainability component 1025 can then determine an amount of time to reach the sustainability value. For example, the sustainability goal can establish an amount of time to reach the sustainability goal (e.g., reduce carbon emissions by 60% in the next 15 years). The sustainability component 1025 can use the amount of time to reach the sustainability value when tracking and/or monitoring the progress made towards the sustainability goal.

In some embodiments, the ECM generator 1030 can, responsive to communicating with the sustainability component 1025, generate at least one energy conservation protocol. The energy conservation protocols can include at least one energy conservation measure (ECM). The ECMs can be or include at least one action that can be taken or executed where in response to the actions being taken or executed the sustainability target can be reached, achieved, satisfied, accomplished or otherwise met. The actions can be at least one of building improvements (e.g., FIMs), control strategies (e.g., temperature settings, lighting settings, HVAC settings, circulation settings, ventilation settings, etc.) and/or employee actions (e.g., carpool schedules, work-from-home schedules, incentive programs or any other possible action that can be used to achieve the sustainability target. The ECM generator 1030 can, in response to generating the energy conservation protocols, communicate with the communication component 1020. The ECM generator 1030 can provide, to the communication component 1020, the energy conservation protocols.

In some embodiments, the communication component 1020 can, in response to receiving the energy conservation protocols, provide, to at least one of the data source 1010 or the user device 318, the energy conservation protocols. The communication component 1020 providing the energy conservation protocols to the user device 318 can cause the user device 318 to display, via a user interface associated with the user device 318, at least a portion of the energy conservation measures. For example, the user interface displayed by the user device 318 can display, show, present or otherwise include the energy conservation protocols and the actions included in the energy conservation protocols.

The operator of the user device 318 can interact with, interface with or otherwise engage with the user interface displayed by the user device 318. For example, the operator of the user device 318 can view the energy conservation protocols and the actions included in the energy conservation protocols. The operator of the user device 318 can accept, decline and/or customize at least one of the energy conservation protocols, the actions included in the energy conservation protocols and/or a subset of the actions included in the energy conservation protocols. For example, the actions included in the energy conservation protocols can be or include at least one of a control strategy for the HVAC system of the building that can decrease the energy consumption of the building, a FIM (e.g., replace the HVAC system) that pertains to the HVAC system and/or a building setpoint (e.g., a temperature setting). Additionally, the subset of the actions included in the energy conservation protocols can be at least one of the actions included in the energy conservation protocols. For example, the subset of the actions included in the energy conservation protocols can be the control strategy for the HVAC system. The operator can accept the subset of the actions included in the energy conservation protocols by hovering over, selecting or otherwise interacting with an icon included in the user interface displayed by the user device 318.

In some embodiments, the communication component 1020 can, in response to the operator of the user device 318 selecting the icon to accept the subset of the actions included in the energy conservation protocols, receive an indication. The indication can be an indication to accept the subset of the actions included in the energy conservation protocols. For example, the user device 318 can, in response to the operator selecting the icon to accept the subset of the actions included in the energy conservation protocols, provide, to the communication component 1020, a signal. The signal provided to the communication component 1020 can include the indication to accept the subset of the actions included in the energy conservation protocols. The indication can also be an indication that the operator of the user device 318 has accepted the entire energy conservation protocols and/or an indication that the energy conservation protocols have been customized by the operator. The indication can also be an indication that the operator of the user device 318 has provided a user defined energy conservation protocol. The communication component 1020 can, in response to receiving the indication, provide, to the ECM generator 1030, the indication. For example, the ECM generator 1030 can be provided the indication to accept the subset of the actions included in the energy conservation protocols.

The ECM generator 1030 can, using the indication provided by the communication component 1020, implement, establish, modify, update, change or otherwise proceed with the energy conservation protocols. For example, the indication can be an indication to accept a subset of the actions included in the energy conservation protocols and the ECM generator 1030 can use the indication to update the energy conservation protocols. The ECM generator 1030 can update the energy conservation protocols to reflect the subset of the actions included in the indication. For example, the ECM generator 1030 can update the energy conservation protocols to include the subset of the actions that were included in the indication and remove, from the energy conservation protocols, the actions not included in the indication. The ECM generator 1030 can, in response to receiving the indication provided by the communication component 1020 and/or in response to updating the energy conservation protocols, provide, establish the energy conservation protocols. The ECM generator 1030 can establish the energy conservation protocols by providing, to the database 1040, the energy conservation protocols and the database 1040 can store, maintain or otherwise hold the energy conservation protocols. The ECM generator 1030 can provide, to the communication component 1020, the sustainability component 1025 and the controller 1035, an indication that the energy conservation protocols have been established.

In some embodiments, the controller 1035 can, in response to receiving the indication that the energy conservation protocols have been established, implement the energy conservation protocols and/or the actions included in the energy conservation protocols. The controller 1035 can control and/or operate at least one piece of building equipment. For example, the controller 1035 can provide a signal to a HVAC system that pertains to a building (e.g., the building 10) that causes the ventilation rate of the HVAC system to be adjusted. As described herein the energy conservation protocols can include control strategies and the controller 1035 can, using the control strategies, control the pieces of building equipment. For example, the control strategy can be have a lighting system produce a certain amount of light at a particular time of day and the controller 1035 can provide a signal, to the lighting system, that causes the certain amount of light to be produced.

The communication component 1020 can, in response to receiving the indication that the energy conservation protocols have been established, provide, to the data source 1010 and/or the user device 318, the indication that the energy conservation protocols have been established. The communication component 1020 providing, to the user device 318, the indication that the energy conservation protocols have been established can cause the user device 318 to display a user interface that includes a notice that the energy conservation protocols have been established.

In some embodiments, the sustainability component 1025 can, in response to receiving the indication that the energy conservation protocols have been established, monitor and/or implement the energy conservation protocols. For example, the sustainability component 1025 can determine that the energy conservation protocols include a FIM and the sustainability component 1025 can determine, using the FIM, a person, entity or object that can implement and/or is impacted by the FIM. For example, the FIM can be replacing a boiler and the sustainability component 1025 can determine the location of the boiler (e.g., the location of the boiler in the building), a person or company that can replace the boiler and/or employees that can be impacted by the boiler being replaced.

In some embodiments, the sustainability component 1025 can, in response to determining the person, entity or object, implement the energy conservation protocols. The sustainability component 1025 can implement the energy conservation protocols by providing, to the company that can perform the FIM, a work order request and the sustainability component 1025 can schedule when the FIM will be executed. For example, the sustainability component 1025 can determine a device (e.g., the user device 318) that is associated with the company that can perform the FIM and the sustainability component 1025 can provide, to the user device 318, a signal that causes the user device 318 to display a work order request. The work order request can include what piece of equipment will be replaced and an identifier (e.g., a serial number) of the piece of equipment that will replace the previous piece. The sustainability component 1025 can provide, in the work order request, a time (e.g., Monday at 7:00) where the FIM can be performed.

The ECMs can include at least one ECM saving category, and the ECM saving categories can include at least one of projects, actions, steps and/or measures that can be implemented. The ECM saving categories can include lighting savings, air handler savings, boiler/heat savings, chiller savings, pumping savings, zone savings, and floor zones. The example ECM saving categories are not limiting in any way and there can be several other ECM saving categories. The energy conservations protocols, the ECM saving categories and/or the ECMs can be stored, located, and/or otherwise maintained in the database 1040.

The lighting savings category actions can include adjusting lighting operation hours, adjusting lighting operation parameters and/or setpoints, adjusting an amount of lights activated, and/or among other possible actions. The air handler savings category actions can include initiating a night setback and shutdown protocol (e.g., the air handler runtime frequency is setback at night), developing an optimum start time for the air handler, detecting low leakage dampers (e.g., air is escaping the ventilation resulting in air handler runtime increasing) and correcting the low leakage dampers, reduce an amount of ventilation, install high efficiency motors, install high efficiency Air Handler Unit (AHU) motors, install Variable Frequency Drives (VFDs) on Variable Air Volume (VAV) systems, perform a supply air reset, perform a cold deck reset, perform a hot deck reset, convert Multi zone (MZ)/ Dual Duct (DD) to VAV's, and/or install an air-to-air economizer. The boiler/heat savings category actions can include initiating and/or performing a hot water reset, initiating and/or performing a steam reset, initiating and/or performing boiler replacement, initiating and/or performing a boiler maintenance routine, replacing burners, updating controls, initiating and/or performing an electric to heat pump conversion, and/or among other possible boiler/heat actions. The chiller savings category actions can include initiating and/or performing a chilled water reset, initiating and/or performing a condenser water rest, replacing a chiller, and/or among other possible chiller actions. The pumping savings category actions can include installing and/or using a VSD chilled water pump, installing and/or using a VSD heating water pump, installing and/or using high efficiency CHW/CW pump motors, installing and/or using high efficiency HW pump motors, and/or among other possible pumping actions.

The database 1040 can store, keep, hold and/or otherwise maintain the different types of data described herein. For example, the database 1040 can store the operational data 616 and the utility data 608. The database 1040 can also store data that pertains to the building 10. The data that pertains to the building 10 can include at least one of operational metrics, building metrics, occupancy metrics, equipment inventory, maintenance records, building improvement records, building upkeep information, and/or among other possible data that can pertain to the building 10. The database 1040 can also store weather data, weather predictions, weather impact information, and/or among other possible data pertaining to the weather around the building 10. The database 1040 can also store data pertaining to equipment standards, equipment protocols, equipment efficiency metrics, equipment energy consumption, equipment performance metrics, and/or among other possible equipment information. The database 1040 can also store data pertaining to cost associated with equipment retrofits, equipment maintenance, and/or among other possible cost associated with equipment.

The data stored by the database 1040 can be at least one of building specific data (e.g., the entire building), floor specific data (e.g., the building is divided into a number of floors in the building and the data is separated based on the respective floors), zone specific data (e.g., a floor is divided into a number of zones and the data is separated based on the respective zones), room specific data (e.g., a zone is divided into a number of rooms and the data is separated based on the respective rooms), equipment category specific data (e.g., chiller data is separated from air handler data, lighting data is separated from boiler data, etc.), and/or equipment specific data (e.g., chiller data is separated to each respective unit that contributed to the chiller data, lighting data is separated to each respective unit that contributed to the lighting data, etc.).

The data pertaining to the operational metrics can be and/or include at least one of operational times for pieces of equipment, number of cycles performed by the pieces of equipment, equipment setpoints, a number of heating weeks, a number of cooling weeks, and/or among other possible operational data. For example, the data pertaining to the operational metrics can include that the HVAC systems runs for 50 hours each week, that the interior lights of the building 10 are on for 60 hours each week, and that the average heating temperature is 72 degrees Fahrenheit. The data pertaining to the building metrics can be add/or include at least one of total square footage of the building, number of windows in the building, number of floors in the building, a floor-to-floor height of the building, an energy transfer rate of the building, and/or among other possible building metrics data. For example, the data pertaining to the building metrics can include that the building is 100,000 square feet and that the windows have an average shading coefficient of 0.8.

The data pertaining to the occupancy metrics of the building can be and/or include at least one of a number of hours that the building is occupied, a number of days that the building is occupied, a number of occupants in the building, and/or among other possible occupancy metrics. For example, the data pertaining to the occupancy metrics can include that the building is occupied for 65 hours/week and that the building is occupied six days/week.

The data pertaining to the equipment inventory can be and/or include at least one of a number of chillers, a number of lighting units, a number of heating of systems, and/or among other possible equipment inventory data. The data pertaining to the maintenance records can be and/or include at least one of dates, times, frequency and/or actions that were taken to performance maintenance on the building and/or equipment of the building. For example, the data pertaining to the maintenance records can include that the air filters are replaced every three months

The data pertaining to the building improvement records can be and/or include at least one of equipment replacements, equipment additions, equipment retrofits, building remod-eling, building repair and/or among other possible building improvement records. For example, the building improvement records can include that the windows of the building were recently replaced.

The data pertaining to weather predictions and/or weather impact information can be and/or include an average temperature for each day of the year, an average number of sunlight for each day of the year, an average air quality for each day of the year, a predicted temperature for a given day of the year, a predicted number of sunlight for a given day of the year, a predicted air quality for a given day of the year, and/or among other possible weather data. For example, the weather data can include an average outside air temperature during heating weeks and an average number of sunlight during cooling weeks.

The data pertaining to equipment protocols, equipment efficiency metrics, equipment energy consumption, and/or equipment performance metrics can be and/or include at least one of a shading factor for windows, an insulation rating for windows, a wattage rating for lighting units, a efficiency rating for equipment motors, and/or among other possible equipment metric information. For example, the equipment efficiency metrics can include that a first type of light fixture has a wattage rating of 200 watts and that a second type of light fixture has a wattage ratting of 100 watts.

The ECM generator 1030 can generate the energy conservations protocols by retrieving, from the database 1040, operational data pertaining to at least one piece of building equipment of the plurality of pieces of building equipment. For example, the ECM generator 1030 can retrieve operational data pertaining to boilers. The ECM generator 1030 can then determine, using the operational data pertaining to the at least one piece of building equipment of the plurality of pieces of building equipment, a role in the baseline sustainability performance for the at least one piece of building equipment of the plurality of pieces of building equipment. For example, the ECM generator 1030 can determine an amount of carbon emissions contributed to the at least one piece of building equipment. The ECM generator 1030 can then retrieve, from the database 1040, predetermined operational metrics pertaining to the at least one piece of building equipment. For example, the predetermined operational metrics can include an amount of runtime cycles (e.g., how many times the pieces of equipment execute a run cycle). The ECM generator 1030 can then detect, using the predetermined operational metrics pertaining to the at least one piece of building equipment and the operational data pertaining to the at least one piece of building equipment, a difference between the predetermined operational metrics and the operational data. For example, the ECM generator 1030 can determine a difference between the number of runtime cycles for the boiler that was included in the operational data and the number of runtime cycles for boilers that was included in the predetermined operational metrics. The ECM generator 1030 can then generate, responsive to detecting the difference between the predetermined operational metrics and the operational data, a set of actions that adjust the role in the baseline sustainability performance for the at least one piece of building equipment by decreasing the difference between the predetermined operational metrics and the operational data. For example, the ECM generator 1030 can generate a maintenance schedule (e.g., a set of actions) for the boiler and the maintenance schedule can result in the number of runtime cycles for the boiler decreasing. The decreasing in the number of runtime cycles for the boiling can decrease the role of the boiler in the baseline sustainability performance (e.g., the boiler running less can result in a reduction in carbon emissions attributed to the boiler).

### Building Energy Platform

The following description will make reference to a variety of user interfaces associated with a building energy platform. In some instances, the various user interfaces can be accessed via a homepage of an application (e.g., one of the enterprise control applications 226, the user portal 802). It should be appreciated that, while various features are depicted in the figures and described below, in other examples, the user interfaces and/or the building energy platform more generally may include additional or alternative features, as desired for a given application.

In some instances, the building energy platform utilizes high-level information pertaining to a large number of buildings of an enterprise (e.g., addresses, square footage, building use types) paired with climate zone information, energy usage information, and energy cost information for each buildings location to quickly provide a variety of user interfaces to a user configured to allow the user to easily assess the enterprise at large to identify buildings that would benefit the most (e.g., have the highest potential cost and/or emissions savings) from various facility improvement measures (FIMs) or other sustainability projects.

The building energy platform provides a variety of improvements to the technical field of enterprise monitoring systems. For example, traditional enterprise monitoring systems have required large quantities of specific building energy usage, emissions, and/or energy cost information to provide meaningful enterprise-wide insights. By utilizing basic information associated with each building (e.g., a location, a building size, and a building type), the building energy platform is able to generate a plurality of insights pertaining to the buildings and the enterprise at large by pulling in climate zone information associated with the building locations, average energy usage and emission levels associated with similarly sized buildings of similar types in similar climates, and location-based energy costs for each building location. As such, the building energy platform provides useful sustainability insights without the need for building-specific energy and emissions information pertaining to each building of the enterprise.

Additionally, the building energy platform allows for insight calibration using more detailed information (e.g., actual utility and/or energy usage data) pertaining to each identified building location or set of building locations. That is, once a building location or set of building locations is identified for a potential project based on the initial enterprise-wide insights generated using the basic information discussed above, more detailed information for the identified or selected building location or set of building locations may be obtained and utilized to generate more accurate insights specific to the identified building location or set of building locations.

Finally, the building energy platform allows for insight verification using project-specific details (e.g., project cost estimates received from contractors, financing information obtained from and/or otherwise indicated by project engineers, project implementation status, etc.) to view final cost estimates, final emissions reduction estimates, final energy usage reduction estimates, observed emissions reduction, observed energy usage reduction, observed cost savings, etc.

Accordingly, the building energy platform allows for a user to quickly identify potential buildings within an enterprise that may be prime targets for the implementation of various FIMs to reduce energy usage and/or emissions level using basic information, thereby reducing computational burdens associated with collecting and storing actual emissions and energy usage data for every building throughout an enterprise, while still allowing for valuable insights to be obtained regarding a building or sets of buildings for potential FIMs. The building energy platform then allows for the user to calibrate various initial insights for the identified building or sets of buildings by incorporating actual energy usage and/or emissions data for the identified building or sets of buildings to provide more accurate estimates regarding the potential effect of various potential FIMs. The building energy platform then allows for the user to verify and monitor the estimates and/or actual effect of the various FIMs before, as, and after they are implemented.

In some instances, the building energy platform can further be communicably coupled with various building management systems associated with the buildings of the enterprise to automatically (or at the command of a user) implement various FIMs, sustainability projects, or other related measures based on the buildings with the highest potential cost and/or emissions savings.

Referring now to FIG. 11, a user interface 1100 is displayed. The user interface 1100 can be shown, displayed, or otherwise provided by a device (e.g., the user device 318). In some instances, the user interface 1100 is generated as part of the user portal 802. The user interface 1100 can include a site mapping window 1105. The site mapping window 1105 can include a map having one or more site indicators arranged thereon. In some instances, the site indicators each indicate a particular building location of an enterprise within the map. Additionally, the site indicators can be visually coded (e.g., color-coded) based on a particular climate zone of their respective buildings.

For example, in some instances, for each building of an enterprise, a variety of building information is received by the system (e.g., the system 300) and stored within a database (e.g., the data storage 324). For each building, the building information can include a unique identifier identifying the building, a physical address of the building, a size of the building (e.g., an actual square footage or an estimated square footage), and a building type (e.g., commercial, data center, industrial, office/mixed use, parking garage, vacant, warehouse). In some instances, for each building, the system (e.g., the sustainability advisor 320) is configured to determine, based on the physical address of the building, a latitude and longitude for the building. The system can then pull climate zone information (e.g., a climate zone categorization) based on the location of the building that is utilized to visually code (e.g., color-code) the corresponding site indicators displayed within the site mapping window 1105.

For example, in some instances, the climate zone information is pulled from an external system or database (e.g., ANSI/ASHRAE Standard 169-2020 Climatic Data for Building Data Standards) based on the closest geographical climate zone information available. In some instances, the climate zone information can include a variety of climate data, such as average temperatures, enthalpies, weather patterns, humidity ratios, wind conditions, solar irradiation, etc., for the building's location for a given time period (e.g., annually, on a particular day, over a particular season).

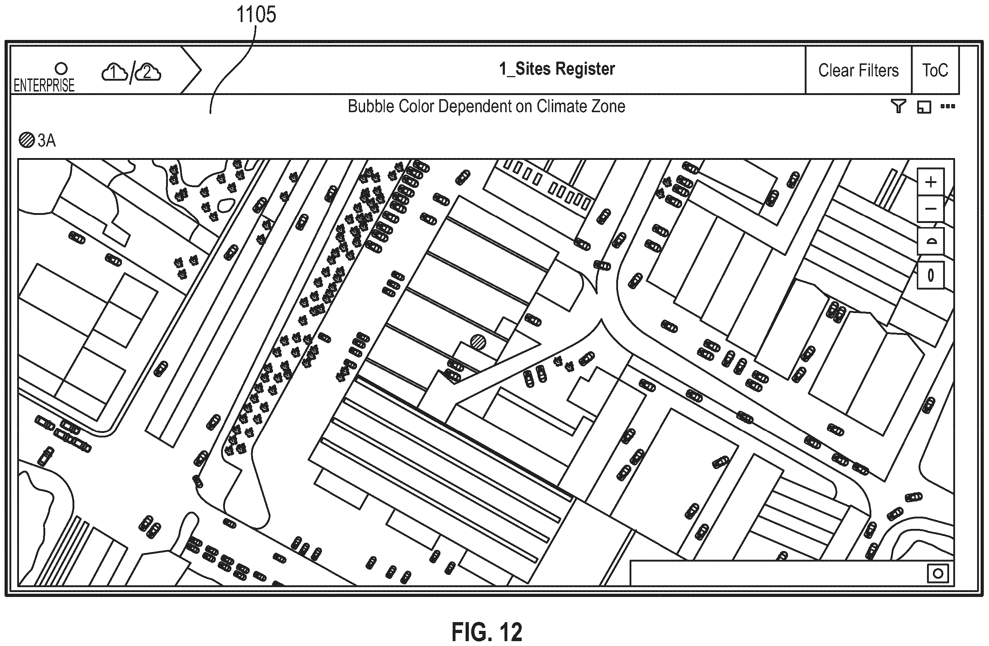

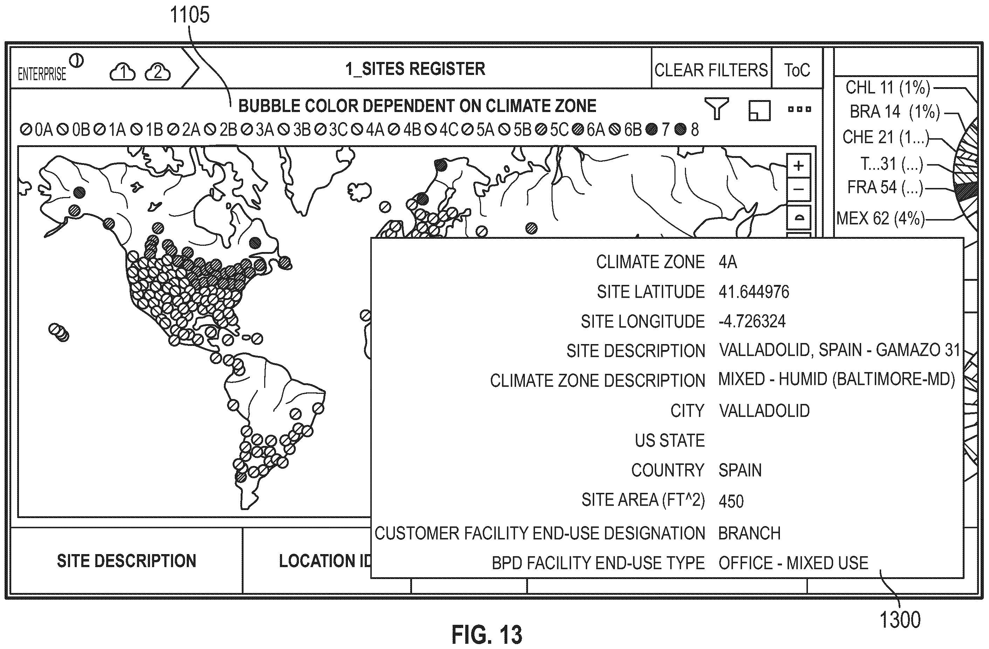

In some instances, the map of the site mapping window 1105 is interactive. For example, the user can click or otherwise select any of the site indicators to view the specific building associated with the site indicator (e.g., as shown in FIG. 12). Further, in some instances, the user can hover over (e.g., with a computer mouse or other interactive selection element) a particular site indicator to view a pop-up window (e.g., pop-up window 1300 shown in FIG. 13). The pop-up window can include various information pertaining to the building, such as a climate zone code, a climate zone description, latitude and longitude coordinates, a site description, a city, a state (if applicable), a country, a square footage, a building type (e.g., office, warehouse, commercial), a building usage category (e.g., a branch).

Accordingly, by visually coding each building location, the site mapping window 1105 provides a convenient visual comparison of buildings across diverse climate regions. In some instances, by obtaining and categorizing each building based on its climate zone, buildings in similar climates may be easily compared. Further, average information (e.g., average energy usage, average emissions) about a given building type (e.g., an office building) in a given climate zone category within a country or location where the average information is readily available can be similarly applied to buildings of that building type in the same climate zone category within other countries or locations where the average information is not readily available. As an example, data centers (e.g., one building type) may have higher energy usage and/or emissions compared to office buildings (e.g., another building type). As another example, a building in India (e.g., a generally hot climate) may have higher electricity usage (e.g., used for air conditioning) and lower natural gas usage (e.g., used for heating) as compared to a building in Canada.

The user interface 1100 can further include a plurality of informational charts 1110. The informational charts 1110 can include visual representations of a variety of information pertaining to a set of buildings for which the customer is analyzing. For example, the information charts can include pie charts depicting a count of sites by country, a count of sites by climate zone, total site area (e.g., square feet) by country, a total site area by climate zone, and/or a variety of alternative information charts, as desired for a given application.

The user interface 1100 can further include a site information table 1115. The site information table 1115 can include, for each site, a variety of information, such as a site description, a unique building identifier, a climate zone code, a climate zone description, a street address, a city, a state (if applicable), a country, a square footage, a building type (e.g., office, warehouse, commercial), a building usage category (e.g., a branch), and/or any other information described herein pertaining to each building, as desired for a given application.

The user interface 1100 can further include a filter toolbar 1120. The filter toolbar 1120 can include a plurality of filters the user can utilize to filter the number of buildings used to populate the information for each of the site mapping window 1105, the informational charts 1110, and the site information table 1115. For example, the filters can allow for the user to filter the buildings by unique building identifier, country, city, climate zone, square footage (e.g., within defined size windows), building type, building usage category, etc.

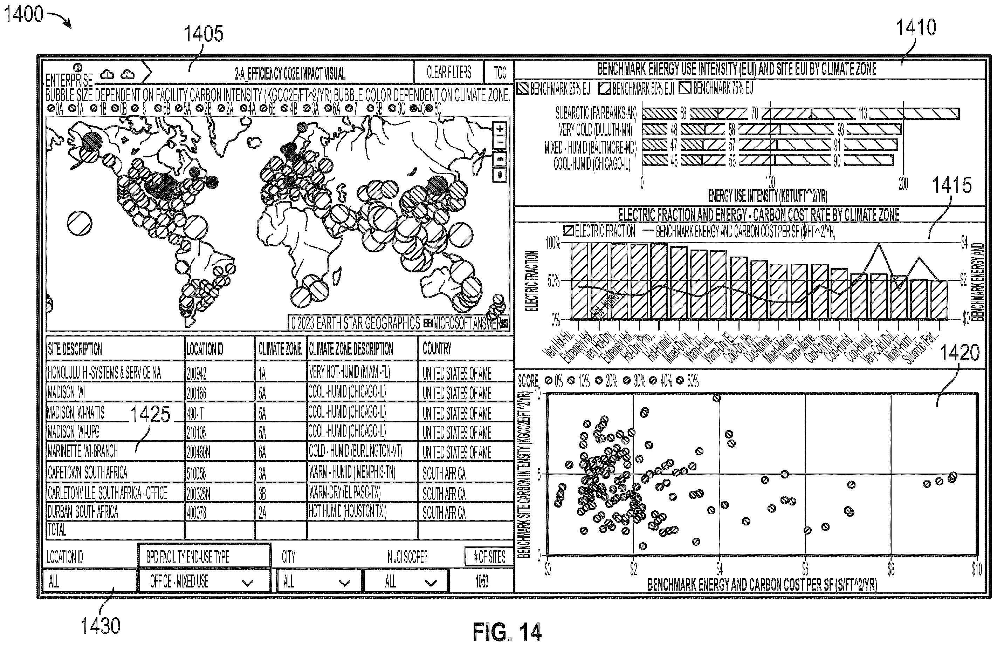

Referring now to FIG. 14, a user interface 1400 is displayed. The user interface 1400 can be shown, displayed, or otherwise provided by a device (e.g., the user device 318). In some instances, the user interface 1400 is generated as part of the user portal 802. The user interface 1400 can include a site mapping window 1405. The site mapping window 1405 can similarly include a map having one or more site indicators arranged thereon indicating particular building locations of the enterprise. The site indicators can also similarly be visually coded based on the particular climate zone of their respective buildings. However, in some instances, the site indicators of the site mapping window 1405 are further sized depending on the carbon intensity (e.g., in kilograms of CO2 emitted per square foot per year) of the corresponding building.

For example, in some instances, the system (e.g., the system 300) collects and stores energy usage data for buildings in a variety of climate zones. In some instances, the energy usage data for each climate zone can be collected internally from one or more buildings associated with or otherwise monitored by the system. In other instances, the energy usage data can be pulled from one or more external computing systems or databases (e.g., provided by the Department of Energy or a similar foreign energy tracking entity) for each climate zone. In some instances, estimated energy information (e.g., energy usage data) for a building of a given building type and location may be generated by the system (e.g., the system 300) based on other buildings having similar building sizes, similar building use types, and/or similar climate information.

In any case, based on the energy usage data, the system (e.g., the sustainability advisor 320) can determine an expected electric fraction (e.g., electricity to natural gas or other fuel usage) that is or will be utilized by the building. The electric fraction is generally significantly affected by the portion of the year that each particular building location has to heat or cool the building. For example, in a warm region, where the building largely needs to cool the building, the electric fraction is generally more skewed toward electricity. Conversely, in a cold region, where the building needs to heat the building in the winter and cool the building in the summer, the electric fraction is generally closer to 50% (e.g., half electricity and half natural gas or other fuel).

Additionally, based on the energy usage data, the system (e.g., the sustainability advisor 320) can determine a benchmark energy use intensity (EUI) for each climate zone and/or for each building type within each climate zone. In some instances, the EUI is determined in thousands of British thermal units (BTUs) per square foot per year. In some instances, the benchmark EUIs are further provided at different benchmark quartile levels (e.g., 25^{th} percentile, 50^{th} percentile, 75^{th} percentile) of the expected energy uses for each climate zone and/or for each building type within each climate zone.

The system can then determine an expected carbon intensity (e.g., carbon emissions per square foot per year) based on the electric fraction, the EUI, and local electrical and fossil fuel emissions information for each building location. Accordingly, once the expected carbon intensity has been determined for each building, the system can then size each corresponding site indicator according to its respective carbon intensity, as shown in FIG. 14.

The user interface 1400 can further include a benchmark EUI bar chart 1410. The benchmark EUI bar chart 1410 can depict corresponding EUI bars (e.g., in thousands of BTUs per square foot per year) for each climate zone and/or for each building type within each climate zone. The user interface 1400 can further include an electric fraction and cost rate chart 1415. The electric fraction and cost rate chart 1415 can include an electric fraction bar chart for each climate zone and/or for each building type within each climate zone overlaid with a benchmark energy and carbon cost per square foot line graph of the corresponding climate zones and/or building types within each climate zone.

For example, the system can determine the electric fractions as discussed above. Further, the system can similarly pull energy cost information for electric energy and natural gas or other fuel energy (as well as any applicable carbon taxes) from one or more external computing systems or databases (e.g., local energy providing entities, national energy information provides, the Energy Information Administration, the Department of Energy, or other foreign entities providing energy cost information) for each particular building location. Accordingly, the system can determine the benchmark energy and carbon cost per foot based on the EUI (e.g., the 50^{th} percentile EUI), the electric fraction, and the corresponding local electricity and natural gas or other fuel cost information, as well as any applicable carbon tax.

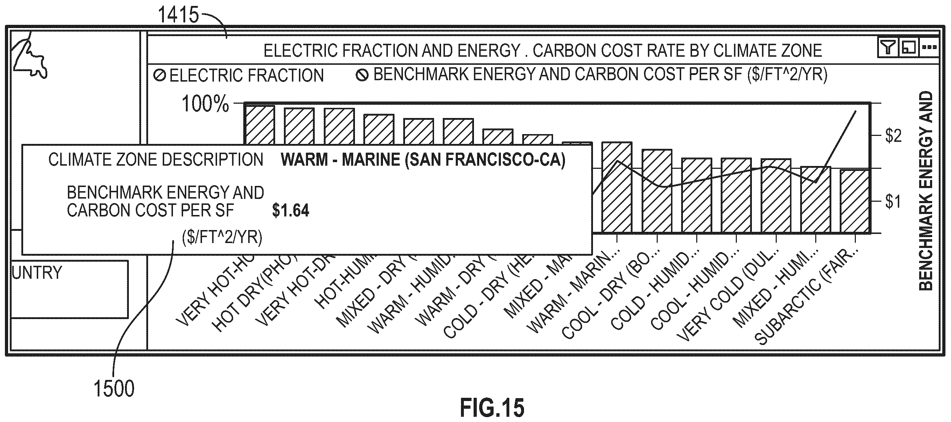

Similar to the pop-up window 1300 shown in FIG. 13, the user can hover over a particular climate zone to view a pop-up window (e.g., pop-up window 1500 shown in FIG. 15). The pop-up window can include various information pertaining to the corresponding climate zone, such as a climate zone description, the electric fraction for the climate zone, the benchmark energy and carbon cost per square foot, etc.

The user interface 1400 can further include a scatterplot 1420. The scatterplot 1420 can include points for each building based on its carbon intensity (e.g., kilograms of carbon emissions per square foot per year) against its energy costs (e.g., dollars per square foot per year). Accordingly, as shown in FIG. 14, the further toward the top and right are the buildings that use the highest amount of energy per square foot and have the highest costs of energy based on their climate zone. As such, these buildings are generally the most ripe for energy savings projects that will be impactful from an energy use and cost-savings standpoint.

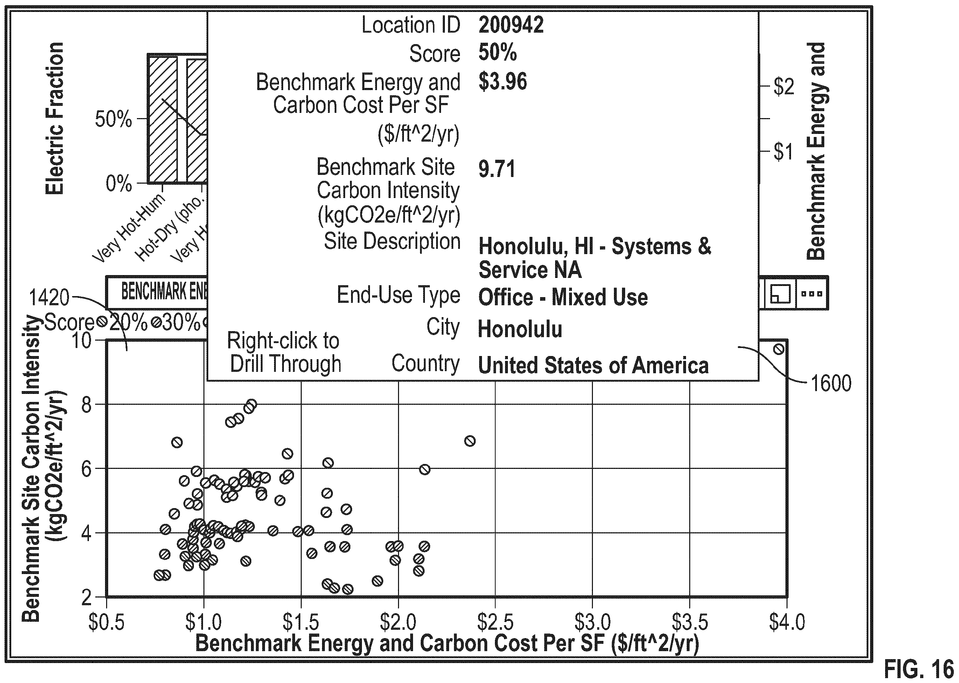

Similar to the pop-up window 1300 shown in FIG. 13 and the pop-up window 1500 shown in FIG. 15, the user can hover over a particular scatterplot point to view a pop-up window (e.g., pop-up window 1600 shown in FIG. 16). The pop-up window can include various information pertaining to the corresponding building, such as the benchmark energy and carbon cost per square foot, the benchmark site carbon intensity, etc.

The user interface 1400 can further include a site information table 1425 and a filter toolbar 1430. The site information table 1425 is substantially similar to the site information table 1115 discussed above, and may include a variety of energy- and emissions-related information. The filter toolbar 1430 is substantially similar to the filter toolbar 1120 discussed above.

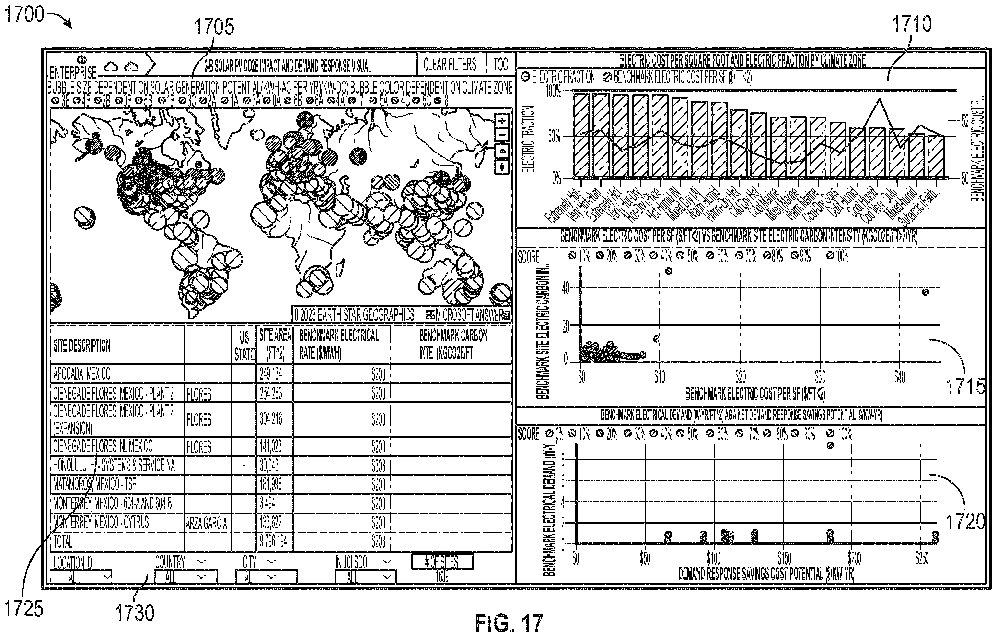

Referring now to FIG. 17, a user interface 1700 is displayed. The user interface 1700 can be shown, displayed, or otherwise provided by a device (e.g., the user device 318). In some instances, the user interface 1700 is generated as part of the user portal 802. The user interface 1700 can include a site mapping window 1705. The site mapping window 1705 can similarly include a map having one or more site indicators arranged thereon indicating particular building locations of the enterprise. The site indicators can also similarly be visually coded based on the particular climate zone of their respective buildings. However, in some instances, the site indicators of the site mapping window 1705 are further sized depending on a solar generation potential of the corresponding building based on the climate zone.

In some instances, the system (e.g., the system 300) similarly collects and stores solar generation potential for each of the various climate zones discussed above. For example, the energy usage data can similarly be pulled from one or more external computing systems or databases (e.g., provided by the Department of Energy or a similar foreign energy tracking entity) for each climate zone. Accordingly, the system can then use the obtained solar generation potentials for each building to size the corresponding site indicators, as shown in FIG. 17.

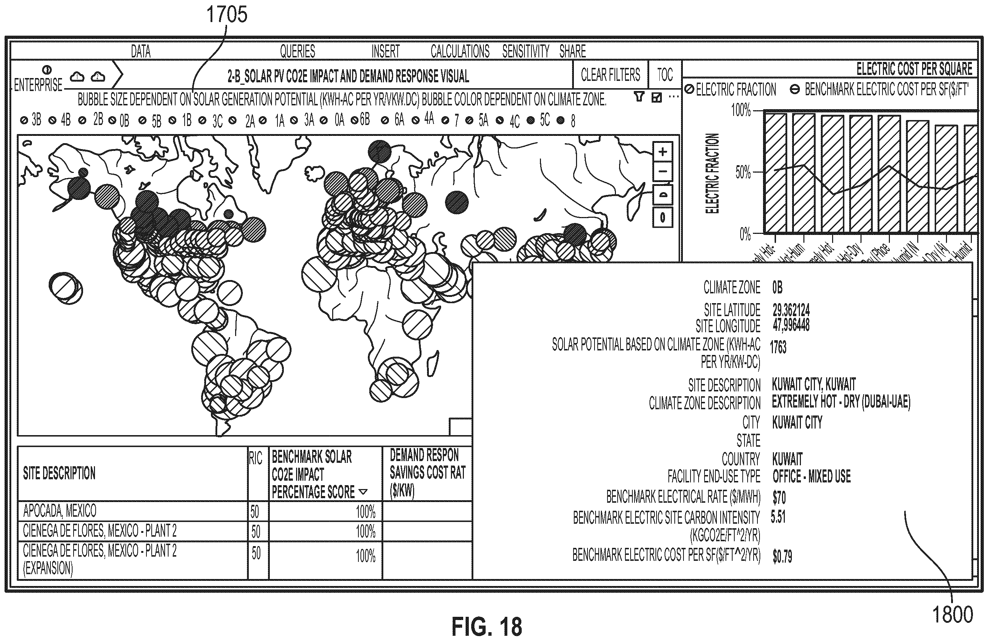

Similar to the pop-up windows discussed above, the user can hover over a particular site indicator to view a pop-up window (e.g., pop-up window 1800 shown in FIG. 18). The pop-up window can include various solar and electricity information pertaining to the corresponding building, such as the solar generation potential of the corresponding building (e.g., in kWh - AC per year over kW - DC), benchmark electrical rates for the corresponding building (e.g., in dollars per MWh), benchmark electric cost per square foot, etc.

The user interface 1700 can further include an electric fraction and cost rate chart 1710. The electric fraction and cost rate chart 1710 is substantially similar to the electric fraction and cost rate chart 1415 discussed above. The user interface 1700 can further include a first scatterplot 1715 and a second scatterplot 1720. The first scatterplot 1715 can include points for each building based on benchmark electric cost per square foot against its electric carbon intensity (e.g., the portion of the carbon intensity attributable to electricity). The second scatterplot 1720 can include points for each building based on benchmark electrical demand (e.g., Watt years per square foot) against response savings potential (e.g., dollars per kilowatt years).

Accordingly, a user can utilize the respective sizing of the site indicators, as well as the electric fraction and cost rate chart 1710 and the scatterplots 1715, 1720 to identify buildings that would benefit the most from the installation of solar power harnessing systems (e.g., solar panels). That is, a building that uses a high amount of electricity in a location where electricity costs are relatively high and that has a high solar generation potential based on the climate zone would be a good candidate for the installation of solar power harnessing systems. Conversely, a building that does not use a high amount of electricity and/or that is situated in a location where electricity costs are relatively low and/or that has a low solar generation potential based on the climate zone would be a bad candidate for the installation of solar power harnessing systems.

The user interface 1700 can further include a site information table 1725 and a filter toolbar 1730. The site information table 1725 is substantially similar to the site information table 1115 discussed above, and may include a variety of solar and electricity information. The filter toolbar 1730 is substantially similar to the filter toolbar 1120 discussed above.

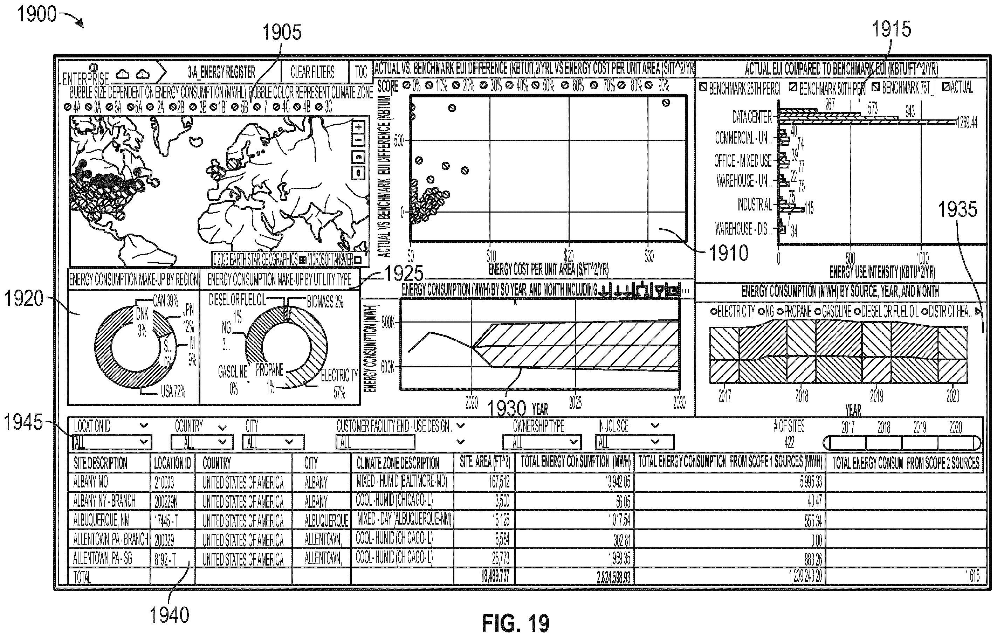

Referring now to FIG. 19, a user interface 1900 is displayed. The user interface 1900 can be shown, displayed, or otherwise provided by a device (e.g., the user device 318). In some instances, the user interface 1900 is generated as part of the user portal 802. The user interface 1900 can include a site mapping window 1905. The site mapping window 1905 can similarly include a map having one or more site indicators arranged thereon indicating particular building locations of the enterprise. The site indicators can also similarly be visually coded based on the particular climate zone of their respective buildings. However, in some instances, the site indicators of the site mapping window 1905 are further sized depending on an actual energy consumption of the corresponding building.

The user interface 1900 can further include a scatterplot 1910 including points for each building based on a difference between actual and benchmark EUIs for the building against its energy cost per unit area. The user interface 1900 can further include a bar chart 1915 comparing actual EUI against various benchmark EUIs for a variety of building types. The user interface 1900 can further include a first pie chart 1920 and a second pie chart 1925. The first pie chart 1920 can depict energy consumption makeup by region and the second pie chart 1925 can depict energy consumption make-up by utility type (e.g., diesel or fuel oil, biomass, electricity, gasoline). The user interface 1900 can further include a total energy consumption and forecasting line graph 1930 and an energy consumption by source graph 1935 showing actual energy consumption over time.

The user interface 1900 can further include a site information table 1940 and a filter toolbar 1945. The site information table 1940 is substantially similar to the site information table 1115 discussed above, and may include a variety of actual energy consumption information. The filter toolbar 1945 is substantially similar to the filter toolbar 1120 discussed above.

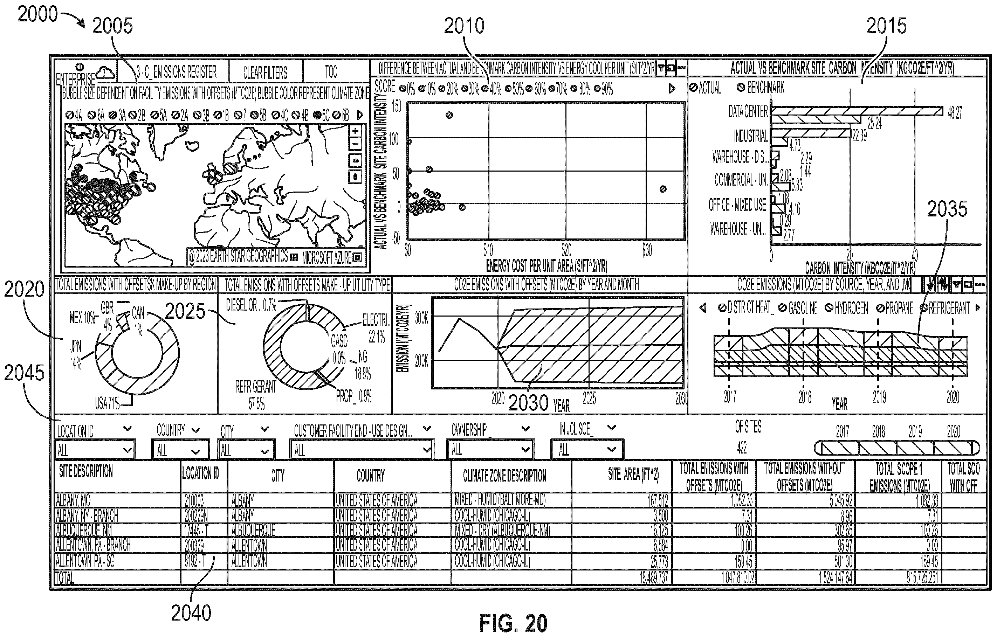

Referring now to FIG. 20, a user interface 2000 is displayed. The user interface 2000 can be shown, displayed, or otherwise provided by a device (e.g., the user device 318). In some instances, the user interface 2000 is generated as part of the user portal 802. The user interface 2000 can include a site mapping window 2005. The site mapping window 2005 can similarly include a map having one or more site indicators arranged thereon indicating particular building locations of the enterprise. The site indicators can also similarly be visually coded based on the particular climate zone of their respective buildings. However, in some instances, the site indicators of the site mapping window 2005 are further sized depending on an actual emissions (e.g., with or without offsets) of the corresponding building.

The user interface 2000 can further include a scatterplot 2010 including points for each building based on a difference between actual and benchmark carbon intensities for the building against its energy cost per unit area. The user interface 2000 can further include a bar chart 2015 comparing actual and benchmark carbon intensities for a variety of building types. The user interface 2000 can further include a first pie chart 2020 and a second pie chart 2025. The first pie chart 2020 can depict total emissions (e.g., with or without offsets) by region and the second pie chart 2025 can depict total emissions by utility type (e.g., refrigerant, diesel or fuel oil, propane, electricity, gasoline). The user interface 2000 can further include a total emissions and forecasting line graph 2030 and an emissions by source graph 2035 showing actual emissions over time.

The user interface 2000 can further include a site information table 2040 and a filter toolbar 2045. The site information table 2040 is substantially similar to the site information table 1115 discussed above, and may include a variety of actual emissions information. The filter toolbar 2045 is substantially similar to the filter toolbar 1120 discussed above.

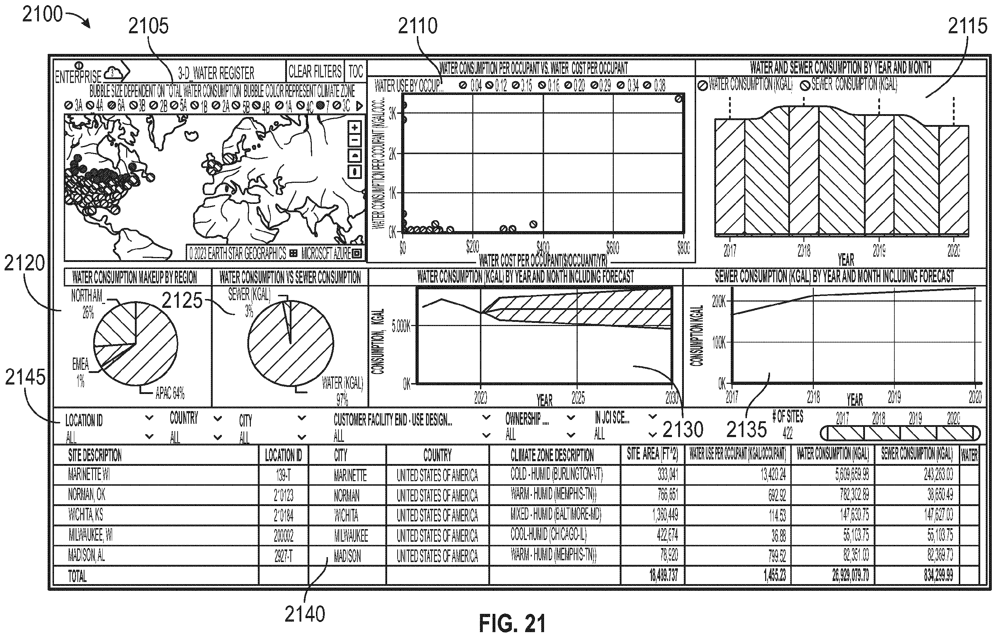

Referring now to FIG. 21, a user interface 2100 is displayed. The user interface 2100 can be shown, displayed, or otherwise provided by a device (e.g., the user device 318). In some instances, the user interface 2100 is generated as part of the user portal 802. The user interface 2100 can include a site mapping window 2105. The site mapping window 2105 can similarly include a map having one or more site indicators arranged thereon indicating particular building locations of the enterprise. The site indicators can also similarly be visually coded based on the particular climate zone of their respective buildings. However, in some instances, the site indicators of the site mapping window 2105 are further sized depending on an actual total water consumption of the corresponding building.

The user interface 2100 can further include a scatterplot 2110 including points for each building based on a water consumption per occupant against its water cost per occupant. The user interface 2100 can further include a water and sewer consumption graph 2115 comparing water consumption over time to sewer consumption over time. The user interface 2100 can further include a first pie chart 2120 and a second pie chart 2125. The first pie chart 2120 can depict total water consumption by region and the second pie chart 2125 can depict water consumption versus sewer consumption. The user interface 2100 can further include a total water consumption and forecasting line graph 2130 and a total sewer consumption and forecasting line graph 2135 showing water consumption and sewer consumption over time, respectively.

The user interface 2100 can further include a site information table 2140 and a filter toolbar 2145. The site information table 2140 is substantially similar to the site information table 1115 discussed above, and may include a variety of actual water and sewer information. The filter toolbar 2145 is substantially similar to the filter toolbar 1120 discussed above.

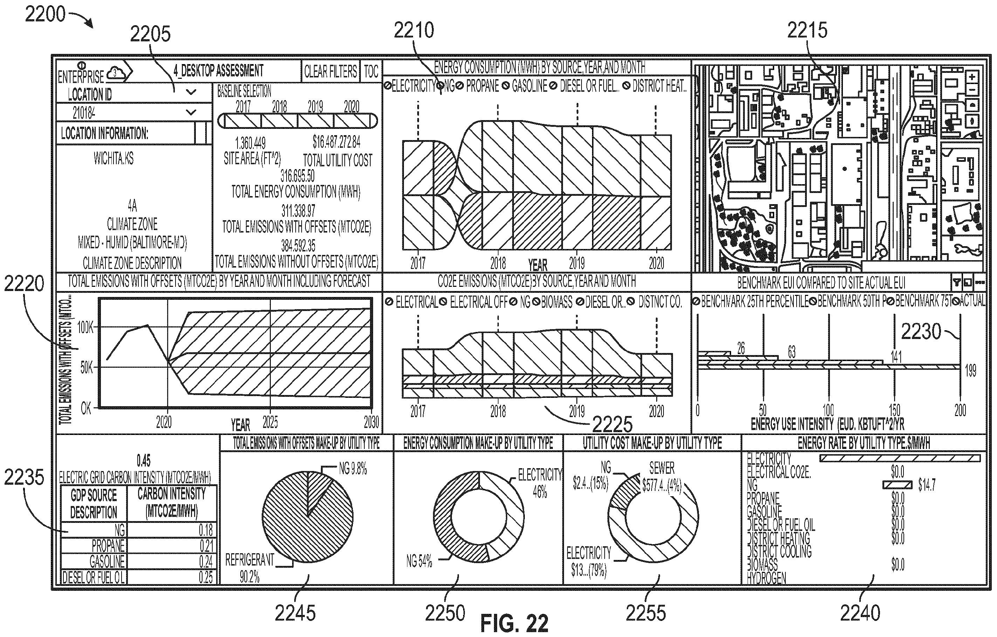

Referring now to FIG. 22, a user interface 2200 is displayed. The user interface 2200 can be shown, displayed, or otherwise provided by a device (e.g., the user device 318). In some instances, the user interface 2200 is generated as part of the user portal 802. The user interface 2200 can include information specific to a particular building location. The user interface 2200 can include a building information window 2205 including a variety of information pertaining to the building, such as, a unique identifier, a location, a climate zone, a square footage, a utility cost for a given period of time, an energy consumption for a given period of time, and emissions (e.g., with or without offsets) for a given period of time.

The user interface 2200 can further include an energy consumption graph 2210 depicting energy consumption by type over time. The user interface 2200 can further include a site mapping window 2215 depicting a map view of the building. The user interface 2200 can further include a total emissions line graph 2220 depicting total emissions (e.g., with or without offsets) over time. The user interface 2200 can further include an emissions graph 2225 depicting CO2e emissions by source over time. The user interface 2200 can further include a bar chart 2230 depicting an actual EUI and benchmark EUIs for the building. The user interface 2200 can further include an electric gride carbon intensity table 2235 and an energy rate by utility table 2240. The user interface 2200 can further include a first pie chart 2245, a second pie chart 2250, and a third pie chart 2255. The first pie chart 2245 can depict total emissions for the business by utility type. The second pie chart 2250 can depict energy consumption by utility type. The third pie chart 2255 can depict utility cost by utility type.

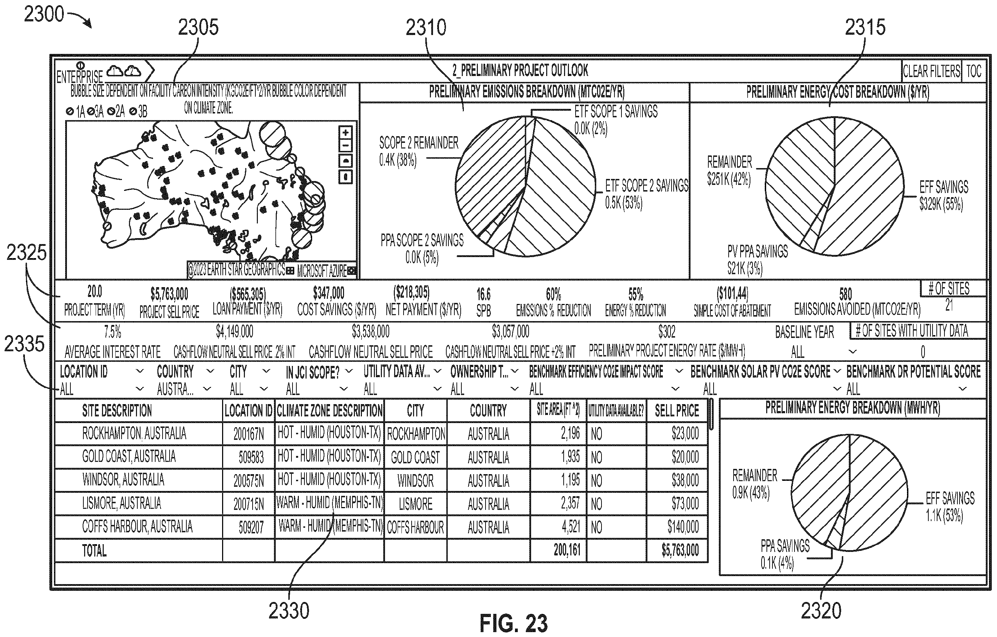

Referring now to FIG. 23, a user interface 2300 is displayed. The user interface 2300 can be shown, displayed, or otherwise provided by a device (e.g., the user device 318). In some instances, the user interface 2300 is generated as part of the user portal 802. The user interface 2300 can include various information pertaining to one or more potential sustainability projects. The user interface 2300 can include a site mapping window 2305 having a map with one or more site indicators arranged thereon indicating particular building locations of the enterprise. The site indicators can also similarly be visually coded based on the particular climate zone of their respective buildings. However, in some instances, the site indicators of the site mapping window 2305 are further sized depending on a carbon intensity of each corresponding building.

The user interface 2300 can further include a first pie chart 2310, a second pie chart 2315, and a third pie chart 2320. The first pie chart 2310 can depict a preliminary emissions breakdown of various potential sustainability projects. The second pie chart 2315 can depict a preliminary energy cost breakdown of various potential sustainability projects. The third pie chart 2320 can depict a preliminary energy usage breakdown of various sustainability projects.

The user interface 2300 can further include project information sections 2325. For example, the project information sections 2325 can include a variety of project information related to a potential set of sustainability projects. For example, the project information can include a project term (e.g., years), a project sell price, a potential loan payment, a cost savings per year, a net payment per year, a selling price breakdown (SPB), an emissions percent reduction, an energy percent reduction, a simple cost of abatement, a total expected emissions to be avoided, an average interest rate used to calculate the potential loan payment, various estimated cashflow neutral sell price, a preliminary project energy rate, and/or a variety of other project-related information, as desired for a given application.

The user interface 2300 can further include a site information table 2330 and a filter toolbar 2335. The site information table 2330 is substantially similar to the site information table 1115 discussed above, and may include a variety of project-related information. The filter toolbar 2335 is substantially similar to the filter toolbar 1120 discussed above.

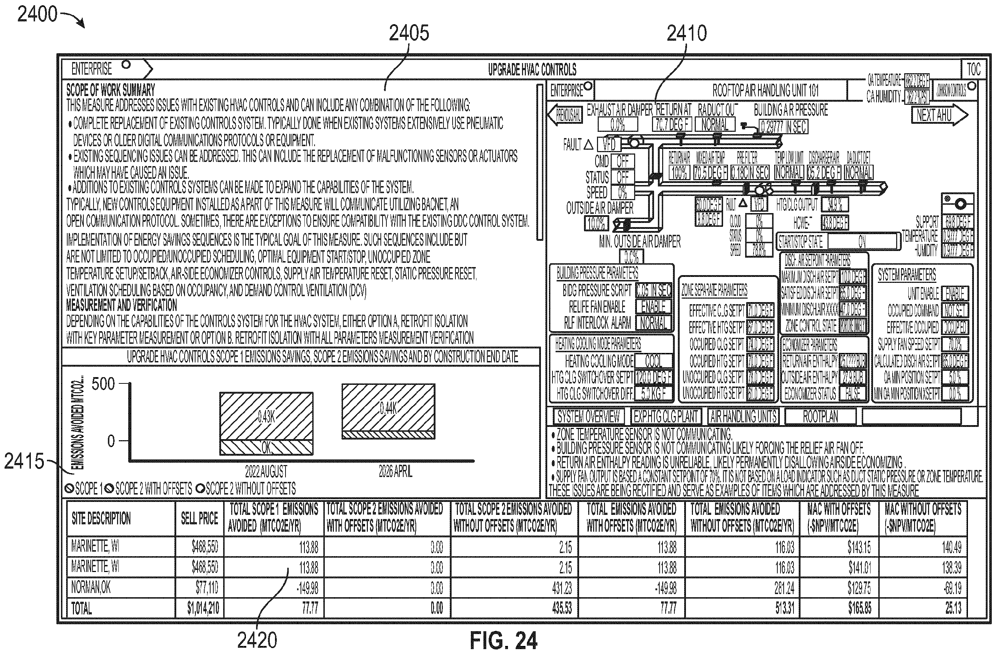

Referring now to FIG. 24, a user interface 2400 is displayed. The user interface 2400 can be shown, displayed, or otherwise provided by a device (e.g., the user device 318). In some instances, the user interface 2400 is generated as part of the user portal 802. The user interface 2400 can include specific information pertaining to a sustainability project to be performed (e.g., an HVAC upgrade). The user interface 2400 can include a project description section 2405 and a project visualization section 2410. The project description section 2405 can include a brief description of the project and the various measures to be taken. The project visualization section 2410 can provide a visual depiction of the system and/or components to be replaced, upgraded, or otherwise affected by the project.

The user interface 2400 can further include a project emissions savings chart 2415 and a project information table 2420. The project emissions savings chart 2415 can include bar charts depicting various emissions savings information relating to the potential sustainability project. The project information table 2420 can similarly include a variety of information about the potential sustainability project.

It should be appreciated that the user interface 2400 and the corresponding sustainability project depicted (e.g., the HVAC upgrade) are provided as an illustrative example and are not meant to be limiting. In other examples and other user interfaces, other types of sustainability projects and corresponding project visualization sections, project description sections, project emissions savings charts, project information tables, etc., may be generated to potential sustainability projects (e.g., FIMs) to be implemented within a given building or set of buildings, in accordance with the systems and methods described herein.

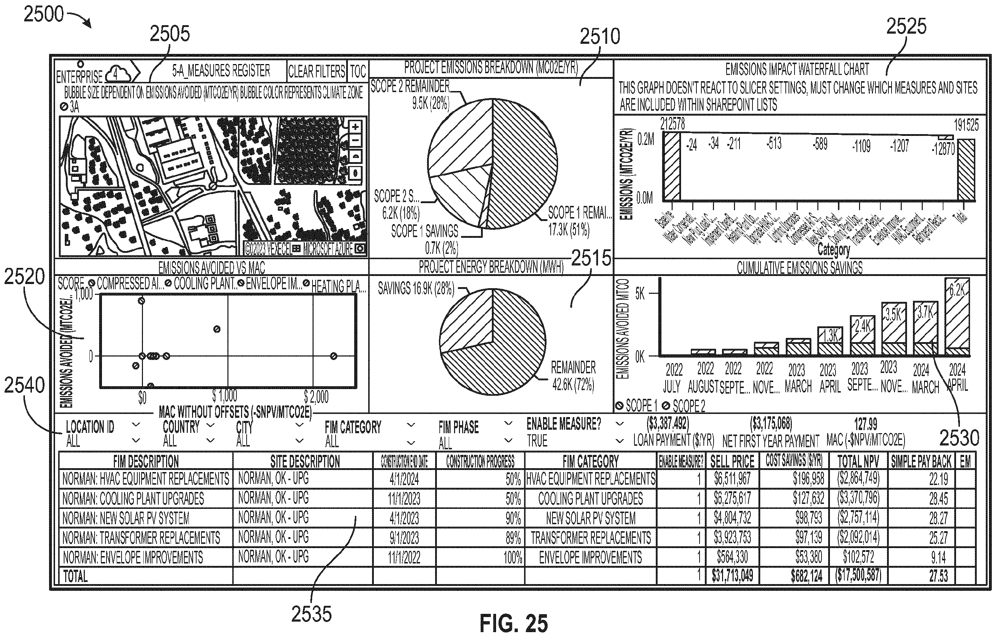

Referring now to FIG. 25, a user interface 2500 is displayed. The user interface 2500 can be shown, displayed, or otherwise provided by a device (e.g., the user device 318). In some instances, the user interface 2500 is generated as part of the user portal 802. The user interface 2500 can include various information pertaining to a progress of one or more sustainability project performed across an enterprise (e.g., at various buildings). The user interface 2500 can include a site mapping window 2505 having a map with one or more site indicators arranged thereon indicating particular building locations of the enterprise. The site indicators can also similarly be visually coded based on the particular climate zone of their respective buildings. However, in some instances, the site indicators of the site mapping window 2505 are further sized depending on an emissions avoided (e.g., accountable to a particular sustainability project implemented at the corresponding building).

The user interface 2500 can further include a first pie chart 2510 and a second pie chart 2515. The first pie chart 2510 can depict a project emissions savings breakdown. The second pie chart 2515 can depict a project energy savings breakdown. The user interface 2500 can further include a scatterplot 2520 including points for each a variety of project categories based on an emissions avoided due to the project implementation against the marginal abatement cost (MAC), with or without offsets, associated with the project. The user interface 2500 can further include an emissions impact waterfall chart 2525 and a cumulative emissions savings chart 2530. The emissions impact waterfall chart 2525 can show emissions impacts associated with a variety of project categories. The cumulative emissions savings chart 2530 can show the cumulative emissions savings from all projects implemented throughout a given enterprise, including the particular categories of projects separately visually coded (e.g., color-coded).

The user interface 2500 can further include a project information table 2535 and a filter toolbar 2540. The project information table 2535 includes a variety of project-related information, such as a project description (e.g., a FIM description), a site description, a predicted end date for the implementation of the project (e.g., the construction end date), an implementation progress (e.g., construction progress), a project category (e.g., FIM category), a sell price, a cost savings (e.g., per year), a total net present value (NPV), and/or any other relevant project-related information that may be collected and provided to users, as desired for a given application. In some instances, various project-related information is received by the system from various users (e.g., user devices) associated with the projects at each building on a continuous and/or periodic basis throughout the course of the implementation of the corresponding project, and that information is used to populate or update the various features of the user interface 2500. The filter toolbar 2540 is similar to the filter toolbar 1120 discussed above and includes a plurality of filters the user can utilize to filter the buildings and/or projects used to populate the information for each of the various features of the user interface 2500.

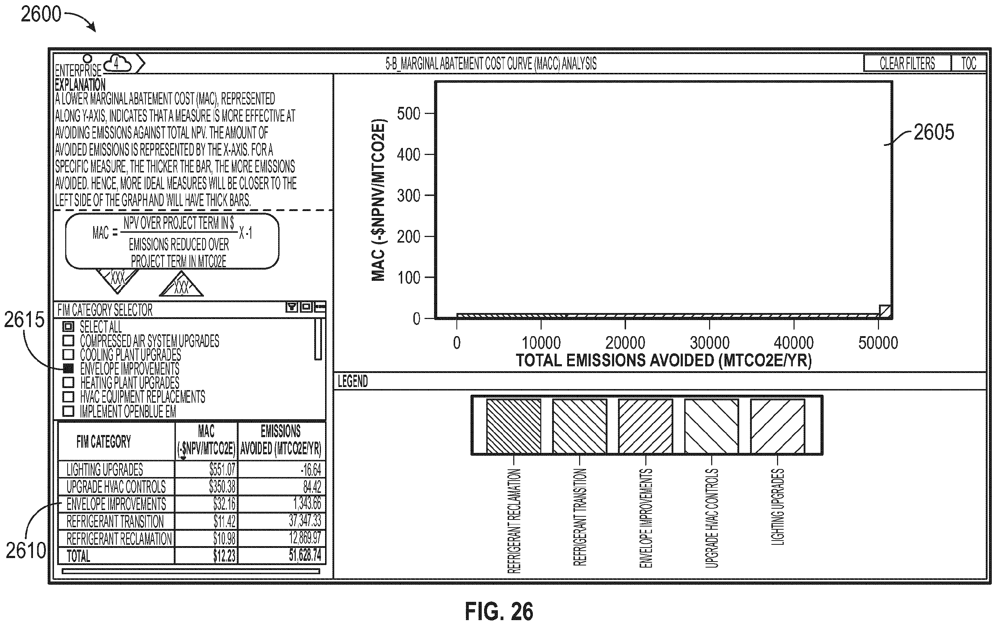

Referring now to FIG. 26, a user interface 2600 is displayed. The user interface 2600 can be shown, displayed, or otherwise provided by a device (e.g., the user device 318). In some instances, the user interface 2600 is generated as part of the user portal 802. The user interface 2600 can include a marginal abatement cost curve (MACC) analysis. The user interface 2600 can include a MACC chart 2605, a project information table 2610, and a category selection toolbar 2615. The MACC chart 2605 can depict the MAC for a variety of different project categories (e.g., refrigerant reclamation, refrigerant transition, envelope improvements, upgrade HVAC controls, lighting upgrades). In some instances, the MAC is calculated by taking the net present value of the project savings over the term of the project in dollars divided by the total emissions reduced over the term of the project and then multiplying this value by negative one to obtain a positive number. The project information table 2610 can include a variety of project MACC analysis information, such as the particular project category (e.g., FIM category), the MAC, emissions avoided by the project, etc. The category selection toolbar 2615 can include a variety of selectable check boxes that allow the user to select the project categories (e.g., compressed air system upgrades, cooling plant upgrades, envelop improvements, heating plant upgrades, HVAC equipment replacements) to be included in the MACC analysis.

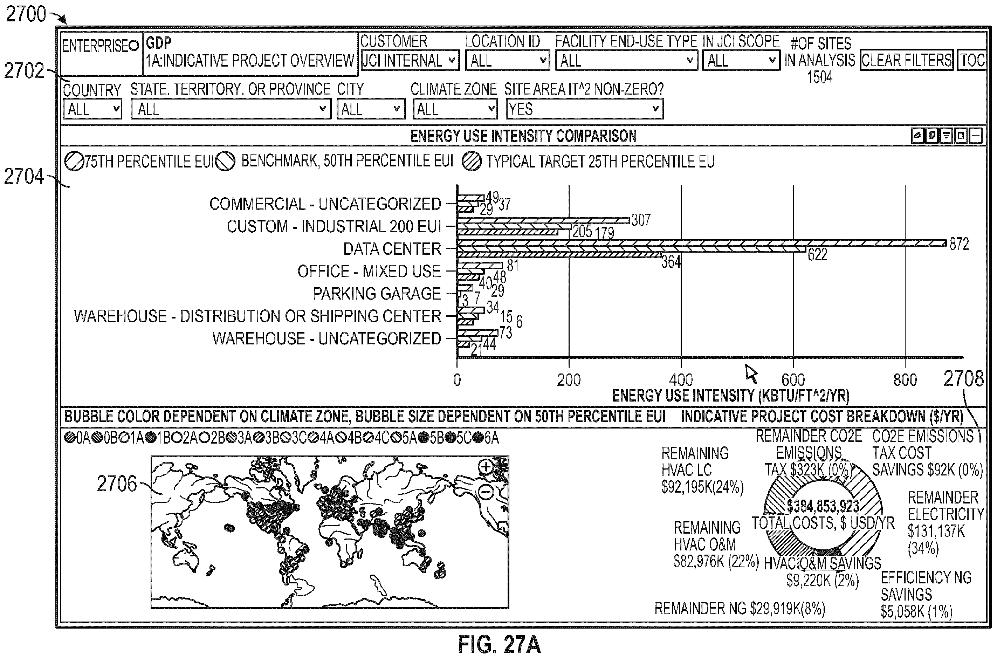

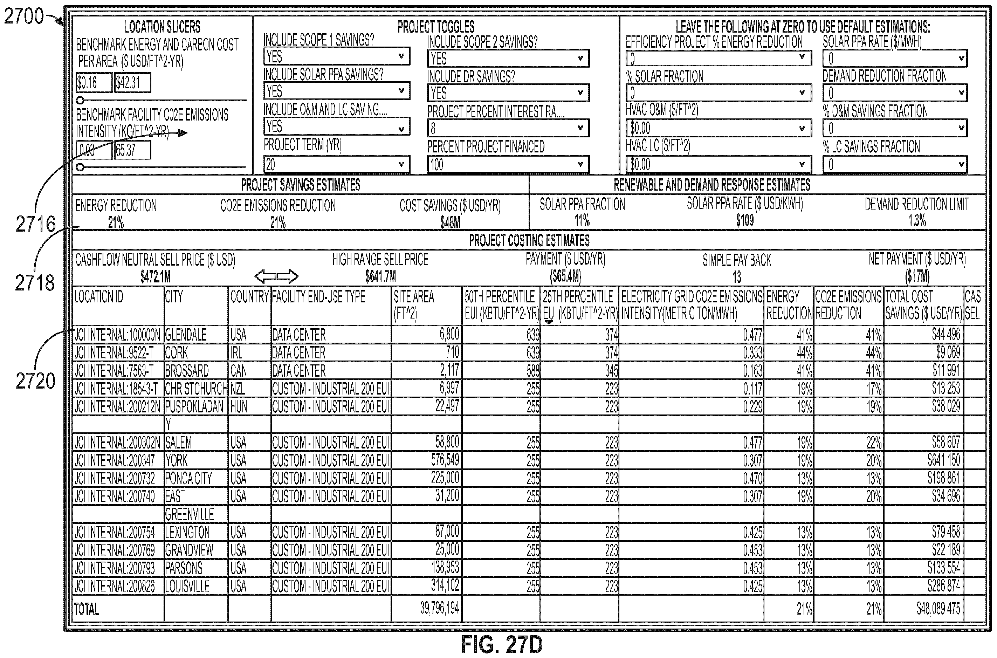

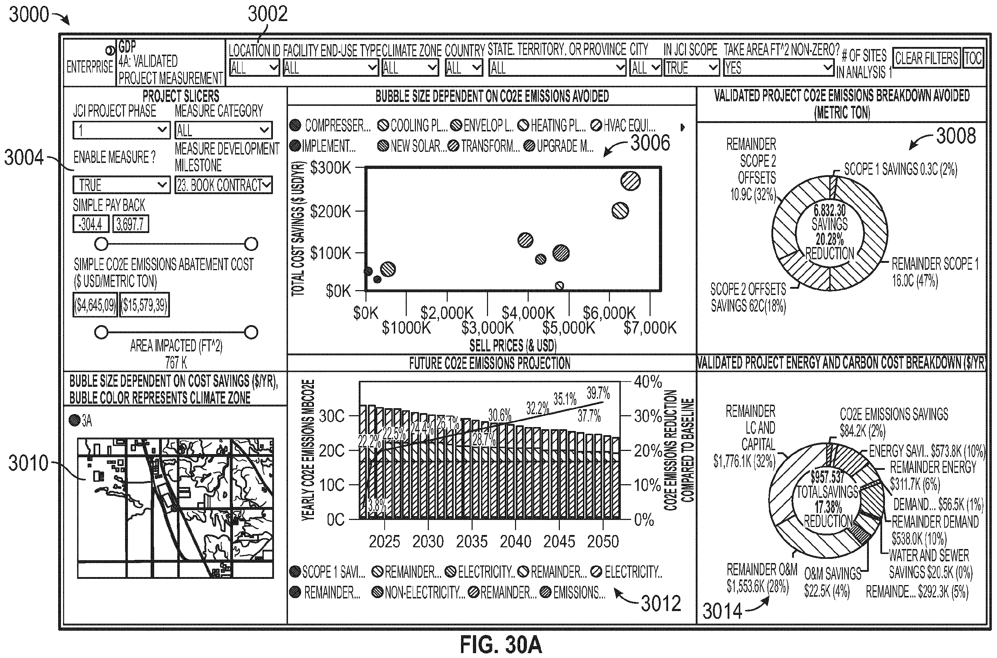

Referring now to FIGS. 27A-30B, a variety of project planning and monitoring user interfaces that may be utilized throughout the planning and implementation of a sustainability project for an enterprise are shown. For example, FIGS. 27A-27D show an indicative project overview user interface 2700, according to an example embodiment. The indicative project overview user interface 2700 may be shown, displayed, or otherwise provided by a device (e.g., the user device 318). In some instances, the indicative project overview user interface 2700 is generated as part of the user portal 802. In any case, the indicative project overview user interface 2700 is configured to allow a user to explore indicative sustainability project information (e.g., estimated costs, estimated energy and emissions reductions) for various buildings within an enterprise to identify potential building locations that would be suitable or optimal for implementation of various sustainability projects (e.g., the various FIMs described herein).

As used herein, the term "indicative" is used to signify that the information utilized to populate the user interface is basic or otherwise publicly available information (e.g., building location, building size, building usage type, climate information, local energy costs, etc.), as described herein. Accordingly, the indicative project overview user interface 2700 may be generated without obtaining or otherwise ingesting individual building utility information (e.g., actual energy consumption, actual emissions data) or other building-specific information (e.g., floor plans, equipment lists, production output, etc.) for each individual building across the enterprise.

In some instances, the indicative project overview user interface 2700 may include a filter toolbar 2702. The filter toolbar 2702 may be similar to the filter toolbars discussed above (e.g., the filter toolbar 1120, the filter toolbar 2540) and similarly includes a plurality of filters the user can utilize to filter the buildings within the enterprise (e.g., for specific customers, locations, facility types, climate zones, etc.) and/or project information (e.g., in project scope or out of project scope) used to populate the information for each of the various features of the indicative project overview user interface 2700.

The indicative project overview user interface 2700 may further include a bar chart 2704 showing an energy use intensity comparison for a plurality of building types (e.g., commercial, data center, office, parking garage) showing, for each building type, various benchmark EUIs (e.g., 25^{th} percentile, 50^{th} percentile, 75^{th} percentile). The indicative project overview user interface 2700 may further include a site mapping window 2706 having a map with one or more site indicators arranged thereon indicating particular building locations of the enterprise. In some instances, the site indicators can be visually coded (e.g., color-coded) to show each building location's corresponding climate zone. In some instances, the site indicators can be visually coded (e.g., sized) to show each building location's relative 50^{th} percentile EUI.

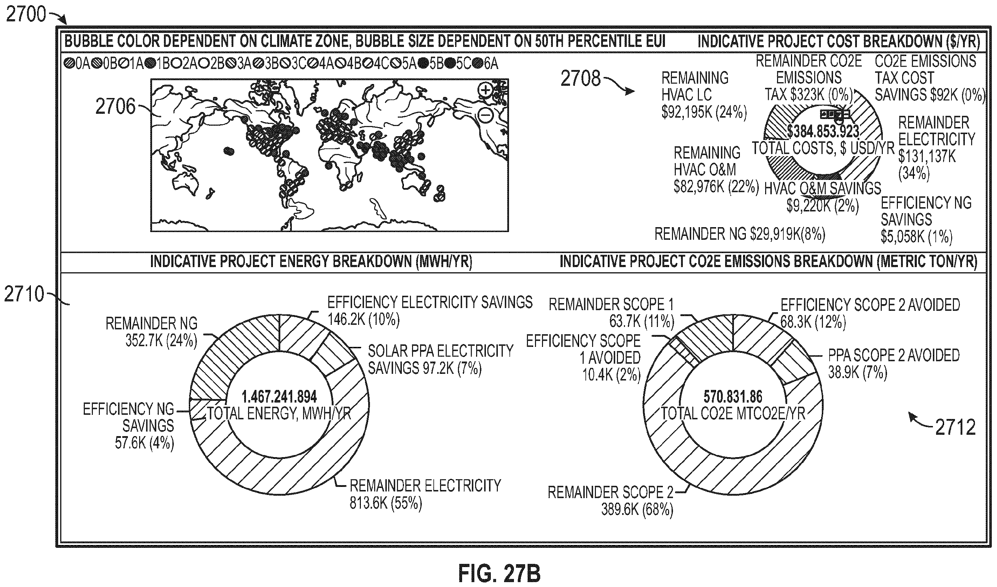

The indicative project overview user interface 2700 may further include a first pie chart 2708, a second pie chart 2710, and a third pie chart 2712 (shown in FIGS. 27A and 27B). In some instances, the first pie chart 2708 may depict an indicative project cost breakdown associated with a potential sustainability project (e.g., selected via a project selection toolbar 2716 discussed below). For example, the first pie chart 2708 may show potential savings (e.g., cost savings, emissions savings, etc.) and potential remainders (e.g., remaining costs, remaining emissions) associated with the potential sustainability project. The second pie chart 2710 may depict an indicative project energy breakdown for the potential sustainability project. For example, the second pie chart 2710 may show potential energy savings and potential energy remainders associated with the potential sustainability project. The third pie chart 2712 may depict an indicative project CO2e emissions breakdown. For example, the third pie chart 2712 may shown potential emissions reductions and potential emissions remainders associated with the potential sustainability project.

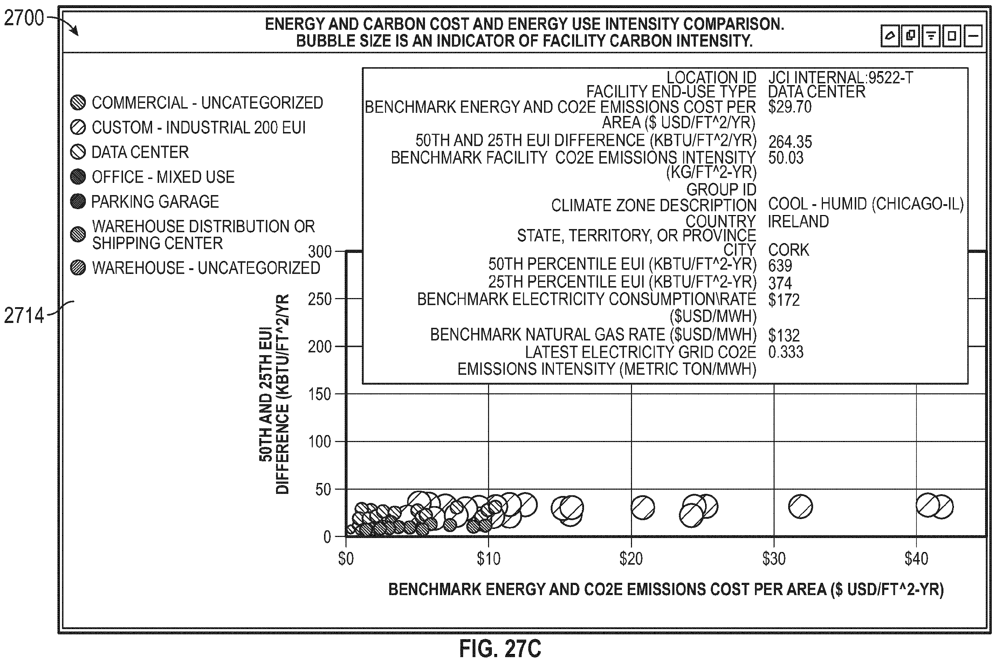

The indicative project overview user interface 2700 may further include a scatterplot 2714 (shown in FIG. 27C) including points showing an energy and carbon cost and energy use intensity comparison. As shown in FIG. 27C, the scatterplot 2714 may show, for each building, the benchmark energy and CO2e emissions cost per area against a difference between the 50^{th} and 25^{th} EUI percentiles for each building type. Accordingly, the scatterplot 2714 may provide a quick visual indication of which buildings have the highest energy costs (e.g., the scatter points to the far right) that also have large differences between the 50^{th} and 25^{th} EUI percentiles (e.g., indicating that sustainability projects will likely be more impactful). Similar to the pop-up windows discussed above, the user can hover over a particular scatter point to view a pop-up window, which may include various information for the corresponding building (e.g., facility end-use type, benchmark energy and CO2e emissions cost per area, 50^{th} and 25^{th} EUI difference, benchmark CO2e emissions intensity, climate zone information, etc.).

The indicative project overview user interface 2700 may further include a project selection toolbar 2716 configured to allow the user to select various project options (e.g., different savings/efficiency goals or other aspects) for a potential sustainability project to be utilized when populating the various features of the indicative project overview user interface 2700. For example, the project selection toolbar 2716 may include various location slicers allowing for the user to select a range of building characteristics (e.g., benchmark energy and carbon cost per area, benchmark facility CO2e emissions intensity) to qualify certain buildings within the enterprise for a given potential sustainability project (e.g., buildings within the selected range qualify and are included when populating the various features of the indicative project overview user interface 2700).

The project selection toolbar 2716 may further include a variety of project toggles that allow the user to select various project-specific items. For example, the project-specific items may include whether to include potential scope 1 (e.g., emissions generated directly at the building) savings, scope 2 (e.g., emissions generated at another location due to energy usage at the building) savings, demand response (DR) savings, solar power purchase agreement (PPA) savings, operating and maintenance savings, etc. The project-specific items may further include various financing options (e.g., project term, interest rate, percent financed, etc.). The project selection toolbar 2716 may further include various project detail entry fields configured to allow the user to override default estimations for various project-related details (e.g., percent energy reduction, solar PPA rate, percent solar fraction, DR fraction, etc.).

The indicative project overview user interface 2700 may further include a project estimate table 2718. The project estimate table 2718 may include a variety of project savings estimates, such as an energy reduction estimate, a CO2e emissions reduction estimate, a cost savings estimate, etc. The project estimate table 2718 may further include various renewable and demand response estimates, such as a solar PPA fraction estimate, a solar PPA rate estimate, a demand response limit estimate, etc. The project estimate table 2718 may further include one or more project costing estimates, such as a cashflow neutral sell price estimate, a high range sell price estimate, a payment estimate (e.g., based on the high range sell price and the various financing options selected), a simple pay back estimate, a net payment estimate (e.g., the payment estimate minus the estimated cost savings), etc. In some instances, the estimates may be provided as an overall estimate for the project, as an annual estimate for the project, or as any other suitable time period based estimate for the project.

In some instances, the various project estimates within the project estimate table 2718 are generated based on a subset of buildings within the enterprise that fall within the filters and categories selected via the filter toolbar 2702, the corresponding building characteristics (e.g., location, climate, building type, building size, etc.) associated with the subset of buildings, and the various project options selected via the project selection toolbar 2716. For example, the project estimates may be based on historical project data associated with similar sustainability projects performed at other buildings having one or more of similar climate conditions, similar building sizes, or similar building use types to the plurality of buildings.

The indicative project overview user interface 2700 may further include a project site information table 2720 including a variety of information regarding the various buildings associated with the potential sustainability project (e.g., based on the user's selections via the filter toolbar 2702 and/or the project selection toolbar 2716). In some embodiments, the project site information table 2720 may include similar information to the various information tables discussed above (e.g., the site information table 1115, the site information table 1425, the project information table 2535, etc.).

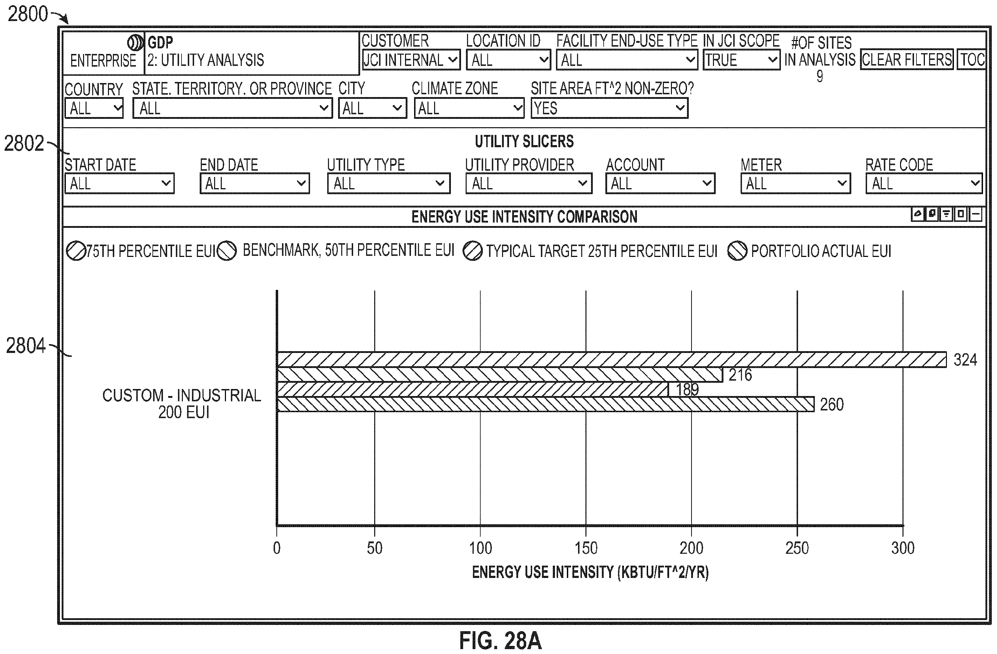

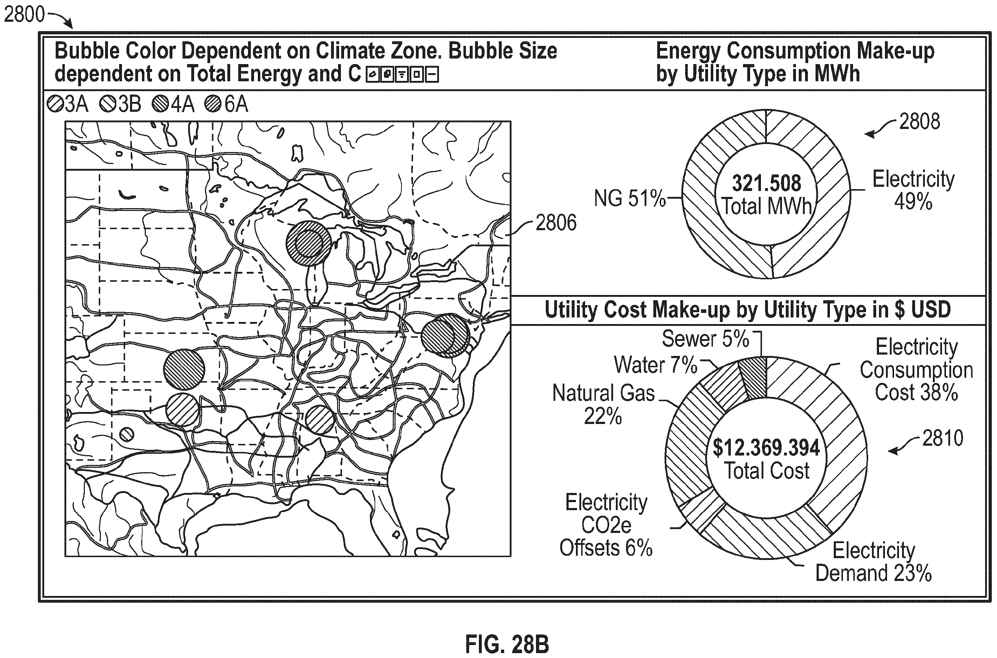

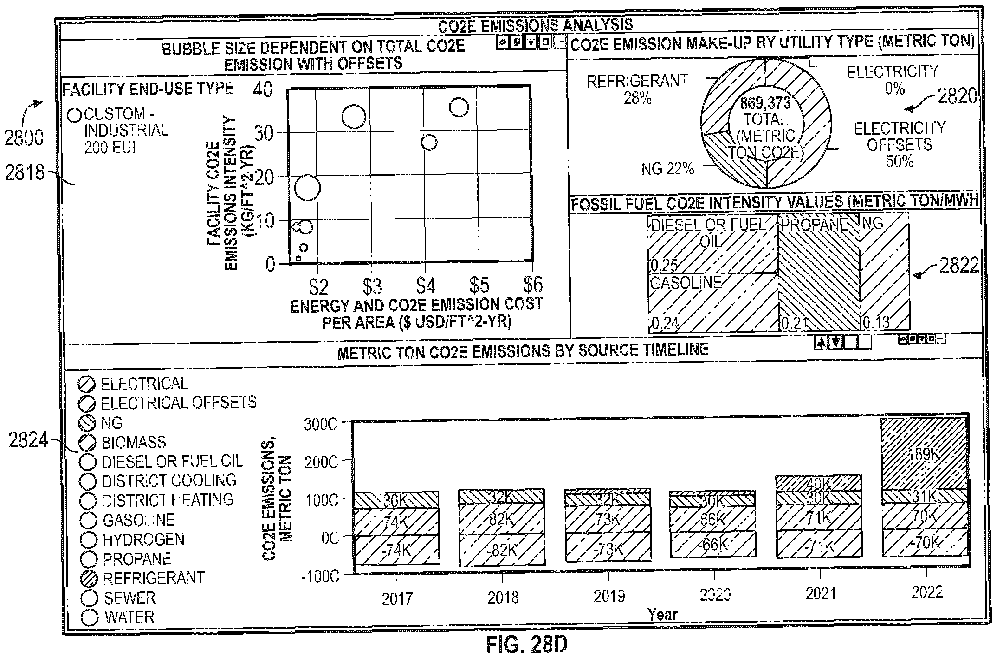

The project planning and monitoring user interfaces further include a utility analysis user interface 2800, shown in FIGS. 28A-28D, that is configured to allow a user to view actual utility information associated with various buildings identified using the indicative project overview user interface 2700. For example, in some instances, after identifying the subset of buildings for which the user may want to perform the potential sustainability project via the indicative project overview user interface 2700, the user may initiate and/or the system (e.g., the system 200 and/or the system 300) may be configured to pull, receive, or otherwise obtain utility information (e.g., via the utility interface 410 or other utility information sources discussed herein) for the subset of buildings and utilize the utility information (e.g., actual electricity usage, actual emissions data, actual water usage, actual natural gas usage, etc.) to populate the various features of the utility analysis user interface 2800. Accordingly, in some instances, the various features or widgets of the utility analysis user interface 2800 may be auto populated with the selected subset of buildings (e.g., "in scope" buildings).

In some instances, the utility analysis user interface 2800 similarly includes a filter toolbar 2802. The filter toolbar 2802 may be similar to the filter toolbar 2702 discussed above and may similarly include a plurality of filters the user can utilize to filter the buildings used to populate the information for each of the various features of the utility analysis user interface 2800. The utility analysis user interface 2800 may similarly include a bar chart 2804 showing an energy use intensity comparison for one or more building types. The bar chart 2804 may be similar to the bar chart 2704, but may further include an actual EUI bar for the selected subset of buildings of the enterprise.

The utility analysis user interface 2800 may similarly include a site mapping window 2806 that is similar to the site mapping window 2706 discussed above. The utility analysis user interface 2800 may further include a first pie chart 2808 and a second pie chart 2810. The first pie chart 2808 may depict an energy consumption make-up by utility type for the buildings (e.g., natural gas percentage, electricity percentage). The second pie chart 2810 may depict a utility cost make-up by utility type (e.g., a sewer cost, a water cost, a natural gas cost, an electricity CO2e offset, an electricity demand, an electricity consumption cost).

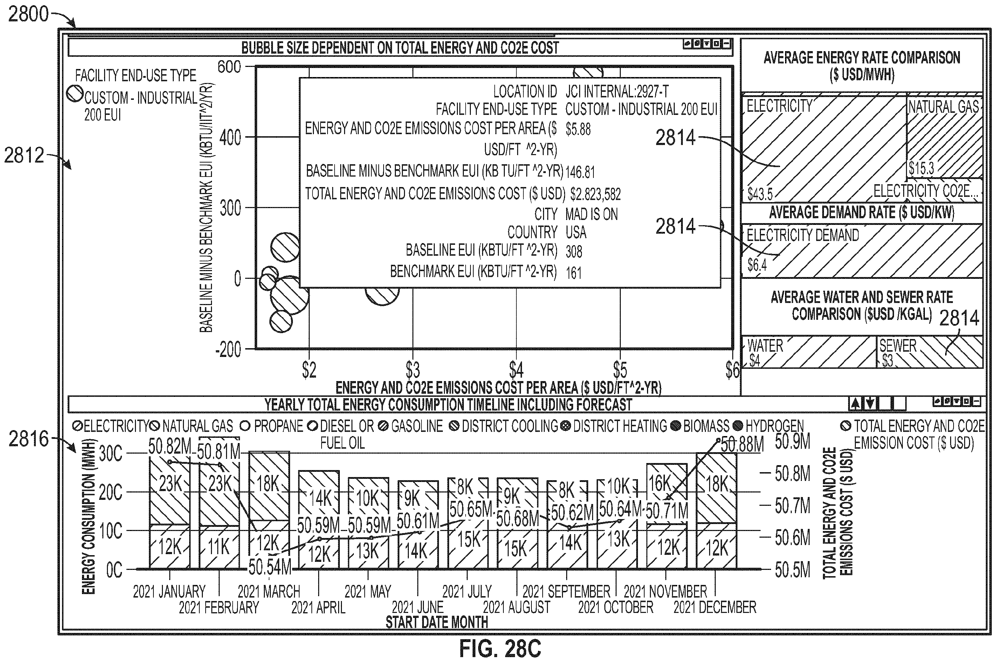

The utility analysis user interface 2800 may further include a scatterplot 2812 (shown in FIG. 28C) including points showing an energy and CO2e emissions cost per area and an EUI comparison for each building. As shown in FIG. 28C, the scatterplot 2812 may show, for each building, the energy and CO2e emissions cost per area against a difference between the benchmark (e.g., the 50^{th} percentile for similar buildings) and the baseline (e.g., the actual EUI for the building based on the utility data). Similar to the pop-up windows discussed above, the user can hover over a particular scatter point to view a pop-up window, which may include various information for the corresponding building (e.g., facility end-use type, energy and CO2e emissions cost per area, baseline and benchmark EUI difference, total energy and CO2e emissions cost, etc.).

The utility analysis user interface 2800 may further include a plurality of utility split graphics 2814, which may show an average energy rate comparison for different types of energy sources, average demand rate for different types of energy sources, and/or average water and sewer rate comparisons. The utility analysis user interface 2800 may further include a bar chart 2816 configured to show a month-by-month energy consumption breakdown over the course of a year, as well as an energy cost for each month. In some instances, the bar chart 2816 may include a selectable option configured to allow the user to change the time frame for the energy consumption breakdown and/or the corresponding cost (e.g., weekly, monthly, annually). Additionally, in some instances, the bar chart 2816 may allow a user to select a forecasted timeframe that is calculated based on historical average energy breakdowns and costs for the building based on the utility information.

The utility analysis user interface 2800 may further include a scatter plot 2818 depicting energy and CO2e emissions cost per area against facility CO2e emissions intensity for each building. The utility analysis user interface 2800 may further include a pie chart 2820 depicting a CO2e emissions make-up by utility type for the subset of buildings. The utility analysis user interface 2800 may further include a fuel split graphic 2822 depicting fossil fuel CO2e intensity values for a variety of fossil fuels used within the buildings (e.g., diesel or fuel oil, propane, natural gas, gasoline). The utility analysis user interface 2800 may further include a bar chart 2824 depicting metric tons of CO2e emissions by source over time (e.g., annually).

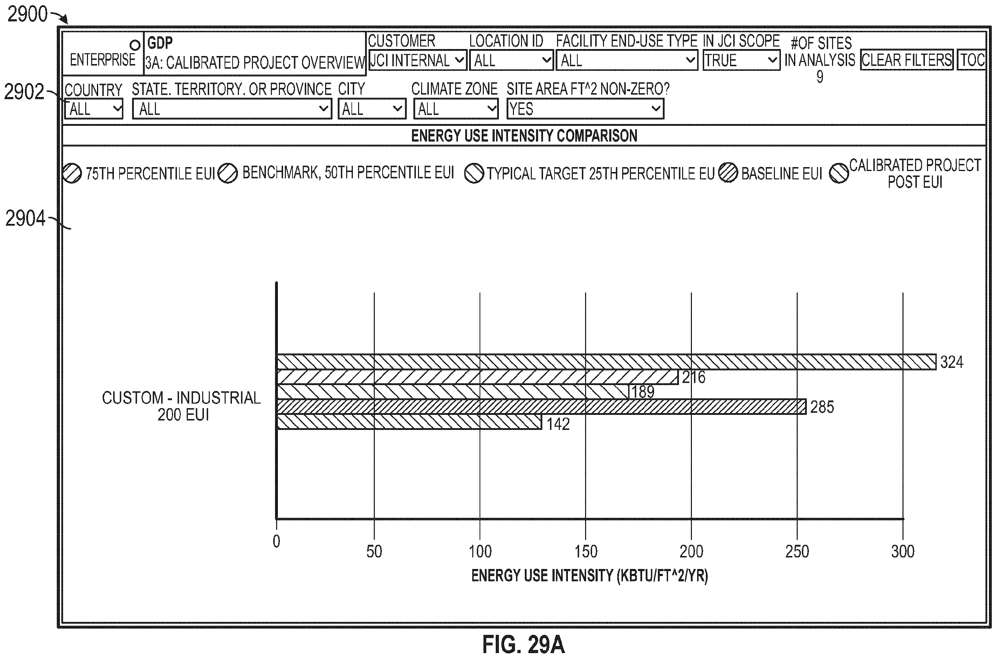

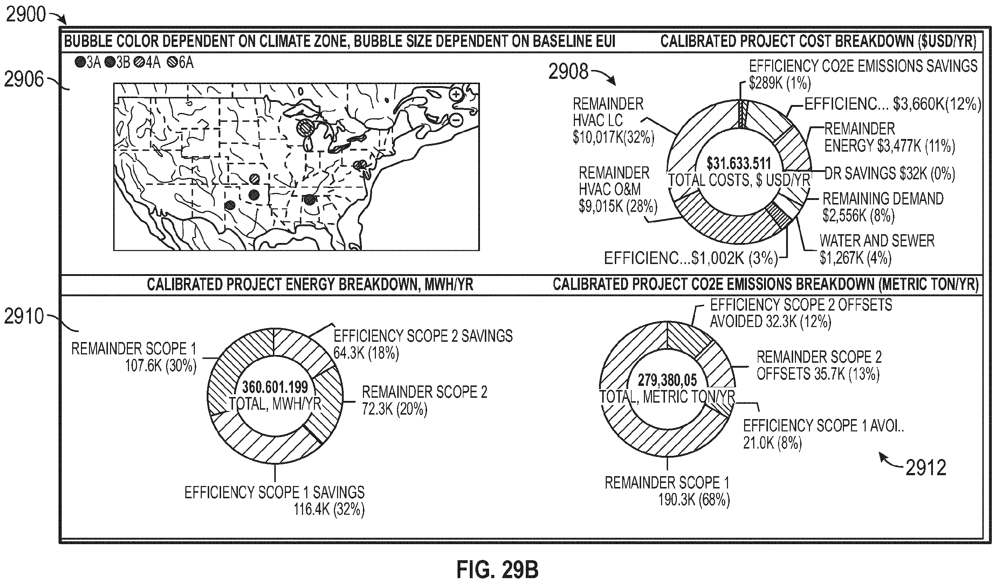

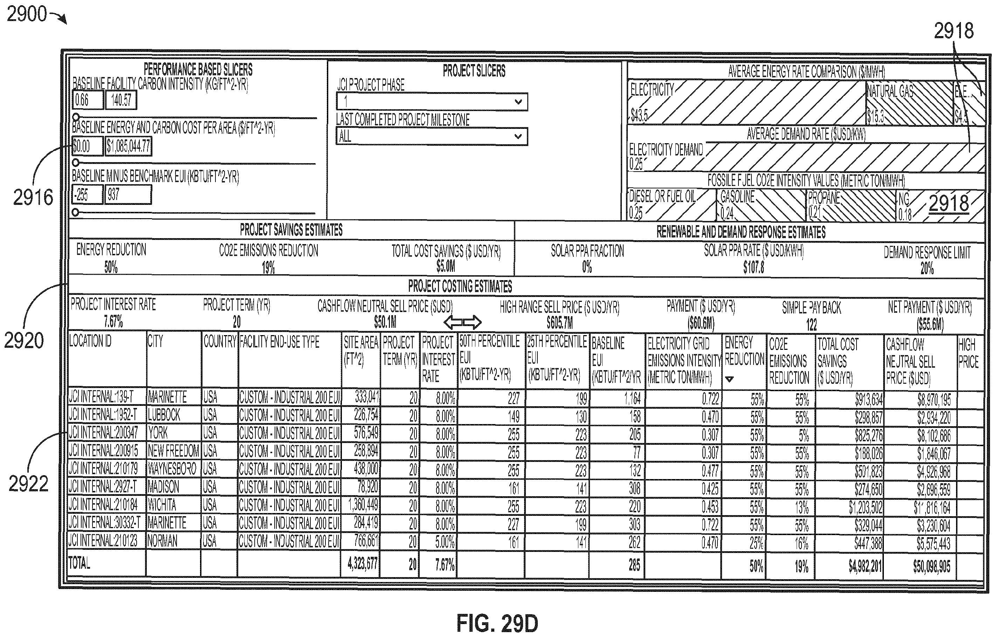

The project planning and monitoring user interfaces further include a calibrated project overview user interface 2900, shown in FIGS. 29A-29D, that is configured to allow a user to explore various calibrated sustainability project information that incorporates the utility information (e.g., via the utility interface 410 or other utility information sources discussed herein) discussed above, with respect to the utility analysis user interface 2800, to provide more accurate information pertaining to the potential sustainability project to be implemented.

As used herein, the term "calibrated" is used to signify that, in addition to the basic or otherwise publicly available information (e.g., building location, building size, building usage type, climate information, local energy costs, etc.) discussed above with respect to the indicative project overview user interface 2700, the information utilized to populate the user interface further includes actual utility information for the various buildings, as described herein. Accordingly, the calibrated project overview user interface 2900 may provide insights with improved accuracy, as compared with the indicative project overview user interface 2700. However, as will be discussed below, "calibrated" is not meant include individual building-by-building assessment information specific to the potential sustainability project (e.g., determining equipment already installed and/or to be fixed, replaced, or added within each building via the sustainability project).

In some instances, the calibrated project overview user interface 2900 may similarly include a filter toolbar 2902 that is similar to the filter toolbar 2802 and/or the filter toolbar 2702 discussed above. The calibrated project overview user interface 2900 may also similarly include a bar chart 2904 showing and energy use intensity comparison for one or more building types. The bar chart 2904 may be similar to the bar chart 2804, but may further include a calibrated post-project EUI bar showing an estimated EUI after performing the potential sustainability project. For example, the estimated EUI may be determined based on the actual utility information for the plurality of buildings and similar sustainability projects performed at other buildings having similar utility information, similar building sizes, and/or similar building use types.

The calibrated project overview user interface 2900 may similarly include a site mapping window 2906 that is similar to the site mapping window 2706 discussed above. Additionally, the calibrated project overview user interface 2900 may similarly include a first pie chart 2908, a second pie chart 2910, and a third pie chart 2912. The first pie chart 2908 may depict a calibrated project cost breakdown that is similar to the indicative project cost breakdown discussed above (e.g., with respect to the first pie chart 2708), but is updated using the ingested utility information for the buildings. The second pie chart 2910 may depict a calibrated project energy breakdown that is similar to the indicative project energy breakdown discussed above (e.g., with respect to the second pie chart 2710), but is updated using the ingested utility information for the buildings. The third pie chart 2912 may depict a calibrated project CO2e emissions breakdown that is similar to the indicative project CO2e emissions breakdown discussed above (e.g., with respect to the third pie chart 2712), but is updated using the ingested utility information for the buildings.

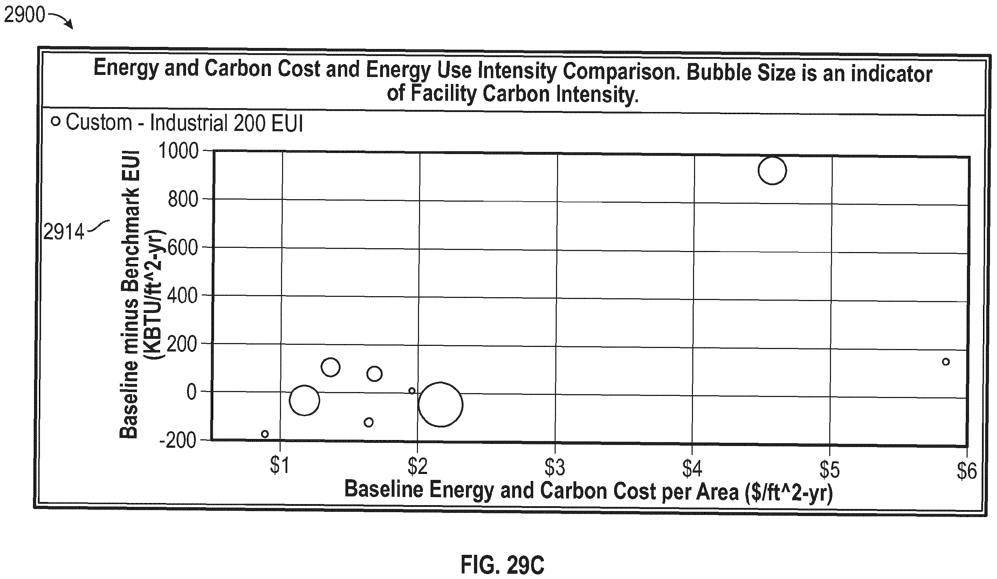

The calibrated project overview user interface 2900 may similarly include a scatterplot 2914 (shown in FIG. 29C) including points showing an energy and carbon cost and energy use intensity comparison. As shown in FIG. 29C, the scatterplot 2914 may show, for each building, a baseline energy and CO2e emissions cost per area (e.g., based on the utility data and the building size) against a difference between the baseline EUI (e.g., based on the utility information) and the benchmark EUI (e.g., 50^{th} percentile).

The calibrated project overview user interface 2900 may further include a project selection toolbar 2916 configured to allow the user to select or modify various project options for the potential sustainability project to be utilized when populating the various features of the calibrated project overview user interface 2900. For example, the project selection toolbar 2916 may include various performance based slicers allow the user to select different desired performance ranges (e.g., baseline facility carbon intensity, baseline energy and carbon cost per area, baseline minus benchmark EUI). The project selection toolbar 2916 may further include various project slicers allowing the user to select a project phase and/or last completed project milestone associated with a given sustainability project.

The calibrated project overview user interface 2900 may further include a plurality of utility split graphics 2918, which may show an average energy rate comparison for different types of energy sources, average demand rate for different types of energy sources, and/or a fossil fuel intensity value for the buildings (e.g., based on the utility information for the buildings).

The calibrated project overview user interface 2900 may further include a project estimate table 2920. The project estimate table 2920 may be similar to the project estimate table 2718, but may be updated based on the actual utility information for the various buildings. For example, the project estimate table 2920 may similarly include a variety of project savings estimates, such as an energy reduction estimate, a CO2e emissions reduction estimate, a cost savings estimate, etc. The project estimate table 2920 may further similarly include various renewable and demand response estimates, such as a solar PPA fraction estimate, a solar PPA rate estimate, a demand response limit estimate, etc. The project estimate table 2920 may further similarly include one or more project costing estimates, such as a project interest rate estimate, a project term estimate, cashflow neutral sell price estimate, a high range sell price estimate, a payment estimate (e.g., based on the high range sell price and the various financing estimates), a simple pay back estimate, a net payment estimate (e.g., the payment estimate minus the estimated cost savings), etc. In some instances, the estimates may be provided as an overall estimate for the project, as an annual estimate for the project, or as any other suitable time period based estimate for the project.

In some instances, the various project estimates within the project estimate table 2920 are generated based on a subset of buildings within the enterprise that fall within the filters and categories selected via the filter toolbar 2902, the corresponding utility information associated with the subset of buildings, and the various project options selected via the project selection toolbar 2916. For example, the project estimates may be based on historical project data associated with similar sustainability projects performed at other buildings having similar utility information, similar building sizes, and/or similar building use types to the subset of buildings.

The calibrated project overview user interface 2900 may further include a project site information table 2922 including a variety of information regarding the various buildings associated with the sustainability project (e.g., based on the user's selections via the filter toolbar 2902 and/or the project selection toolbar 2916). In some embodiments, the project site information table 2922 may include similar information to the project site information table 2720 updated using the utility information ingested for the various buildings.

Accordingly, the calibrated project overview user interface 2900 is configured to provide insights regarding the potential cost and/or energy usage and emissions savings of a potential sustainability project that are more accurate than those provided via the indicative project overview user interface 2700 discussed above by ingesting and incorporating the actual utility data for the buildings involved. However, by only ingesting and incorporating utility data for a subset of buildings across the enterprise identified using the indicative project overview user interface 2700 discussed above, computational burdens placed on the systems described herein are reduced compared to a system having an enterprise-wide user interface that ingests, stores, and generates insights based on utility data for every building across the enterprise.

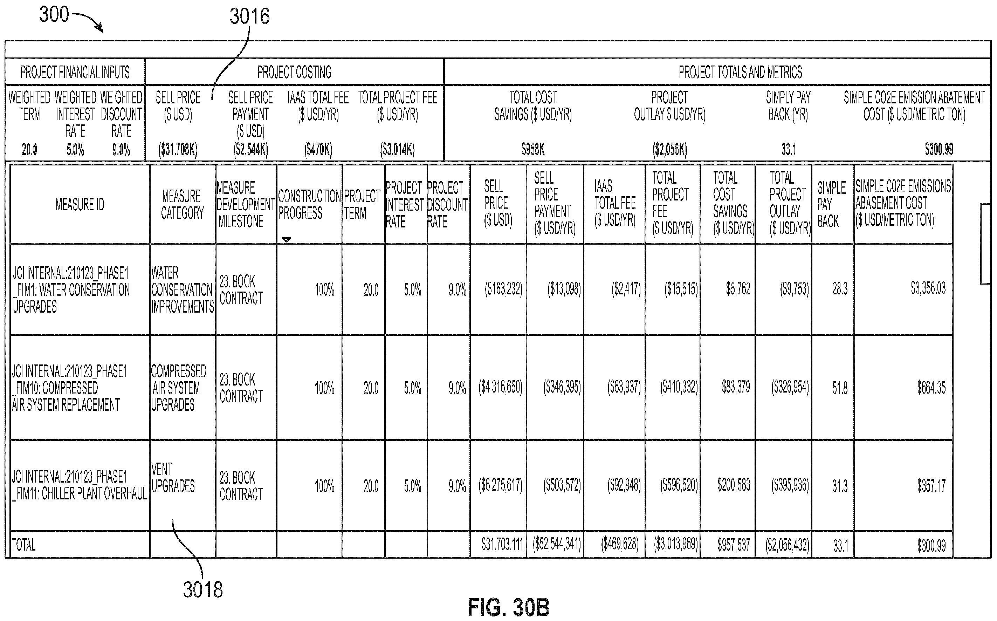

The project planning and monitoring user interfaces further include a validated project overview user interface 3000, shown in FIGS. 30A and 30B, that is configured to allow a user to explore and monitor various validated sustainability project information that further incorporates individual building-by-building project information specific to the sustainability project (e.g., determining equipment already installed and/or to be fixed, replaced, or added within each building via the sustainability project) being implemented.

As used herein, the term "validated" is used to signify that, in addition to the basic or otherwise publicly available information (e.g., building location, building size, building usage type, climate information, local energy costs, etc.) discussed above with respect to the indicative project overview user interface 2700 and the utility information discussed above with respect to the calibrated project overview user interface 2900, the information utilized to populate the user interface further includes a variety of individual building-by-building assessment and/or project information specific to the sustainability project to be implemented (e.g., determining equipment already installed and/or to be fixed, replaced, or added within each building via the sustainability project, actual contractor estimates associated with the sustainability project, actual financing details for project components, project progress, actual utility impact information, etc.).

In some instances, the validated project overview user interface 3000 may include a filter toolbar 3002. The filter toolbar 3002 may be similar to the filter toolbars discussed above (e.g., the filter toolbar 2702, the filter toolbar 2802, the filter toolbar 2902). The validated project overview user interface 3000 may also include a project selection toolbar 3004 configured to allow the user to select various project viewing selection options to view insights relating to various project measures associated with the sustainability project. For example, the project viewing selection options may include a project phase for the project measures, a measures category (e.g., energy reduction, emissions reduction) for the project measures, whether the project measures have been enabled (e.g., selected for implementation), a measure development milestone (e.g., a project status for each measure) for the project measures, a simple payback period for the project measures, a simple CO2e emissions abatement cost for the project measures, and/or an area affected by the project measures.

The validated project overview user interface 3000 may further include a scatter plot 3006 including scatter points representing different project measures taken, the sell prices (i.e., the cost of the individual project measures) for the projection measures, and the total cost savings resulting from (or expected to result from) the project measures. The validated project overview user interface 3000 may further include a pie chart 3008 showing the validated project CO2e emissions breakdown avoided. The validated project overview user interface 3000 may further include a site mapping window 3010 showing one or more site indicators. The site indicators can be visually coded (e.g., sized based on cost savings from project measures implemented, color-coded based on climate zone).

The validated project overview user interface 3000 may further include a bar chart 3012 showing projected future CO2e emissions information. For example, the bar chart 3012 may show yearly CO2e emissions over time, as well as CO2e emissions reduction compared to baseline (e.g., predicted or estimated CO2e reduction cause by project measures implemented). The validated project overview user interface 3000 may further include a pie chart 3014 showing a validated projected energy and carbon cost breakdown associated with the sustainability project.

The validated project overview user interface 3000 may further include a project overview information table 3016 including a variety of project information associated with the overall sustainability project. For example, the project overview information table 3016 may include one or more project financial inputs, such as a weighted term (e.g., a weighted average of the terms of each individual project measure), a weighted interested rate (e.g., a weighted average of the interested rates of each individual project measure), and/or a weighted discount rate (e.g., a weighted average of discount rates associated with each individual project measure) associated with the sustainability project. The project overview information table 3016 may further include one or more project costing indications, such as an actual sell price, an actual sell price payment, an infrastructure as a service (IaaS) total fee, and/or a total project fee associated with the sustainability project. The project overview information table 3016 may further include one or more project totals and metrics indications, such as a total cost savings, a project outlay, a simple payback period, and/or a simple CO2e emission abatement cost associated with the sustainability project.

The validated project overview user interface 3000 may further include a project measure information table 3018 including a variety of project information associated with individual project measures of the sustainability project. For example, in some instances, the table may include a measure identification, a measure category, a measure development milestone reached, a construction progress, a project term, a project interest rate, a project discount rate, a sell price, a sell price payment, an IaaS total fee, a total project fee, a total cost savings, a total project outlay, a simple payback period, and/or a simple CO2e emissions abatement cost associated with each individual project measure associated with the sustainability project.

Accordingly, the validated project overview user interface 3000 is configured to provide detailed insights regarding the cost, financing, energy, and/or emissions savings of a sustainability project that are more accurate than those provided via the indicative project overview user interface 2700 and/or the calibrated project overview user interface 2900 discussed above by ingesting and incorporating a variety of building-specific information relating to specific project measures to be performed (e.g., modifications to be made) within each building to complete the sustainability project. For example, the building-specific information may include actual cost estimates from contractors preparing to perform the project measures, details pertaining to the specific project measures (e.g., specific equipment to be repaired, replaced, and/or added within each building), and/or various other building-specific assessment information, and may be received from various building computing systems, technician user devices (e.g., associated with building and/or equipment assessing technicians), contractor user devices (e.g., associated with contractors providing quotes for project measures), etc.

In some instances, the various estimated and/or predicted information included within the validated project overview user interface 3000 may be determined based on the building-specific information, the utility information, and/or the basic information and utilizing one or more energy models associated with the individual project measures implemented. In some instances, the estimated and/or predicted information may additionally or alternatively be determined based on historical project data associated with similar sustainability project performed at other buildings having similar building-specific information, similar utility information, similar building sizes, and/or similar building use types to the buildings associated with the sustainability project.

It should be appreciated that the various user interfaces and elements thereof shown in the figures and described herein are provided as illustrative examples. In some embodiments, the user interfaces described herein may included additional or fewer features, widgets, toolbars, graphics, etc., as desired for a given application. Furthermore, the relative sizing of the features of the user interfaces shown in the figures may be larger or smaller. Additionally, in some instances, a user may select any of the various features of the user interfaces to be presented with a larger or otherwise isolated view of the feature (e.g., within a pop-up window or within a separate user interface.

### Configuration of Exemplary Embodiments

The construction and arrangement of the systems and methods as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.). For example, the position of elements can be reversed or otherwise varied and the nature or number of discrete elements or positions can be altered or varied. Accordingly, all such modifications are intended to be included within the scope of the present disclosure. The order or sequence of any process or method steps can be varied or re-sequenced according to alternative embodiments. Other substitutions, modifications, changes, and omissions can be made in the design, operating conditions and arrangement of the exemplary embodiments without departing from the scope of the present disclosure.

The present disclosure contemplates methods, systems and program products on any machine-readable media for accomplishing various operations. The embodiments of the present disclosure can be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general-purpose computer, special purpose computer, or special purpose processing machines to perform a certain function or group of functions.

Although the figures show a specific order of method steps, the order of the steps may differ from what is depicted. Also two or more steps can be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps.

## Claims

1. A building management system (BMS) comprising:
one or more memory devices storing instructions thereon that, when executed by one or more processors, cause the one or more processors to:
receive one or more characteristics for one or more buildings of a plurality of buildings, the one or more characteristics including a location for the one or more buildings;
retrieve climate information for the one or more buildings from one or more external computing systems based on the location of the one or more buildings;
identify energy information for the one or more buildings based on at least one of the location of the one or more buildings or the climate information of the one or more buildings;
generate a user interface including at least one graphic having a plurality of building indicators, each building indicator corresponding to a building of the plurality of buildings, the plurality of building indicators being visually coded based on at least one of the climate information or the energy information; and
cause a display device to display the user interface.

2. The BMS of claim 1, wherein the one or more characteristics include the location, a building size, and a building usage type for the one or more buildings,
wherein optionally the climate information comprises a climate zone code of the one or more buildings and the plurality of building indicators are visually coded based on the climate zone code of the one or more buildings,
wherein optionally the energy information for the one or more buildings includes at least one of average energy use information, average emissions information, or average energy cost information associated with other buildings having one or more of matching climate zone codes, similar building sizes, or matching building use types to the one or more buildings.

3. The BMS of claim 1 or 2, wherein the instructions further cause the one or more processors to:
receive a selection of at least one building of the plurality of buildings via the user interface;
receive a selection of one or more project options via the user interface, the one or more project options relating to a sustainability project associated with the at least one building; and
determine one or more project estimates for the sustainability project based on the at least one building, the one or more project options, and at least one of the climate information or the energy information for the plurality of buildings,
wherein the user interface further includes the one or more project estimates.

4. The BMS of claim 3, wherein the one or more project estimates are based on the at least one building and historical project data associated with similar sustainability projects performed at other buildings having one or more of matching climate zone codes, similar building sizes, or matching building use types to the at least one building.

5. The BMS of claim 3 or 4, wherein the user interface is a first user interface and the instructions further cause the one or more processors to:
ingest utility information for the at least one building;
determine one or more updated project estimates based on the utility information for the at least one building;
generate a second user interface including the one or more updated project estimates; and
cause the display device to display the second user interface
wherein optionally the one or more updated project estimates are based on the at least one building and historical project data associated with similar sustainability projects performed at other buildings having similar utility information and one or more of similar building sizes or matching building use types to the at least one building.

6. The BMS of claim 5, wherein the instructions further cause the one or more processors to:
ingest building-specific information for the at least one building, the building-specific information including a list of modifications to be made within the at least one building;
determine one or more validated project estimates based on the building-specific information for the at least one building;
generate a third user interface including the one or more validated project estimates; and
cause the display device to display the third user interface.
wherein optionally the one or more validated project estimates are based on the at least one building and historical project data associated with similar sustainability projects performed at other buildings having similar building-specific information and one or more of similar building sizes or matching building use types to the at least one building
and/or wherein optionally the one or more validated project estimates include at least one savings estimate determined using at least one energy model.

7. The BMS of any of claims 1 to 6, wherein the at least one graphic includes the plurality of building indicators are arranged on a map showing the location for each building.

8. A method comprising:
receiving, by one or more processors, a location for one or more buildings of a plurality of buildings;
retrieving, by the one or more processors, climate information for the one or more buildings from one or more external computing systems based on the location of the one or more buildings;
identifying, by the one or more processors, energy information for the one or more buildings based on at least one of the location of the one or more buildings or the climate information of the one or more buildings;
receiving, by the one or more processors, a selection of one or more project options relating to a sustainability project associated with the plurality of buildings;
determining, by the one or more processors, one or more project estimates for the sustainability project based on the one or more project options and at least one of the climate information or the energy information for the plurality of buildings;
generating, by the one or more processors, a user interface including the one or more project estimates; and
causing, by the one or more processors, a display device to display the user interface.

9. The method of claim 8, wherein the energy information for the one or more buildings includes at least one of average energy use information, average emissions information, or average energy cost information associated with other buildings having one or more of similar climate information, similar building sizes, or similar building use types to the one or more buildings.

10. The method of claim 8 or 9, wherein the one or more project estimates are based on historical project data associated with similar sustainability projects performed at other buildings having one or more of similar climate information, similar building sizes, or similar building use types to the plurality of buildings.

11. The method of any of claims 8 to 10, wherein the user interface is a first user interface and the method further comprises:
ingesting, by the one or more processors, utility information for the plurality of buildings;
determining, by the one or more processors, one or more updated project estimates based on the utility information for the plurality of buildings;
generating, by the one or more processors, a second user interface including the one or more updated project estimates; and
causing, by the one or more processors, the display device to display the second user interface the method optionally further comprising:
ingesting, by the one or more processors, building-specific information for the plurality of buildings, the building-specific information including a list of modifications to be made within the plurality of buildings;
determining, by the one or more processors, one or more validated project estimates based on the building-specific information for the plurality of buildings;
generating, by the one or more processors, a third user interface including the one or more validated project estimates; and
causing, by the one or more processors, the display device to display the third user interface.

12. The method of any of claims 8 to 11, wherein identifying the energy information includes one of:
generating, by the one or more processors, the energy information based on the at least one of the location of the one or more buildings or the climate information of the one or more buildings; or
retrieving, by the one or more processors, the energy information from the one or more external computing systems or one or more second external computing systems based on the at least one of the location of the one or more buildings or the climate information of the one or more buildings.

13. One or more memory devices having instructions thereon that, when executed by one or more processors, cause the one or more processors to:
receive a location for one or more buildings of a plurality of buildings;
retrieve climate information for the one or more buildings from one or more external computing systems based on the location of the one or more buildings;
identify energy information for the one or more buildings based on at least one of the location of the one or more buildings or the climate information of the one or more buildings;
determine one or more project estimates for a sustainability project associated with the plurality of buildings based on at least one of the climate information or the energy information for the plurality of buildings;
generate a user interface including the one or more project estimates; and
cause a display device to display the user interface.

14. The one or more memory devices of claim 13, wherein the user interface further includes at least one graphic having a plurality of building indicators arranged on a map, each building indicator corresponding to a building of the plurality of buildings, the plurality of building indicators being visually coded based on at least one of the climate information or the energy information.
